(19) Europäisches Patentamt / European Patent Office / Office européen des brevets

(11) **EP 4 326 477 B1**

(12) **EUROPÄISCHE PATENTSCHRIFT**

(45) Veröffentlichungstag und Bekanntmachung des Hinweises auf die Patenterteilung:
**12.11.2025 Patentblatt 2025/46**

(21) Anmeldenummer: **22723678.3**

(22) Anmeldetag: **21.04.2022**

(51) Internationale Patentklassifikation (IPC):
**B23K 26/00** *(2014.01)* **B23K 26/0622** *(2014.01)*
**B23K 26/06** *(2014.01)* **B23K 26/066** *(2014.01)*
**B23K 26/073** *(2006.01)* **B23K 26/53** *(2014.01)*
**B23K 103/00** *(2006.01)*

(52) Gemeinsame Patentklassifikation (CPC):
**B23K 26/0626; B23K 26/0624; B23K 26/064;
B23K 26/0665; B23K 26/53;** B23K 2103/54;
B23K 2103/56

(86) Internationale Anmeldenummer:
**PCT/EP2022/060534**

(87) Internationale Veröffentlichungsnummer:
**WO 2022/223683 (27.10.2022 Gazette 2022/43)**

(54) **VERFAHREN ZUM KONTROLLIEREN EINER MITTELS EINES LINIENFOKUS EINES LASERSTRAHLS INNERHALB EINES SUBSTRATS EINGEBRACHTEN ENERGIEVERTEILUNG**

METHOD FOR CONTROLLING AN ENERGY DISTRIBUTION INTRODUCED WITHIN A SUBSTRATE BY MEANS OF A LINE FOCUS OF A LASER BEAM

PROCÉDÉ DE VÉRIFICATION D'UNE DISTRIBUTION D'ÉNERGIE APPLIQUÉE AU MOYEN D'UN FOYER LINÉAIRE D'UN FAISCEAU LASER À L'INTÉRIEUR D'UN SUBSTRAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2021 EP 21170243**
**03.09.2021 EP 21194904**

(43) Veröffentlichungstag der Anmeldung:
**28.02.2024 Patentblatt 2024/09**

(73) Patentinhaber: **SCHOTT AG**
**55122 Mainz (DE)**

(72) Erfinder:
• **ORTNER, Andreas**
**55435 Gau-Algesheim (DE)**
• **SOHR, David**
**55128 Mainz (DE)**
• **KOGLBAUER, Andreas**
**65468 Trebur (DE)**
• **THOMAS, Jens Ulrich**
**55128 Mainz (DE)**
• **WAGNER, Fabian**
**55118 Mainz (DE)**
• **SOHR, Oliver**
**55116 Mainz (DE)**

(74) Vertreter: **Schott Corporate IP**
**Hattenbergstraße 10**
**55122 Mainz (DE)**

(56) Entgegenhaltungen:
US-A1- 2015 165 563    US-A1- 2020 254 567
US-A1- 2020 361 037    US-B1- 10 010 971
US-B2- 10 661 384    US-B2- 10 882 143

**Beschreibung**

Die vorliegende Erfindung betrifft ein Verfahren zum Kontrollieren einer mittels zumindest eines Linienfokus zumindest eines Laserstrahls innerhalb eines Substrats eingebrachten Energieverteilung und ein Substrat.

Stand der Technik

Um ein Substrat entlang einer Trennfläche zu trennen, sind aus dem Stand der Technik unter anderem laserbasierte Verfahren bekannt. Dabei lassen sich gekrümmte Seitenflächen bei den getrennten Substratteilen ausbilden, indem entlang der geplanten Trennfläche mit einem gekrümmten Linienfokus eines Lasers Modifikationen in das Substrat eingebracht werden oder Material von dort entfernt wird. Anschließend erfolgt die Trennung entlang der eingebrachten Schädigungen.

Allerdings weisen diese Trennflächen den Nachteil auf, dass sie nicht symmetrisch ausgebildet sind.

Die US 10,010,971 B1 (offenbarend den Oberbegriff des Anspruchs 1) betrifft Systeme und Verfahren für die Laserbearbeitung von Materialien.

Die US 10,882,143 B2 B2 betrifft diffraktive optische Elemente, die in optischen Systemen zur Strahlformung eines Laserstrahls und insbesondere zur Strahlformung eines Laserstrahls zur Bearbeitung von Materialien, die für den Laserstrahl im Wesentlichen transparent sind, eingesetzt werden. Ferner betrifft sie ein System und ein Verfahren zur Lasermaterialbearbeitung.

Die US 10,661,384 B2 betrifft ein optisches System zur Strahlformung eines Laserstrahls und insbesondere zur Strahlformung eines Laserstrahls zur Bearbeitung von Materialien, die für den Laserstrahl im Wesentlichen transparent sind. Ferner betrifft sie ein Verfahren zur Strahlformung.

Die US 2020/254567 A1 betrifft Vorrichtungen und Verfahren zur Laserbearbeitung von Werkstücken und insbesondere auf die selektive Laserbearbeitung von Werkstückstapeln mit mehreren Werkstücken.

Die US 2020/361037 A1 betrifft Vorrichtungen und Verfahren zur Laserbearbeitung von transparenten Werkstücken und insbesondere auf Laserstrahlen mit Laserstrahlbrennlinien, die quasi nicht-beugend sind und einen quasi nicht-beugenden Charakter beibehalten, wenn sie unter einem nicht-normalen Einfallswinkel auf ein transparentes Werkstück gerichtet werden. Es ist daher Aufgabe der vorliegenden Erfindung, Mittel anzugeben, die es ermöglichen, eine gekrümmte Trennfläche eines Substrats mit hoher Symmetrie zuverlässig auszubilden. Außerdem ist es Aufgabe der vorliegenden Erfindung, ein Substrat mit symmetrischer Seitenfläche anzugeben.

Beschreibung der Erfindung

Entsprechend einem ersten Aspekt der Erfindung ist ein Verfahren zum Kontrollieren einer mittels zumindest eines Linienfokus zumindest eines Laserstrahls innerhalb eines Substrats eingebrachten Energieverteilung im Anspruch 1 definiert, wobei das Verfahren aufweist:
Ausbilden des Linienfokus zumindest bereichsweise innerhalb des Substrats und Kontrollieren der Energieverteilung innerhalb des Substrats zumindest teilweise durch Beeinflussen des Laserstrahls mittels wenigstens zumindest einer Phasenmaske vorgeschlagen wird und wobei das Beeinflussen des Laserstrahls zeitabhängig durchgeführt wird und dadurch die Gestalt und/oder die Position der Energieverteilung zeitabhängig verändert wird.

Der Erfindung liegt damit die überraschende Erkenntnis zugrunde, dass durch die Deposition der Laserpulsenergie um den Scheitelpunkt eines gekrümmten Linienfokus herum eine gekrümmte, Modifizierung des Substratmaterials entlang des Dickenbereichs des Substrats zuverlässig erreicht werden kann. Insbesondere kann mit dem erfindungsgemäßen Verfahren eine um den Scheitelpunkt herum symmetrisch ausgebildete Modifizierung im Substratmaterial erreicht werden.

Es wurde insoweit vor allem erkannt, dass die Verteilung der im Substratmaterial deponierten Laserenergie, mithin die Energieverteilung innerhalb des Materials, mit Hilfe einer Phasenmaske besonders zuverlässig und auf dennoch einfache Weise kontrolliert werden kann. Indem der Laserstrahl durch die Phasenmaske geeignet beeinflusst wird, wurde genauer gesprochen überraschend festgestellt, dass der Effekt, dass sich dadurch im Vakuum oder in Luft die Intensitätsverteilung des Linienfokus sozusagen entlang der Trajektorie des Laserfokus verschieben lässt, geeignet ist, um die Verteilung der im Material deponierten Energie zu kontrollieren und damit die Modifizierung des Materials zu verbessern. So kann der Ort, insbesondere der Schwerpunkt, der Materialschädigung entlang der Fokus-Trajektorie bestimmt und die Materialschädigung an einem gewünschten Ort entlang des Linienfokus platziert werden.

Herkömmlicherweise wird die Laserpulsenergie entlang der Fokus-Trajektorie verschoben zu deren Scheitelpunkt deponiert. Um dennoch eine ausreichende Modifizierung entlang des gesamten Dickenbereichs eines Substrats zu erreichen, musste daher bisher der Fokus des Laserstrahls (beispielsweise ein Airy-Strahl) und damit auch der Scheitelpunkt des, insbesondere gekrümmten, Linienfokus in Richtung eines der beiden Deckflächen des zu trennenden Substrats verschoben werden, um die Energiedeposition vorteilhaft mittig in dem Dickenbereich des Substrats anzuordnen.

Mit anderen Worten: Nachdem also bisher mehr Energie oberhalb des Scheitelpunktes, also etwa in Richtung der oberen, insbesondere der der Laserquelle zugewandten, Deckfläche des Substrats deponiert wurde, musste der Scheitelpunkt des Linienfokus näher an die untere Deckfläche gelegt werden, um die Energiedeposition vorteilhaft mittig innerhalb des Tiefenbereichs des Substrats zu legen. Anderenfalls wurde der untere Bereich unzureichend oder zumindest geringer modifiziert.

Dementsprechend weisen die getrennten Substratteile herkömmlicherweise eine Seitenfläche auf, deren Verlauf nicht symmetrisch ist, sondern bei denen der Scheitelpunkt zu einer der beiden Deckflächen hin verschoben ist.

Eine Modifizierung des Substratmaterials kann beispielsweise in einer Ausführungsform durch die Beeinflussung des Substratmaterials direkt oder indirekt durch zumindest teilweise die im Substratmaterial, insbesondere durch den Linienfokus, eingebrachte Energie erfolgen. Dabei wird genauer genommen das elektromagnetische Feld des Lasers dazu führen, dass ein Anteil der Laserpulsenergie in das Substratmaterial eingebracht und dort in einer von Strahlgeometrie, Laser- und Substratmaterialparametern abhängigen Verteilung deponiert wird.

Die Erfindung ermöglicht es daher allgemein, die durch den Linienfokus erzeugte Energieverteilung im Material zu kontrollieren, indem durch das Beeinflussen des Laserstrahls mit einer Phasenmaske die Energieverteilung örtlich verschoben wird.

In einer Ausführungsform weist das Kontrollieren der Energieverteilung das Kontrollieren der räumlichen Ausdehnung und/oder des Schwerpunkts der Energieverteilung auf.

Das Verfahren eignet sich damit besonders vorteilhaft im Zusammenhang mit dem Strukturieren von Oberflächen. Denn das Verfahren ermöglicht es, die Energieverteilung entlang des Linienfokus an eine gewünschte Position innerhalb des Substrats zu platzieren.

So kann mittels der gekrümmten Modifizierung (einschließlich eines gekrümmten Bereichs, von dem Material entfernt oder verdrängt wurde), die in dem Substratmaterial durch einen gekrümmten Linienfokus erzeugt wurde, auch die Krümmung der geplanten Trennfläche beeinflusst oder bestimmt werden und mithin die Krümmung der Seitenfläche der Substratteile nach dem Trennen. Durch geeignete Beeinflussung des Laserstrahls während der Modifizierung des Materials lässt sich damit ein symmetrischer Krümmungsverlauf der Seitenfläche der Substratteile erreichen.

Das vorgeschlagene Verfahren weist daher vorzugsweise ferner das Einbringen zumindest einer Modifikation im Material eines Substratbereichs entlang des ausgebildeten und in Bezug auf die Energieverteilung kontrollierten Linienfokus und/oder das Trennen des Substrats entlang einer durch eine Vielzahl solcher Modifikationen vorgegebenen Trennfläche auf. Eine Modifikation kann beispielsweise eine Änderung der Dichte, des Brechungsindex, der Spannungswerte, der mechanischen Integrität und/oder der, insbesondere sauren oder alkalischen, Ätzrate des Substratmaterials aufweisen. Eine Modifikation kann beispielsweise auch das Entfernen von Substratmaterial vom Substrat, das Verdrängen von Substratmaterial, insbesondere das Hineinverdichten von Substratmaterial in das umgebene Substrat, und/oder das Erzeugen von Mikrorissen aufweisen.

Indem die Orientierung der Krümmung des Linienfokus derart gewählt wird, dass der Verlauf der Krümmung, insbesondere die Beschleunigungsrichtung der Krümmung, nicht parallel zur und/oder senkrecht zur Haupterstreckungsrichtung der geplanten Trennfläche verläuft, kann durch die Krümmung des Linienfokus die Krümmung der Trennfläche und damit die der Seitenflächen der Substratteile beeinflusst oder bestimmt werden.

Daher ist es in einer Ausführungsform bevorzugt, dass die Krümmung nicht parallel zur geplanten Trennlinie verläuft, sondern beispielsweise senkrecht dazu.

In einer Ausführungsform wird vorzugsweise durch die Ausrichtung des Linienfokus, insbesondere die Orientierung der Krümmung, innerhalb des Substrats, die Krümmung der Seitenfläche eines geteilten Substratteils mitbestimmt, insbesondere die Krümmung entlang einer Richtung senkrecht zur Haupterstreckungsrichtung der Seitenfläche.

Damit ermöglicht es die Erfindung erstmalig, einen symmetrischen Verlauf einer gekrümmten Trennfläche unmittelbar nach dem Trennprozess unter Vermittlung der modifizierten Substratbereiche, insbesondere ohne Nachbearbeitungsschritte wie Polieren zum Zwecke der Kantenformung, zu erreichen, und zwar vor allem auch bei sehr dicken Substraten, also etwa Substraten mit einer Dicke von mehr als 500 μm. Dies kann durch Positionieren der Energieverteilung um den Scheitelpunkt der Fokus-Trajektorie herum erreicht werden.

Denn die beobachtete Deposition der Laserpulsenergie an einem vom Scheitelpunkt verschobenen Position entlang der Fokus-Trajektorie kann durch die Beeinflussung mit der Phasenmaske kompensiert werden. Dies bewirkt, dass eine symmetrische Ausprägung der Materialmodifikation erreicht wird. Außerdem kann damit auch besonders zuverlässig eine gleichmäßige und vollständig durch das Material laufende Materialmodifikation erreicht werden.

Die Energieverteilung kann also mittels des Linienfokus in das Substratmaterial eingebracht werden. Mit anderen Worten ausgedrückt, kann mittels des Linienfokus eine Energie in dem Substrat räumlich verteilt deponiert und diese verteilte Energie wird erfindungsgemäß kontrolliert werden.

Damit ist es möglich, eine symmetrische Ausprägung der erzeugten Trennfläche zu erreichen. Dies gilt für dünne Substratdicken, beispielsweise ab 10 μm Dicke und/oder bis 500 μm Dicke. Und es gilt gleichermaßen auch sogar für Substratdicken von 500 μm oder größer, zum Beispiel bei einer Substratdicke von 525 μm. Beispielsweise kann das

Substrat eine Dicke von 700 μm oder mehr, von 1 mm oder mehr, von 3 mm oder mehr, von 5 mm oder mehr oder sogar von 7 mm oder mehr aufweisen.

Durch die erfindungsgemäße Lösung wird es folglich unter anderem ermöglicht, die Lage der Energieverteilung, insbesondere relative zum Scheitelpunkt der Fokustrajektorie und damit die Position und Gestalt der im Substratmaterial erzeugten Modifikation flexibel einzustellen.

In einer Ausführungsform wird die Dicke des Substratmaterials zwischen den beiden Hauptseiten des Substrats gemessen.

Vorzugsweise ist das Substrat transparent, insbesondere für die Wellenlänge des Laserstrahls, vorzugsweise im sichtbaren Wellenlängenbereich, im IR-Wellenlängenbereich und/oder im UV-Wellenlängenbereich.

Vorzugsweise ist das Substrat aus einem Glasmaterial oder weist dieses auf. Alternativ oder ergänzend kann das Substrat auch Glaskeramik, Silizium, Saphir und/oder Quarzglas aufweisen oder daraus bestehen.

Der Linienfokus ist vorzugsweise ein gekrümmter Linienfokus. Der Linienfokus ist alternativ oder ergänzend ein Fokus eines Airy-Beams. Vorzugsweise ist der Linienfokus alternativ oder ergänzend ein Fokus eines Laserstrahls eines gepulsten Lasers, insbesondere eines ultrakurz gepulsten Lasers mit Pulsweiten von 10 ps oder weniger, vorzugsweise von 5 ps oder weniger, vorzugsweise von 3 ps oder weniger, vorzugsweise von 1 ps oder weniger, vorzugsweise von 0,5 ps oder weniger.

Die Phasenmaske phasenmoduliert den Laserstrahl.

Die Phasenmaske beeinflusst den Laser dabei vorzugsweise dadurch, dass sie durch lateral aufgelöste Änderung der optischen Weglänge dem Laserstrahl eine zusätzliche optische, nicht konstante Phase aufprägt.

Die Phasenmaske kann zum Beispiel realisiert sein als Freiform-Optik, als diffraktives optisches Element (DOE), als akustooptischer Modulator (AOM), oder als liquid crystal on silicon spatial light modulator (LCOS-SLM).

Die Phasenmaske kann aber auch ganz oder teilweise mittels anderer Elemente, die eine definierte Phasenänderung ermöglichen, realisiert sein.

In einer Ausführungsform wird als Phasenmaske ein DOE eingesetzt.

Das Verfahren eignet sich damit besonders gut im Bereich des Trennens und der Oberflächenstrukturierung von Substraten, insbesondere Glassubstraten. Beispielsweise eignet sich das Verfahren besonders gut für das Vorbereiten und/oder Durchführen des Trennens von solchen Substraten in Substratteile.

Erfindungsgemäß ist das Beeinflussen des Laserstrahls ein dynamisches Beeinflussen. Unter einem "dynamischen Beeinflussen" wird dabei beispielsweise eine während und/oder infolge des Kontrollierens der Energieverteilung innerhalb des Substrats, insbesondere eine während und/oder infolge des Beeinflussens des Laserstrahls, zeitabhängige Ausprägung, beispielsweise in Bezug auf die räumliche Orientierung, die Position und/oder die räumliche Ausdehnung, des Linienfokus im Substrat verstanden. Mit anderen Worten, die Ausprägung des Linienfokus ändert sich zeitabhängig zumindest zeitweise während des Kontrollierens und/oder Beeinflussens und/oder während des Modifizierens des Substrats.

Beispielsweise kann für eine dynamische Beeinflussung des Laserstrahls das Beeinflussen des Laserstrahls mittels wenigstens zumindest einer Phasenmaske, insbesondere der Versatz des Laserstrahls auf der Phasenmaske, zeitabhängig durchgeführt werden, vorzugsweise für eine konstante oder variable Pulsenergie und/oder Pulsdauer des Lasers.

Alternativ oder ergänzend kann auch vorgesehen sein, dass die zumindest eine Phasenmaske eine Phasenmaske mit kubischer Phasenverteilung oder einer Phasenverteilung höherer, insbesondere ungerader, Ordnung ist und/oder die Phasenmaske im Strahlengang des Laserstrahls vor dem Substrat angeordnet ist, und insbesondere der Laserstrahl, vorzugsweise der Schwerpunkt des in der Ebene der Phasenmaske bestehenden Strahl-Querschnitts, einen Auftreffpunkt auf der Phasenmaske hat.

Eine kubische Phasenmaske ist einfach einzurichten und liefert zuverlässig die Möglichkeit, die Energieverteilung zu kontrollieren.

Eine Phasenmaske mit ungerader Ordnung (für Ordnungen größer gleich 3) ist vorteilhaft, da hierbei eine laterale Verschiebung des Eingangsstrahls auf der Optik in gleichbleibender Richtung eine Verschiebung des Schwerpunkts der Energieverteilung des Fokus (mithin die Energieverteilung im Substrat) in gleichbleibender Richtung entlang der Trajektorie und/oder Propagationsrichtung des Laserstrahls erreich werden kann.

Alternativ oder ergänzend kann auch vorgesehen sein, dass das Ausbilden des Linienfokus aufweist, dass die Position des Scheitelpunkts des, insbesondere gekrümmten, Linienfokus entlang eines Tiefenbereichs, vorzugsweise eines Dickenbereichs, des Substrats eingestellt wird, und wobei vorzugsweise die Position des Scheitelpunkts des Linienfokus (i) mittig entlang des Tiefenbereichs des Substrats eingestellt wird, und/oder (ii) mit einem, insbesondere vertikalen, Abstand zur mittigen Lage entlang des Tiefenbereichs des Substrats eingestellt wird, insbesondere der, insbesondere vertikale, Abstand entlang des Tiefenbereichs (a) mehr als 0,1 %, vorzugsweise mehr als 1 %, vorzugsweise mehr als 5 %, vorzugsweise mehr als 10 %, vorzugsweise mehr als 20 %, vorzugsweise mehr als 30 %, vorzugsweise mehr als 40 %, vorzugsweise mehr als 45 %, der Dicke des Substrats, (b) weniger als 50 %, vorzugsweise weniger als 45 %, vorzugsweise weniger als 35 %, vorzugsweise weniger als 25 %, vorzugsweise weniger als 15 %, vorzugsweise weniger als 10 %, vorzugsweise weniger als 5 %, vorzugsweise weniger als 3 %, vorzugsweise weniger als 1 %, der Dicke des Substrats und/oder (c) zwischen 0,1 % und 49 %, vorzugsweise zwischen 0,1 % und 10 % oder zwischen 1 % und 40 %, vorzugsweise zwischen 5 % und 30 %, vorzugsweise zwischen 10 % und 25 %, der Dicke des Substrats beträgt.

Indem der Scheitelpunkt des gekrümmten Linienfokus entsprechend mittig positioniert wird, erstreckt sich die Trajektorie des Linienfokus symmetrisch um die Mittelebene des Substrats. Dadurch wird die Möglichkeit eröffnet, eine Modifikation in das Substrat einzubringen, die sich symmetrisch um die Mittelebene des Substrats erstreckt.

Damit lässt sich eine Modifikation in das Substrat einbringen, die sich symmetrisch um die Mittelebene des Substrats erstreckt, indem ferner zum Beispiel auch die Energieverteilung symmetrisch um den Scheitelpunkt herum durch geeignete Beeinflussung mit der Phasenmaske positioniert wird.

Aber auch eine in Bezug zur Mitte versetzte Positionierung des Scheitelpunkts kann bevorzugt sein, um entsprechende Verläufe im Substrat zu erreichen. Dabei kann es vorteilhaft sein, wenn der Abstand wie folgt gemessen wird: Es wird eine (hypothetische) mittige Lage des Scheitelpunkts entlang des Tiefenbereichs des Substrats ermittelt und es wird die Soll-Lage entlang des Tiefenbereichs des Substrats ermittelt und die Differenz zwischen beiden Positionen des Scheitelpunkts stellt den Abstand dar. Wenn der Tiefenbereich senkrecht zur Deckfläche des Substrats verläuft, handelt es sich auch gerade um den vertikalen Abstand. Ein etwaiger Versatz des Scheitelpunkts in einer senkrecht dazu verlaufenden Richtung, mithin horizontal verlaufend, wie er für einen gekrümmten Linienfokus auftreten kann, ist also zumindest für den vertikalen Abstand unbeachtlich.

Eine Richtung "entlang des Tiefenbereichs" verläuft dabei vorzugsweise senkrecht zu wenigstens einer der Deckflächen des Substrats, insbesondere senkrecht zu der der Laserquelle zugewandten Deckfläche des Substrats.

Jede der beschriebenen Positionierungen des Linienfokus und damit dessen Scheitelpunkt kann beispielsweise dadurch erfolgen, dass der Abstand zwischen der eingesetzten Fokussieroptik und dem Substrat variiert wird. Beispielsweise kann dazu das Substrat und/oder die Fokussieroptik entlang der Strahlpropagationsrichtung translatiert werden. Mit der Fokussieroptik wird vorzugsweise der Laserstrahl auf das Substrat fokussiert.

Alternativ oder ergänzend kann die Positionierung des Linienfokus und damit dessen Scheitelpunkt dadurch erfolgen, dass die Brennweite des Systems angepasst wird, wobei vorzugsweise die numerische Apertur des Systems beibehalten wird. Beispielsweise weist dazu die Fokussieroptik ein mehrlinsiges System mit variabler Brennweite auf.

Die Mittelebene ist hier vorzugsweise diejenige Ebene, die vorteilhaft mittig innerhalb des Substrats, also zwischen dessen beiden Deckflächen, verläuft und deren Normalenvektor parallel zur Haupterstreckungsrichtung des Laserstrahls verläuft.

In einer Ausführungsform wird die Position des Scheitelpunkts derart eingestellt, dass sich der Scheitelpunkt außerhalb des Substrats befindet.

Alternativ oder ergänzend kann auch vorgesehen sein, dass das Kontrollieren der Energieverteilung innerhalb des Substrats ferner das Einstellen der Pulsenergie, der Pulsdauer, der Anzahl von Pulsen im Burst, der Energieverteilung im Burst und/oder der LaserWellenlänge aufweist, wobei vorzugsweise die Pulsenergie derart eingestellt wird, dass der Linienfokus innerhalb des Substrats zumindest einen Abschnitt aufweist, entlang dessen das Substratmaterial aufgrund der im Substrat deponierten Energie, insbesondere durch eine Wechselwirkung zwischen der Energie und dem Substratmaterial, modifiziert wird, wobei vorzugsweise der Abschnitt eine Länge von (a) mehr als 0,1 mm, vorzugsweise mehr als 0,3 mm, vorzugsweise mehr als 0,5 mm, vorzugsweise mehr als 0,7 mm, vorzugsweise mehr als 1 mm, vorzugsweise mehr als 3 mm, vorzugsweise mehr als 5 mm, (b) weniger als 5 mm, vorzugsweise weniger als 3 mm, vorzugsweise weniger als 1 mm, vorzugsweise weniger als 0,7 mm, vorzugsweise weniger als 0,5 mm, vorzugsweise weniger als 0,3 mm, vorzugsweise weniger als 0,1 mm, und/oder (c) zwischen 0,1 mm und 5 mm, vorzugsweise zwischen 0,5 mm und 2 mm, aufweist.

Es wurde erkannt, dass nicht nur die Phasenmaske die Energieverteilung, insbesondere deren Position entlang der Fokus-Trajektorie, beeinflussen kann, sondern auch eine Änderung der Pulsenergie zu einer Änderung der Energieverteilung, insbesondere deren Position entlang der Fokus-Trajektorie und/oder deren Gestalt, wie die räumliche Ausdehnung, führen kann. Daher lässt sich über die Pulsenergie die Energieverteilung mitkontrollieren.

Gleichermaßen können auch die weiteren Parameter wie die Pulsdauer oder die Anzahl Pulse im Burst sowie die Wellenlänge des Laserstrahls entsprechend für eine Kontrolle eingesetzt werden, wie die Erfinder festgestellt haben.

Vorzugsweise wird die Pulsenergie vor der Fokussieroptik gemessen. In dieser Anmeldung ist dies daher vorteilhafterweise bei entsprechenden Werten der Pulsenergie zu beachten, soweit sich aus dem jeweiligen Kontext nicht etwas anderes ergibt.

Es wurde insoweit auch erkannt, dass, insbesondere für eine eingestellte Position des Scheitelpunkts des, insbesondere gekrümmten, Linienfokus entlang eines Tiefenbereichs, vorzugsweise eines Dickenbereichs, des Substrats, eine Pulsenergie derart wählbar ist, dass Nebenmaxima des Linienfokus nicht oder nur gering, nämlich beispielsweise dass die Intensität des Hauptmaximums in der transversalen Ebene, das entlang der Propagation den gewünschten Linienfokus ausprägt, im linearen Fokus, also an der Stelle der maximalen Intensität entlang der Propagation wenigstens das 1,1-fache, vorzugsweise wenigstens das 1,3-fache, vorzugsweise wenigstens das 2-fache, vorzugsweise wenigstens das 3-fache, vorzugsweise wenigstens das 5-fache, vorzugsweise wenigstens das 7-fache, vorzugsweise wenigstens das 10-fache, vorzugsweise wenigstens das 20-fache, vorzugsweise wenigstens das 30-fache, vorzugsweise wenigstens das 50-fache, vorzugsweise wenigstens das 100-fache, der maximalen Intensität eines beliebigen Nebenmaximums in derselben transversalen Ebene oder entlang der gesamten Propagation beträgt, im Substrat ausgeprägt sind.

Das Erhöhen des Kontrasts zwischen dem Hauptmaximum, das den gewünschten Linienfokus ausprägt, und sämtlichen Nebenmaxima im Substrat ist vorteilhaft, da so deren Einfluss auf eine Materialmodifikation reduziert oder beseitigt werden kann. So können Abschirmeffekte durch Nebenmaxima verhindert und daher eine besonders zuverlässige Ausbildung des Linienfokus erreicht und damit eine besonders zuverlässige Materialmodifikation in das Substrat eingebracht werden.

Um mittels des Linienfokus und der von ihm in das Substrat eingebrachten Energieverteilung eine Modifikation in das Substrat einbringen zu können, ist an den entsprechenden Stellen eine Energiedichte notwendig, die höher als ein, insbesondere materialabhängiger, Schwellenwert ist. Daher ist es vorteilhaft, wenn die Verteilung der Energie durch eine geeignet gewählte Pulsenergie angepasst wird, so dass ausreichend Energie im Substrat deponiert wird, um eine Wechselwirkung zwischen der Energie und dem Material zu erreichen, die zu der Modifikation führt. Besonders vorteilhaft für das erfindungsgemäße Verfahren kann es sein, wenn eine hohe Energiedichte in einem räumlich eng begrenzten Volumen erreicht wird. Hierdurch lassen sich besonders vorteilhaft Modifikationen im Substrat einbringen, die mit einer räumlich eng begrenzten, aber stark ausgeprägten Schädigung des Materials einhergehen und somit eine leichte Trennung des Substrats entlang der gewünschten Trennfläche ermöglichen, ohne die Seitenflächen der getrennten Substratteile zu schwächen.

Durch Anpassen der Pulsenergie kann beispielsweise die Länge eines Abschnitts des Linienfokus verändert werden, innerhalb dessen ein bestimmter Schwellenwert der Energiedichte überall überschritten wird, um damit sich zumindest entlang des Abschnitts erstreckende Modifikationen (einschließlich des Entfernens von Material) im Material zu erzeugen.

Beispielsweise kann der Schwellenwert abhängig von dem Material des Substrats sein.

Durch Anpassen der Pulsenergie kann beispielsweise auch die Position verändert werden, die die Energieverteilung, insbesondere deren Schwerpunkt, entlang der Fokus-Trajektorie einnimmt.

Daher ist die Pulsenergie eine ergänzende Möglichkeit, die Energieverteilung zu kontrollieren, insbesondere anzupassen, beispielsweise hinsichtlich der Position ihres Schwerpunktes und/oder hinsichtlich der Länge des Abschnitts des Linienfokus entlang dessen eine ausreichend hohe Energiedeposition im Substratmaterial erfolgt.

Alternativ oder ergänzend kann auch vorgesehen sein, dass

(i) die Pulsenergie zumindest zeitweise eingestellt wird

(a) auf 50 μJ oder mehr, vorzugsweise 100 μJ oder mehr, vorzugsweise 200 μJ oder mehr, vorzugsweise 300 μJ oder mehr, vorzugsweise 400 μJ oder mehr, vorzugsweise 500 μJ oder mehr, vorzugsweise 600 μJ oder mehr, vorzugsweise 1000 μJ oder mehr, vorzugsweise 1500 μJ oder mehr, vorzugsweise 2000 μJ oder mehr, vorzugsweise 2500 μJ oder mehr, vorzugsweise 3000 μJ oder mehr, vorzugsweise 3500 μJ oder mehr, vorzugsweise 4000 μJ oder mehr, vorzugsweise 4500 μJ oder mehr, vorzugsweise 5000 μJ oder mehr,

(b) auf 5000 μJ oder weniger, vorzugsweise 4500 μJ oder weniger, vorzugsweise 4000 μJ oder weniger, vorzugsweise 3500 μJ oder weniger, vorzugsweise 3000 μJ oder weniger, vorzugsweise 2500 μJ oder weniger, vorzugsweise 2000 μJ oder weniger, vorzugsweise 1500 μJ oder weniger, vorzugsweise 1000 μJ oder weniger, vorzugsweise 600 μJ oder weniger, vorzugsweise 500 μJ oder weniger, vorzugsweise 400 μJ oder weniger, vorzugsweise 300 μJ oder weniger, vorzugsweise 200 μJ oder weniger, vorzugsweise 100 μJ oder weniger, vorzugsweise 50 μJ oder weniger,
und/oder

(c) auf zwischen 50 μJ und 5000 μJ, vorzugsweise zwischen 10 μJ und 100 μJ, zwischen 100 μJ und 300 μJ, zwischen 150 μJ und 300 μJ, zwischen 200 μJ und 400 μJ, zwischen 300 μJ und 600 μJ, zwischen 600 μJ und 1000 μJ, zwischen 800 μJ und 2000 μJ, zwischen 1500 μJ und 3000 μJ, zwischen 2000 μJ und 4500 μJ oder zwischen 3000 μJ und 5000 μJ.
und/oder

(ii) die Pulsenergie eingestellt wird, so dass eine mittlere Linienenergiedichte besteht von

(a) 1 μJ/mm oder mehr, vorzugsweise 5 μJ/mm oder mehr, vorzugsweise 10 μJ/mm oder mehr, vorzugsweise 20 μJ/mm oder mehr, vorzugsweise 30 μJ/mm oder mehr, vorzugsweise 40 μJ/mm oder mehr, vorzugsweise 50

μJ/mm oder mehr, vorzugsweise 60 μJ/mm oder mehr, vorzugsweise 70 μJ/mm oder mehr, vorzugsweise 80 μJ/mm oder mehr, vorzugsweise 90 μJ/mm oder mehr, vorzugsweise 100 μJ/mm oder mehr, vorzugsweise 150 μJ/mm oder mehr, vorzugsweise 200 μJ/mm oder mehr, vorzugsweise 250 μJ/mm oder mehr, vorzugsweise 300 μJ/mm oder mehr, vorzugsweise 350 μJ/mm oder mehr, vorzugsweise 400 μJ/mm oder mehr, vorzugsweise 500 μJ/mm oder mehr, vorzugsweise 600 μJ/mm oder mehr, vorzugsweise 700 μJ/mm oder mehr, vorzugsweise 800 μJ/mm oder mehr, vorzugsweise 900 μJ/mm oder mehr,

(b) 1000 μJ/mm oder weniger, vorzugsweise 900 μJ/mm oder weniger, vorzugsweise 800 μJ/mm oder weniger, vorzugsweise 700 μJ/mm oder weniger, vorzugsweise 600 μJ/mm oder weniger, vorzugsweise 500 μJ/mm oder weniger, vorzugsweise 400 μJ/mm oder weniger, vorzugsweise 350 μJ/mm oder weniger, vorzugsweise 300 μJ/mm oder weniger, vorzugsweise 250 μJ/mm oder weniger, 200 μJ/mm oder weniger, vorzugsweise 180 μJ/mm oder weniger, vorzugsweise 160 μJ/mm oder weniger, vorzugsweise 140 μJ/mm oder weniger, vorzugs-weise 120 μJ/mm oder weniger, vorzugsweise 100 μJ/mm oder weniger, vorzugsweise 90 μJ/mm oder weniger, vorzugsweise 80 μJ/mm oder weniger, vorzugsweise 70 μJ/mm oder weniger, vorzugsweise 60 μJ/mm oder weniger, vorzugsweise 50 μJ/mm oder weniger, vorzugsweise 40 μJ/mm oder weniger, vorzugsweise 30 μJ/mm oder weniger, vorzugsweise 25 μJ/mm oder weniger, vorzugsweise 20 μJ/mm oder weniger, vorzugsweise 15 μJ/mm oder weniger, vorzugsweise 10 μJ/mm oder weniger, vorzugsweise 5 μJ/mm oder weniger, und/oder

(c) zwischen 1 μJ und 200 μJ/mm, insbesondere zwischen 10 μJ/mm und 120 μJ/mm, vorzugsweise zwischen 10 μJ/mm und 50 μJ, zwischen 40 μJ/mm und 80 μJ/mm, zwischen 70 μJ/mm und 100 μJ/mm, oder zwischen 80 μJ/mm und 120 μJ/mm.

Die vorgeschlagenen Pulsenergien und mittleren Linienenergiedichten sind besonders bevorzugt für ein Glassubstrat.
Wird ein Burst-Puls eingesetzt, so lässt sich vorzugsweise die Pulsenergie und die Burstenergie gemäß der Beziehung BURSTENERGIE = PULSENERGIE x ANZAHL PULSE IM BURST ineinander umrechnen. Eine Pulsenergie von beispielsweise 50 μJ und N=2 Pulse im Burst führen also zu einer Burstenergie von 50x2 μJ = 100 μJ und vice versa. So kann also auch durch Einstellen einer Burstenergie die Pulsenergie entsprechend eingestellt werden.
Vorzugsweise ist die mittlere Linienenergiedichte definiert als der Quotient von Laserpulsenergie und Substratdicke. Die mittlere Linienenergiedichte kann alternativ vorzugsweise auch definiert sein als der Quotient von Laserpulsenergie und Länge der Modifikation im Substrat.
Die Erfinder gehen davon aus, dass vorzugsweise eine lokale Linienenergiedichte, d.h. eine über die zur Laserpropagationsrichtung senkrechten Ebene integrierte Energiedichte, von 1 μJ/mm oder mehr benötigt wird, um mit einem Airy-Strahl Modifikationen, etwa in Form einer Änderung des lokalen Brechungsindex des Materials, in Borosilikatglas zu erzeugen.
Alternativ oder ergänzend kann auch vorgesehen sein, dass das Kontrollieren der Energieverteilung innerhalb des Substrats (a) das Anpassen der räumlichen Ausdehnung der Energieverteilung, (b) das Anpassen, insbesondere Verschieben, der Position der maximalen Materialschädigung, insbesondere verursacht durch die nichtlineare Wechselwirkung zwischen Laser und Substratmaterial und/oder (c) das Anpassen, insbesondere Verschieben, der Position der Energieverteilung, insbesondere eines, vorzugsweise globalen, Maximums der Energieverteilung und/oder des Schwerpunktes der Energieverteilung, vorzugsweise entlang der Trajektorie des Laserstrahls, insbesondere der des Linienfokus, aufweist,
wobei vorzugsweise

(i) nach dem Anpassen der Position der Energieverteilung, am Scheitelpunkt des, insbesondere gekrümmten, Linienfokus zumindest ein Maximum der Energieverteilung positioniert ist,

(ii) nach dem Anpassen der räumlichen Ausdehnung und/oder der Position der Energieverteilung eine entlang der gesamten Substratdicke verlaufende Modifizierung des Substratmaterials durchgeführt wird oder erfolgt, und/oder

(iii) das Anpassen der Position der Energieverteilung zumindest teilweise ein Aufeinander-Abstimmen des Beeinflussens des Laserstrahls mittels der Phasenmaske und des Einstellens der Pulsenergie aufweist.

Indem das Maximum der Energieverteilung verschoben wird, kann der Ort der (maximalen) Modifikation besonders zuverlässig bestimmt werden. Damit lässt sich beispielsweise ein geplanter Trennvorgang am Substrat zuverlässig vorbereiten und/oder anschließend durchführen.

Indem das Maximum der Energieverteilung innerhalb des Substratmaterials am Scheitelpunkt positioniert wird, kann eine um den Scheitelpunkt herum symmetrische Modifikation in das Substrat eingebracht werden. Indem optional der Scheitelpunkt seinerseits symmetrisch innerhalb des Dickenbereichs des Substrats positioniert wird, lässt sich so eine Trennfläche und einhergehend damit eine Seitenfläche der getrennten Substratteile erhalten, die einen symmetrischen Verlauf aufweist (insbesondere innerhalb einer Querschnittsebene, die durch den Normalenvektor einer Deckfläche des Substrats und einen Normalenvektor der geplanten Trennfläche aufgespannt wird).

Es ist besonders bevorzugt in Ausführungsformen, dass das Beeinflussen mit der Phasenmaske und das Einstellen der Pulsenergie aufeinander abgestimmt sind. So lassen sich sehr flexibel die räumliche Ausdehnung und/oder Position einer Modifikation innerhalb des Substrats kontrollieren.

Beispielsweise kann die Pulsenergie derart gewählt werden, dass entlang des Linienfokus innerhalb des gesamten Dickenbereichs des Substrats überall eine derart hohe Energiedeposition durch den Linienfokus in dem Material besteht, dass Modifikationen in dem Material entlang des gesamten Dickenbereichs erzeugt werden können. Dies kann beispielsweise notwendig sein, um entlang des gesamten Dickenbereichs eine Modifikation in dem Substrat zu erreichen. Gleichzeitig wird durch eine darauf abgestimmte Beeinflussung mit der Phasenmaske die Position der Energieverteilung angepasst, etwa derart, dass sich ihr Maximum auf dem Scheitelpunkt der Fokus-Trajektorie befindet. Damit kann insgesamt eine (beispielsweise zur Ebene, insbesondere der Mittelebene, des Substrats, in der auch der Scheitelpunkt der Fokus-Trajektorie liegt) symmetrische Modifizierung des Substratmaterials entlang des gesamten Dickenbereichs erreicht werden.

In einer Ausführungsform ist der Ort der maximalen Modifizierung des Substrats am Ort des Scheitelpunkts der Linienfokus-Trajektorie und/oder in der Mitte entlang des Dickenbereichs des Glassubstrats.

Alternativ oder ergänzend kann auch vorgesehen sein, dass das Beeinflussen des Laserstrahls mittels wenigstens der zumindest einen Phasenmaske aufweist, dass der Laserstrahl versetzt zum Zentralpunkt der Phasenmaske auftrifft, wobei der Zentralpunkt derjenige Ort der Phasenmaske ist, an dem ein auf die Phasenmaske auftreffender Laserstrahl mit einem gegen Null gehenden Durchmesser von dem Sattelpunkt der auf der Phasenmaske aufgeprägten Phasenverteilung beeinflusst wird, und wobei vorzugsweise der Versatz innerhalb der Spiegelebene der Phasenverteilung erfolgt, wobei vorzugsweise der Versatz zwischen 0,1 $\mu$m und 5000 $\mu$m, vorzugsweise zwischen 1 $\mu$m und 3000 $\mu$m, vorzugsweise zwischen 1 $\mu$m und 2000 $\mu$m, beträgt.

Eine besonders einfache und zuverlässige Möglichkeit der Beeinflussung des Laserstrahls ist es, diesen an unterschiedlichen Positionen auf die Phasenmaske auftreffen zu lassen. Denn die Phasenmaske beeinflusst den Laserstrahl, insbesondere hinsichtlich der Energieverteilung im Fokus, abhängig davon, auf welcher Position er auf die Phasenmaske auftrifft. Vorzugsweise kann man dabei den Auftreffpunkt als den Schwerpunkt des in der Ebene der Phasenmaske bestehenden Strahl-Querschnitts verstehen.

So wurde insbesondere festgestellt, dass, vor allem für eine kubische Phasenmaske, mit einem zunehmenden Versatz des Auftreffpunkts des Laserstrahls (besser gesagt: der des Schwerpunkts seines Querschnitts in der Ebene der Phasenmaske) von dem Zentralpunkt der Phasenmaske (insbesondere, wenn der Versatz innerhalb der Spiegelebene der Phasenverteilung erfolgt), sich innerhalb des Substrats der Ort maximaler Energie auf der Fokus-Trajektorie von dem Scheitelpunkt wegbewegt, und zwar je nach Vorzeichen des Versatzes in die eine oder andere Richtung entlang der Trajektorie.

Wenn in dieser Anmeldung von dem Zentralpunkt der Phasenmaske gesprochen wird, so wird dabei vorzugsweise derjenige Ort der Phasenmaske verstanden, an dem ein auf die Phasenmaske auftreffender Laserstrahl mit einem gegen Null gehenden Durchmesser von dem Sattelpunkt der auf der Phasenmaske aufgeprägten Phasenverteilung beeinflusst wird.

Die Phasenverteilung und damit auch der Ort des Sattelpunkt der Phasenverteilung auf der Phasenmaske kann beispielsweise mit einem Mikroskop bestimmt werden. Alternativ kann der Ort des Sattelpunkts auch experimentell bestimmt werden, indem beispielsweise ein Laserstrahl (bzw. dessen Schwerpunkt in der Strahl-Querschnittsebene auf der Phasenmaske) an unterschiedlichen Orten auf der Phasenmaske auftrifft und derjenige Ort der Phasenmaske als der Zentralpunkt identifiziert wird, bei dem der durch die Phasenmaske gelaufene Laserstrahl so beeinflusst wird, dass bei geeigneter Abbildung in der linearen Propagation (messbar durch einen Mikroskopaufbau oder Ablationsmuster auf einer Substrat-Oberfläche) die maximale Intensität am Scheitelpunkt der Parabel erreicht wird, und/oder die Intensitätsverteilung symmetrisch um diesen verteilt ist, und die Nebenmaxima vor und nach dem Fokus symmetrisch ausgeprägt sind. Oder anders ausgedrückt, dass die lineare Propagation einem idealen Airy-Strahl entspricht.

Vorzugweise befindet sich der Sattelpunkt und damit auch der Zentralpunkt am geometrischen Mittelpunkt der Phasenmaske. Dies kann beispielsweise durch eine zentrierte Phasenfunktion erreicht werden.

Vorzugsweise ergibt sich die Tiefenänderung des Maximums der Energieverteilung für einen Versatz dx als Änderung der effektiven Brennweite hinter der verwendeten Fokussieroptik um einen Betrag df der nach der angegebenen Gleichung:

$$df = \frac{1}{\frac{1}{f_0} + \frac{\sqrt{2}\beta^3 dx}{k_0}} - f_0$$

Hierbei sind:

- $k_0$ der Wellenvektor mit $k_0$=2\*pi\*n/Lambda, mit Wellenlänge Lambda und Brechzahl n des Mediums, innerhalb dessen der Fokus ausgebildet wird

- $f_0$ die Brennweite der eingesetzten Fokussieroptik

- Beta ist der Skalierungsfaktor der kubischen Phase phi, mit $\varphi = exp(\frac{i\beta}{3} * (x^3 + y^3))$ , beispielsweise mit $\beta = 3^{1/3} mm^{-1}$ , für x und y in mm.

Damit ermöglicht es das vorgeschlagene Verfahren folglich, eine Fokusverschiebung durch lateralen Strahlversatz zu erzeugen, und diese Fokusverschiebung zur Kontrolle der Energieverteilung mit auszunutzen.

Es lässt sich also vorteilhafterweise ein Einfluss des Versatzes eines Laserstrahls auf einer (insbesondere kubischen) Phasenmaske auf die Position des Maximums der Fokus-Intensität und damit effektiv auch die der Energieverteilung im Substrat entlang der Fokus-Trajektorie beobachten.

So ist vorzugsweise mit zunehmendem Versatz des Eingangsstrahls auf der Phasenmaske von dem Zentrum der Phasenmaske und/oder innerhalb einer Symmetrieebene der Phasenverteilung, der Ort des Maximums der Energieverteilung gegenüber (i) dem Scheitelpunkt der Trajektorie des Linienfokus und/oder (ii) dem Punkt auf der Trajektorie des Linienfokus, dessen Tangente parallel zu der optischen Achse ist und der mit dem Scheitelpunkt des von einem zentrierten Eingangsstrahl produzierten Linienfokus übereinstimmt, verschoben.

Daher ist vorzugsweise der Linienfokus ein Fokus eines Airy-Strahls und/oder durch das Beeinflussen des Laserstrahls mittels wenigstens zumindest einer Phasenmaske der Ort des Maximums der Energieverteilung gegenüber dem Scheitelpunkt der, insbesondere von einem zentrierten Eingangsstrahl produzierten, Airy-Trajektorie verschoben, und zwar vorzugsweise entlang der Airy-Trajektorie.

Daher ist vorzugsweise der Linienfokus ein Fokus eines Airy-Strahls und/oder durch das Beeinflussen des Laserstrahls mittels wenigstens zumindest einer Phasenmaske der Ort des Maximums der Energieverteilung gegenüber dem Scheitelpunkt der Trajektorie des Linienfokus verschoben, und zwar vorzugsweise entlang der Trajektorie des Linienfokus.

Alternativ oder ergänzend kann auch vorgesehen sein, dass

(i) der Versatz eingestellt wird

(a) durch ein Bewegen der Phasenmaske relativ zu dem Laserstrahl;

(b) durch zumindest eine gedrehte planparallele Platte, insbesondere aus einem Glasmaterial und/oder einem optischen, vorzugsweise bei der Laserwellenlänge transparenten Material;

(c) durch wenigstens zwei, im Strahlengang hintereinander angeordneten Prismen, wobei die Prismen vorzugsweise gleiche Prismenwinkel aufweisen und vorzugsweise das zweite Prisma um 180° um die optische Achse rotiert gegenüber dem ersten Prisma angeordnet ist; und/oder

(d) durch ein Translatieren, insbesondere innerhalb des Strahlengangs und/oder parallel zur Richtung des einfallenden Strahles, eines den Laserstrahl umlenkenden Umlenkspiegels; und/oder

(ii) der Versatz eingestellt wird durch Ablenkung des, vorzugsweise parallel zur und/oder entlang der Mittelachse der Phasenmaske verlaufenden, Laserstrahls mittels wenigstens eines ersten Mittels, so dass der Richtungsvektor des auf die Phasenmaske auftreffenden Strahls einen Winkel mit dem Richtungsvektor der Mittelachse der Phasenmaske einschließt, wobei vorzugsweise der Winkel 1/500 radiant oder kleiner, vorzugsweise 1/1000 radiant oder kleiner, vorzugsweise 1/2000 radiant oder kleiner, ist,

und wobei vorzugsweise die Ablenkung eingestellt wird mittels des ersten Mittels aufweisend

(a) zumindest ein drehbar gelagertes Prisma;

(b) zumindest einen drehbar gelagerten Spiegel;

(c) zumindest einen Polygon- oder Galvoscanner;

(d) zumindest einen akustooptischen Modulator;

(e) zumindest einen liquid crystal on silicon spatial light modulator; und/oder

(f) zumindest einen Micro-Electronic-Mirror-Baustein;

und wobei vorzugsweise ferner ein zu dem ersten Mittel identisches, zweites Mittel vorgesehen und im Strahlengang vor oder nach der Phasenmaske angeordnet wird und/oder synchron mit dem ersten Mittel gesteuert wird, um den Laserstrahl derart abzulenken, dass er senkrecht auf die Phasenmaske und/oder das Substrat einfällt und/oder parallel aber versetzt zu dem Verlauf vor dem Umlenken mit dem ersten Mittel verläuft.

Demnach sind vor allem zwei Prinzipien, den Versatz einzustellen, besonders bevorzugt. Bei dem einen fällt der Laserstrahl parallel zur Mittelachse der Phasenmaske (alternativ auch: parallel zur optischen Achse des zur Fokussierung genutzten Systems, inklusive der Phasenmaske und der Fokussierungsoptik, wie ein Mikroskopobjektiv oder eine asphärische Linse) ein. Bei dem anderen fällt der Laserstrahl mit einem Winkel zur Mittelachse der Phasenmaske ein.

Bei letzterem kann der (bezogen auf die Mittelachse der Phasenmaske) schräge Strahlverlauf dadurch wieder sozusagen rückgängig gemacht werden, indem mit einem identischen Mittel der Winkel korrigiert wird. Der Strahl wird folglich durch das erste und zweite Mittel im Ergebnis versetzt, verläuft aber vor dem ersten und nach dem zweiten Mittel entlang paralleler Richtungen.

Wenn der laterale Versatz des Eingangsstrahls auf der, insbesondere kubischen, Phasenmaske durch eine gedrehte planparallele Platte hergestellt wird, kann der erreichbare Maximalversatz durch die Dicke, Brechzahl und laterale Ausdehnung der planparallelen Platte relativ zum Durchmesser des Laserstrahls sehr einfach angepasst werden.

Wenn der Versatz durch zwei hintereinander im Strahlengang befindliche Prismen mit gleichen Prismenwinkeln realisiert wird, kann der erreichbare Versatz durch die Größe der Prismen relativ zum Durchmesser des Laserstrahls, den Auslenkungswinkel der Prismen und ihren maximalen Abstand zueinander sehr einfach angepasst werden. Beispielsweise können die Größen, Winkel und Abstände wie folgt gewählt sein: Größe, insbesondere Durchmesser, des Prismas von zwischen 10 mm und 60 mm (oder auch mehr als 60 mm), vorzugsweise von zwischen 10 mm und 26 mm; Auslenkungswinkel gemäß der Gleichung $x = \sin(th)*d$, mit dem lateralen Strahlversatz $x$, dem Auslenkungswinkel $th$ und dem Abstand der Prismen $d$; Abstand von zwischen 1 mm und 200 mm (oder auch mehr als 200 mm).

Wenn der Versatz dadurch erreicht wird, dass ein Umlenkspiegel im Strahlengang translatiert wird, ist eine Translation parallel zur Richtung des einfallenden Strahles besonders vorteilhaft. Denn dadurch ist der maximale Versatz nicht durch die Größe der Optik beschränkt.

Diese Optionen erzeugen vorzugsweise einen reinen lateralen Versatz ohne Änderungen der Strahlrichtung.

Insbesondere bei ausreichend kleinen Ablenkungen und einem ausreichend großen zur Verfügung stehenden Abstand (beispielsweise 100 cm oder mehr, vorzugsweise 150 cm oder mehr, vorzugsweise 200 cm oder mehr, vorzugsweise 300 cm oder mehr, vorzugsweise 400 cm oder mehr) zur Phasenmaske kann auch durch eine Winkeländerung des Eingangsstrahls der gewünschte Effekt eines Versatzes in besonders zuverlässiger Weise erreicht werden.

Das Einstellen der Ablenkung mit einem Scanner oder einem akustooptischen Modulator (AOM) sind besonders bevorzugt. Denn aufgrund der kurzen Ansprechzeiten dieser Bauteile sind diese prinzipiell auch geeignet, eine signifikante Ablenkung selbst bei kurzen Pulsabständen, z. B. innerhalb eines Laserbursts, zu erreichen. Hierdurch kann beispielsweise besonders zuverlässig ein on-the-fly-Modifizieren des Substrates, insbesondere mit mehreren, versetzten Laserpulsen, die jeweils das Substrat in einem separaten Tiefenabschnitt auf einer durchgehenden Trajektorie innerhalb des Substrats modifizieren, vor allem ohne Geschwindigkeitsänderung, Abbremsen oder Stoppen der Achsen während eines Strukturierungsprozesses möglich gemacht werden. Dies gilt insbesondere in den Fällen, in denen das Substrat relativ zu einem Linienfokus mit einer Verfahrgeschwindigkeit von kleiner gleich 2 m/s bewegt wird und/oder bei Intraburstpulsabständen von 25 ns oder weniger. Hier kann beispielsweise als Vergleichsgröße der Durchmesser der Modifikation selbst (beispielsweise 1-10 $\mu$m) verwendet werden.

Wie oben bereits angeführt, kann ein rein lateraler Versatz mit den vorgeschlagenen Mitteln, die den Strahl ablenken, erreicht werden, durch Ablenkung an zwei hintereinander befindlichen Positionen im Strahlengang, wobei mit der zweiten Ablenkung der von der ersten Ablenkung erzeugte Winkel kompensiert wird. Hierbei ist vorzugsweise die Synchronisation der Ablenkelemente zueinander zu beachten.

Es ist erfindungsgemäß vorgesehen, dass das Beeinflussen des Laserstrahls mittels wenigstens der zumindest einen Phasenmaske zeitabhängig durchgeführt wird und dadurch die Energieverteilungund dadurch deren Gestalt und/oder Position, zeitabhängig verändert wird.

Indem eine zeitabhängige Beeinflussung vorgenommen wird, kann die Energieverteilung beispielsweise entlang der Trajektorie des Fokus innerhalb des Materials bewegt werden. Es ist damit vorteilhaft möglich, in einer Ausführungsform das Maximum der Energieverteilung zeitlich zu verschieben und somit das Modifizieren des Substrats sogar entlang eines großen Dickenbereichs zuverlässig vorzunehmen.

Dies ist beispielsweise vorteilhaft, wenn der Linienfokus nicht entlang des gesamten Dickenbereichs eine ausreichend hohe Energieverteilung im Substratmaterial für das Einbringen einer Modifikationen in das Substratmaterial bereitstellen kann.

So kann eine Energieverteilung, mit der entlang eines Abschnitts der Fokus-Trajektorie ein für die Modifikationen notweniger Schwellenwert erreicht oder überstiegen wird, innerhalb des Substrats bewegt werden.

Wenn beispielsweise die Pulsenergie nicht ausreicht, um entlang des gesamten Dickenbereichs eine Energiedichte größer als ein für Modifikationen erforderlichen Schwellenwert zu erreichen, ist dies eine zuverlässige und einfache Möglichkeit, dennoch eine symmetrische Trennfläche selbst bei entsprechend großen Dicken auszugestalten.

Es handelt sich dabei also vorteilhafterweise um einen Anwendungsfall der dynamischen Beeinflussung.

Alternativ oder ergänzend kann auch vorgesehen sein, dass der Laserstrahl zu unterschiedlichen, vorzugsweise unmittelbar aufeinanderfolgenden, Zeiträumen durch unterschiedliche Bereiche der Phasenmaske beeinflusst wird, insbesondere der Laserstrahl, der Schwerpunkt des in der Ebene der Phasenmaske bestehenden Strahl-Querschnitts, während den unterschiedlichen Zeiträumen unterschiedliche Auftreffpunkte auf dieser hat.

Beispielsweise kann dazu der Versatz zeitlich gesteuert werden, also der Auftreffpunkt des Laserstrahls (bzw. der des Schwerpunkts des in der Ebene der Phasenmaske bestehenden Strahl-Querschnitts) auf der Phasenmaske. Dazu eignen sich die vorstehend genannten Mittel, indem sie zeitabhängig den Versatz verändern.

Beispielsweise kann die Phasenmaske zeitabhängig relativ zu dem Laserstrahl bewegt werden, so dass vorzugsweise für unterschiedliche Zeitpunkte der Versatz innerhalb der waagerechten Symmetrieebene der Phasenverteilung unterschiedlich ist.

Alternativ oder ergänzend kann auch vorgesehen sein, dass durch das zeitabhängige Beeinflussen die Energieverteilung, vorzugsweise zumindest ein Maximum der Energieverteilung, innerhalb des Substrats, insbesondere von einer größeren zu einer geringeren Tiefe und/oder entlang der Fokus-Trajektorie innerhalb des Substrats, bewegt wird.

Neben der bereits oben beschriebenen allgemeinen Möglichkeit, die Energieverteilung zu verschieben und damit selbst große Dickenbereiche modifizieren zu können, ist es alternativ oder ergänzend vorteilhaft, die Modifizierung durch eine entsprechende Bewegung der Energieverteilung, oder ihres Maximums oder Schwerpunkts, beispielsweise von unten nach oben, also insbesondere von der dem Laser abgewandten Seite des Substrats hin zur dem Laser zugewandten Seite des Substrats, in dem Substrat zu erzeugen. Dadurch bewegt sich vorzugsweise der Ort der aktuellen Modifikation von bisherigen Modifikationen fort. Somit wird der Linienfokus am aktuellen Ort nicht durch bereits in das Substrat eingebrachte Modifikationen beeinflusst. Dadurch kann sehr zuverlässig die Modifikation in das Substrat eingebracht werden.

Im Substrat "unten" kann dabei in Strahlrichtung der von der Laserquelle am weitesten entfernten Ort, den der Laserstrahl im Substrat durchläuft, sein. Im Substrat "oben" kann dabei in Strahlrichtung der von der Laserquelle am nächsten gelegenen Ort, den der Laserstrahl im Substrat durchläuft, sein.

So kann der Puls einer Strahlungsquelle vorzugsweise auch zeitlich in zwei oder mehr Teile geteilt werden, die die Phasenmaske mit geringen Zeitversatz an unterschiedlichen Orten treffen. Hierzu wird also ein einziger Puls zeitlich aufgeteilt und zum Beispiel der erste Teil wird auf eine erste Position der Phasenmaske gelenkt und der zweite Teil wird auf eine zweite Position der Phasenmaske gelenkt. Die Umlenkung kann dabei vorzugsweise durch eine der zuvor genannten Mittel erreicht werden, insbesondere über separate Strahlwege (auch als fixer Aufbau, dann bevorzugt über Spiegel). Alternativ oder ergänzend ist in diesem Zusammenhang auch die unten beschriebene SSTF bevorzugt.

Daher kann diese Art der dynamischen Fokussierung sehr bevorzugt sein, auch wenn die Pulsenergie für die Modifzierung in der gesamten Tiefe des Materials ausreicht. Denn in diesen Situationen besteht der Vorteil der dynamischen Fokussierung darin, dass die Ausprägung der Materialmodifikation im unteren Teil des Substrates nicht durch das Plasma im oberen Teil des Substrates behindert wird.

Diese Form der dynamischen Fokussierung kann aber auch besonders interessant sein, wenn die zur Verfügung stehende Pulsenergie nicht ausreicht, um das Substrat entlang seiner gesamten Dicke auf einmal zu modifizieren.

Denn gerade bei dickeren Substraten, aber auch ganz allgemein, kann die gesamte Schädigungszone damit im Substrat zusammengesetzt werden durch mehrere Einzelsubmodifikationen, erreicht jeweils durch einen Laserpuls auf einer anderen Position auf der, insbesondere kubischen, Phasenmaske. Besonders vorteilhaft ist es dabei, mit der tiefstgelegenen (in Strahlrichtung von der Laserquelle am weitesten entfernten) Einzelsubmodifikation im Substratmaterial zu beginnen, und die Position im Substrat sukzessive zu erhöhen.

Das vorgeschlagene Verfahren ist daher gerade bei Substraten mit einer Dicke von 500 $\mu$m oder größer, vorzugsweise von 1 mm oder größer, vorzugsweise von 3 mm oder größer, vorzugsweise von 5 mm oder größer, vorzugsweise von 7 mm oder größer, bevorzugt.

So können kleinere Laserquellen eingesetzt werden.

Alternativ oder ergänzend kann auch vorgesehen sein, dass das Beeinflussen des Laserstrahls mittels wenigstens der zumindest einen Phasenmaske aufweist, dass die Intensitätsverteilung des Laserstrahls, insbesondere innerhalb einer Pulsdauer, auf der Phasenmaske, insbesondere am Ort des Auftreffens des Strahls auf der Phasenmaske, verändert, insbesondere räumlich auf dieser verschoben, wird.

Damit wird sozusagen ein Bereich von elliptischer Form auf der Phasenmaske zeitabhängig unterschiedlich ausgeleuchtet. Da dies ohne mechanische Bewegung, sondern durch Modulation der Laserstrahl-Intensität erfolgten kann, ist dies sehr zuverlässig möglich. Außerdem lassen sich unerwünschte Effekte, die ein gezieltes Einstellen der Energieverteilung im Material be- oder verhindern, verhindern, indem die zeitliche Entwicklung der Energieverteilung im Material kontrolliert wird.

Diese simultane räumlich-zeitliche Pulsformung (SSTF) ist sehr daher bevorzugt.

Alternativ oder ergänzend kann auch vorgesehen sein, dass mittels der mittels zumindest eines Teils des Linienfokus eingebrachten Energieverteilung (a) das Substrat zumindest bereichsweise in einer Materialeigenschaft, wie insbesondere seiner Dichte, sein Brechungsindex, seine Spannungswerte und/oder seiner Ätzrate, modifiziert wird, (b) Mikrorisse zumindest bereichsweise in dem Substratmaterial erzeugt werden und/oder (c) zumindest bereichsweise Material von dem Substrat entfernt und/oder verdrängt wird, wobei vorzugsweise in mehreren aufeinanderfolgenden Substratbereichen auf diese Weise das Substratmaterial entlang einer geraden oder beliebig geformten Kontur modifiziert, entfernt und/oder verdrängt, insbesondere das Substratmaterial in das umgebene Substratmaterial hineinverdichtet, wird.

Indem also das Substratmaterial in einer Eigenschaft verändert wird, wird die geplante Trennfläche bestimmt. Entsprechend ist auch die entsprechende Seitenfläche der Substratteile dadurch bestimmt.

Das Entfernen von Substratmaterial vom Substrat kann beispielsweise durch Verdampfen des Materials erfolgen. Das Verdrängen von Substratmaterial kann beispielsweise durch das Hineinverdichten von Substratmaterial in das umgebene Substrat erfolgen.

Die kontrollierte Energieverteilung kann daher allgemein als ein Mittel angesehen werden, mit dem im Substratmaterial die Modifikation, einschließlich einer Materialentfernung oder - verdrängung, erreicht wird. Denn die Energieverteilung wechselwirkt in einer hier nicht näher untersuchten und für das Verständnis der Erfindung nicht weiter relevanten Weise mit dem Substratmaterial, so dass es zu den finalen Modifikationen kommt.

Indem in mehreren Bereichen des Substrats entsprechendes Prozedere durchgeführt wird, können mehrere modifizierte Bereiche oder Bereiche mit entferntem/verdrängtem Substratmaterial erreicht werden. Durch diese wird sozusagen ein Korridor von Schädigungen vorgegeben, der gleichzeitig auch die geplante Trennfläche bestimmt. Beispielsweise kann durch mechanische oder thermische Einwirkung auf das Substrat das Trennen des Substrats in zwei Substratteile entlang der geplanten Trennfläche ausgelöst und/oder durchgeführt werden. Beispielsweise kann ein Riss in dem Korridor erzeugt und darin vorangetrieben werden. Alternativ oder ergänzend kann mit einem IR-Laser auf das Substrat eingestrahlt werden, um den Trennvorgang zu initiieren und/oder durchzuführen. Auch CO2-Cleaving ist eine bevorzugte Möglichkeit, um das Trennen des Substrats durchzuführen.

Die unterschiedlichen Bereiche können durch eine relative Verschiebung von Substrat und Linienfokus ausgewählt werden. Wenn die Verschiebung des Substrats um einen Zentimeter sehr viel mehr Zeit benötigt als die Pulsdauer des Lasers lang ist (beispielsweise mehr als das 100 fache), kann die Verschiebung vorzugsweise kontinuierlich stattfinden. Alternativ oder ergänzend kann eine maximal zulässige Verfahrgeschwindigkeit v auch ermittelt werden mit der Beziehung v = modification_size/Pulsabstand, worin die modification_size die maximale Ausdehnung der in das Substratmaterial einzubringenden Modifikation ist und der Pulsabstand der intraburst-Pulsabstand (beispielsweise 40 MHz) oder bei Einzelpulsen der Abstand zwischen zwei aufeinanderfolgende Pulse (beispielsweise 1/100 kHz) ist.

Vorzugsweise erfolgt die Verschiebung kontinuierlich mit einer Geschwindigkeit von 10 m/s oder weniger, vorzugsweise von 5 m/s oder weniger, vorzugsweise von 2 m/s oder weniger.

Unter einer Kontur wird dabei diejenige Kurve verstanden, die die Auftreffpunkte des Laserstrahls auf der Oberfläche des Substrats beschreiben. Die Kontur kann beispielsweise geradlinig oder kreisförmig sein, oder einen anderen, insbesondere beliebig gekrümmten, Verlauf aufweisen.

In einer Ausführungsform beträgt der, insbesondere maximale, Durchmesser der Materialmodifikation oder des Bereichs mit entferntem oder verdrängtem Material, insbesondere in einer Querschnittsebene senkrecht zur Haupterstreckungsrichtung der Modifikation, zwischen 1 $\mu$m und 100 $\mu$m, bevorzugt zwischen 1 $\mu$m und 50 $\mu$m, noch bevorzugter zwischen 1 $\mu$m und 20 $\mu$m, noch bevorzugter zwischen 1 $\mu$m und 10 $\mu$m.

Alternativ oder ergänzend kann auch vorgesehen sein, dass zwei oder mehr Linienfoki von zwei oder mehr Laserstrahlen innerhalb desselben Bereichs im Substrat, vorzugsweise zeitlich zumindest teilweise parallel und/oder zumindest teilweise sequentiell, entsprechend ausgebildet und die von ihnen in das Substrat eingebrachte Energieverteilung jeweils entsprechend kontrolliert werden,
wobei vorzugsweise (a) die von den einzelnen Linienfoki eingebrachten Energieverteilung, insbesondere hinsichtlich Position und/oder Gestalt, unterschiedlich sind, wobei vorzugsweise die Maxima der einzelnen Energieverteilungen an unterschiedlichen Positionen innerhalb des Substrats bestehen, und/oder (b) die Trajektorien der zwei oder mehr Linienfoki deckungsgleich sind.

Wenn mehrere Laserstrahlen eingesetzt werden, kann eine einzelne Modifikation selbst in dicken Substraten sehr schnell erzeugt werden. Es muss nämlich keine mechanische Bewegung von Komponenten des optischen Aufbaus erfolgen, um einen einzelnen Laserstrahl zu beeinflussen, insbesondere um die Energieverteilung bzw. ihr Maximum im Substrat zu verschieben. Stattdessen kann beispielsweise ein erster Laserstrahl ein Maximum der Energieverteilung im unteren Bereich der Modifikation und ein zweiter Laserstrahl ein Maximum der Energieverteilung im oberen Bereich der Modifikation aufweisen (wobei "oben" vorzugsweise dort ist, wo der Laserstrahl auf das Substrat auftrifft).

In einer Ausführungsform werden mehrere Strahlen dazu eingesetzt werden, um das Substrat parallel an zwei oder mehr lateral zueinander beabstandeten Positionen zu modifizieren.

Wenn die Strahlen, insbesondere Pulse, verschiedener Laserquellen eingesetzt werden, so sind die Laserquellen vorzugsweise gleichartige Laserquellen. Damit sind besonders gleichmäßige Modifikationen erzielbar.

Alternativ oder ergänzend kann auch vorgesehen sein, dass die Orientierung zumindest eines Abschnitts des Linienfokus innerhalb des Substrats relativ zur Hauptausbreitungsrichtung des Laserstrahls im Substrat durch das Kontrollieren der Energieverteilung innerhalb des Substrats und ferner durch Anpassen der Fokuslage im Substratmaterial eingestellt wird, wobei vorzugsweise das Anpassen der Fokuslage durch eine Änderung des Abstandes zwischen einer Fokussierungsoptik und Substrat erfolgt und/oder die Dicke des Substrats kleiner ist als die halbe für einen gegebenen optischen Aufbau potenziell mögliche Länge des Linienfokus entlang der Dickenerstreckung des Substrats, wobei vorzugsweise die Pulsenergie und/oder der Strahldurchmesser so gewählt sind, dass das Substrat in seiner gesamten Tiefe modifiziert wird oder nicht in seiner gesamten Tiefe modifiziert wird.

Da mit der Entfernung des Maximums der Energieverteilung vom Scheitelpunkt der Fokus-Trajektorie, insbesondere Airy-Fokus-Trajektorie, eine Änderung der lokalen Ausrichtung des Linienfokus relativ zur Strahlpropagationsrichtung bzw. Substratoberfläche einhergeht, kann mit einem kombinierten Strahlversatz, wie er für bevorzugte Ausführungsformen oben beschrieben wurde, und einer gleichzeitigen Anpassung der Fokuslage im Substratmaterial, beispielsweise also mit der erwähnten Änderung des Abstandes zwischen Fokussierungsoptik und Substrat oder einer Brennweitenänderung der fokussierenden Optik, eine Anpassung der Winkelausrichtung der Schädigungszone im Material vorgenommen werden.

Auf diese Art und Weise kann bei dünnen Gläsern ein kleiner Ausschnitt der Airy-Trajektorie benutzt werden, um einen, zumindest näherungsweise, geraden Linienfokus mit einstellbaren Winkel zur Propagationsrichtung zu erzeugen.

Vorteilhafterweise kann somit durch das Anpassen der Fokuslage im Substratmaterial, insbesondere durch eine Änderung des Abstandes zwischen einer Fokussierungsoptik und dem Substrat, eine Translation des Linienfokus im Substrat eingestellt werden und/oder durch Anpassen des Strahlversatzes auf entweder der Phasenmaske und/oder einer Optik, wie der Fokussieroptik, eine zumindest innerhalb gewisser Winkelbereiche freie Orientierung des zumindest einen Abschnitts des Linienfokus innerhalb des Substrats relativ zur Hauptausbreitungsrichtung des Laserstrahls im Substrat eingestellt werden.

Zusammen mit der Orientierung des zumindest einen Abschnitts des Linienfokus ändert sich vorteilhafterweise auch die Orientierung der in das Substratmaterial eingebrachten Modifikation. Dadurch kann in bevorzugter Weise durch das Anpassen des Versatzes eine Verkippung der Modifikation im Substratmaterial erreicht werden und/oder durch eine Anpassung der Fokuslage einen Versatz entlang der Laserpropagationsrichtung, der mit der Verkippung einhergeht, kompensiert und/oder die vertikale Position der verkippten Modifikation angepasst und/oder eingestellt werden.

Unter einer "Verkippung" der Modifikation im Substratmaterial wird dabei vorzugsweise eine Modifikation verstanden, welche unter bestimmten Randbedingungen in Bezug auf den optischen Aufbau sowie die Laserparameter, in das Substratmaterial eingebracht wurde, und welche eine räumliche Orientierung aufweist, die unterschiedlich ist zu einer räumlichen Orientierung einer, insbesondere gedanklichen, Referenz-Modifikation, wobei die Referenz-Modifikation bei einem eingestellten Versatz des Laserstrahls auf der Phasenmaske und/oder einer Optik, wie die Fokussieroptik, bei ansonsten identischen Randbedingungen, in das Substratmaterial einbringbar ist.

Vorteilhafterweise kann also durch das Verschieben der Energieverteilung entlang der Trajektorie des Linienfokus eine Verkippung der in das Substrat eingebrachten Modifikation eingestellt und/oder erreicht werden. Alternativ oder ergänzend wäre eine Verkippung auch durch eine Verkippung des Substrats denkbar, insbesondere im statischen Fall.

Es ist dabei bevorzugt, wenn das Anpassen der Fokuslage im Substratmaterial zeitabhängig durchgeführt wird, insbesondere die Fokuslage im Substratmaterial zeitabhängig verändert wird. Dies kann beispielsweise durch eine zeitabhängige Änderung des Abstandes zwischen der Fokussierungsoptik und Substrat erfolgen. Es handelt sich dabei also vorteilhafterweise um einen Anwendungsfall der dynamischen Beeinflussung. Optional kann es bevorzugt sein, parallel auch den Strahlversatz auf der Phasenmaske und/oder einer Optik, wie der Fokussieroptik, anzupassen. Das heißt, Fokuslage und Versatz werden in Abhängigkeit voneinander vorteilhafterweise angepasst.

Vorteilhafterweise wird eine Verkippung der Materialmodifikation durch eine Verschiebung des Intensitätsmaximums der Energieverteilung entlang der Trajektorie des Linienfokus eingestellt und/oder durchgeführt. Dadurch kann vorteilhafterweise eine asymmetrische Ausprägung der Materialmodifikation kompensiert werden.

Dabei ist es bevorzugt, dass die Substratdicke, entlang derer der Linienfokus ausgebildet wird, mindestens geringer ist als die halbe Ausdehnung der, insbesondere theoretisch und/oder praktisch, verfügbaren Fokus-Trajektorie in Glasdickenrichtung.

Beispielsweise sind Substrate mit einer Dicke von 500 μm oder weniger, vorzugsweise von 300 μm oder weniger, vorzugsweise von 100 μm oder weniger, vorzugsweise von 50 μm oder weniger, hierbei besonders bevorzugt. Alternativ oder ergänzend kann die Dicke auch zwischen 300 mm und 1000 μm betragen.

Der gekrümmte Linienfokus kann, insbesondere mit den vorstehend genannten Mitteln, beispielsweise mit Längen von mehr als 0,1 mm bis hin zu mehr als 3 mm, vorzugsweise von zwischen 0,1 mm und 5 mm, insbesondere von zwischen 0,5 mm und 3 mm, und/oder einer maximalen Auslenkung von der geraden Fokallinie von 500 μm, vorzugsweise von zwischen 10 μm und 200 μm, insbesondere von zwischen 20 μm und 80 μm, erzeugt werden.

Die räumliche Gestalt Krümmung und damit die räumliche Gestalt des beeinflussten Substratmaterials, ist abhängig von bzw. mitbestimmbar durch diese maximale Auslenkung, die auch als Profilhub bezeichnet werden kann.

Für die Einstellung der maximalen Auslenkung bzw. des Profilhubs kann die numerische Apertur A = n * sin (ALPHA) der fokussierenden Optik eingestellt und/oder angepasst werden. Allgemein gilt dabei: Je größer die numerische Apertur der fokussierenden Optik gewählt wird, desto kürzer wird die Länge des ausgebildeten Fokus und - im exemplarischen Falle eines Airy-Strahls - desto höher ist die Krümmung des Airy-Strahls in Fokusnähe.

Für den gekrümmten Linienfokus bedeutet dies, dass mit geringer werdender Dicke des Substrats die lokale Krümmung des Linienfokus erhöht werden muss, um einen nennenswerten Profilhub an der Trennfläche zu erzeugen.

Alternativ oder ergänzend kann auch vorgesehen sein, dass

(i) der Linienfokus ein Fokus eines Airy-Strahls ist,

(ii) der Linienfokus eine maximale Auslenkung von einem geraden Verlauf aufweist, die mehr als 20 μm, mehr als 40 μm, mehr als 60 μm, mehr als 80 μm oder mehr als 100 μm beträgt,

(iii) der Laserstrahl von einem gepulsten Laser ausgesendet wird,

(iv) die Wellenlänge des Laserstrahls ausgewählt ist aus dem Wellenlängenbereich von zwischen 200 nm und 1500 nm, vorzugsweise die Wellenlänge 343 nm, 355 nm, 515 nm, 532 nm, zwischen 750 nm und 850 nm, 1030 nm und/oder 1064 nm beträgt, das Mikroskopobjektiv bzw. die Fourierlinse einer Fokussieroptik, mit der vorzugsweise der Laserstrahl auf das Substrat fokussiert wird, eine Brennweite von 10-20 mm aufweist, der Koeffizient der kubischen Phase (Laser-Parameter Beta) einen Wert von zwischen $0,5 \times 10^3$/m und $5 \times 10^3$/m aufweist, der Durchmesser des Rohrstrahls (Laser-Parameter $\omega_0$) einen Wert von zwischen 1 mm und 10 mm, vorzugsweise von zwischen 2,5 mm und 7,5 mm, vorzugsweise von zwischen 2,5 und 5 mm, aufweist, die Pulsdauer (Laser-Parameter c) einen Wert von 0,1-10 ps aufweist, die Pulsenergie (Laser-Parameter $E_p$) einen Wert von zwischen 1 und 1.500 μJ, vorzugsweise von zwischen 30 und 500 μJ, insbesondere 474 μJ, aufweist, und/oder die Anzahl der Pulse im Burst (Laser-Parameter N) einen Wert von zwischen 1 und 200, vorzugsweise von zwischen 1 und 100, insbesondere von zwischen 1 und 8, aufweist, und/oder

(v) die Pulsenergie des Lasers nur dazu ausreicht, entlang eines bestimmten Abschnitts des Linienfokus das Substrat in wenigstens einer Materialeigenschaft zu modifizieren oder Material von dem Substrat zu entfernen oder zu verdrängen, wobei der Abschnitt kürzer ist als die Ausdehnung des Substratbereichs, der in seiner Materialeigenschaft modifiziert oder der entfernt oder verdrängt werden soll.

Ein Airy-Strahl lässt sich zuverlässig erzeugen und weist einen gekrümmten Linienfokus auf.

Ein Laserstrahl, dessen Linienfokus vorliegend eingesetzt wird, kann mit bekannten Mitteln entlang eines optischen Pfades gelenkt und kontrolliert werden. Der Linienfokus kann mit unterschiedlichen Mitteln, wie optischen Elementen, eingestellt und angepasst werden. Damit kann ein elektromagnetisches Feld innerhalb des Substratkörpers erzeugt werden, das jede räumliche Gestalt annehmen kann, die mit Mitteln der Strahlformung und Strahlbeeinflussung erzielbar ist. Vorzugsweise wird ein Airy-Strahl erzeugt.

Ein Laserstrahl mit Linienfokus stellt damit ein äußerst flexibles Mittel dar, das Substrat in einem gekrümmten Bereich zu modifizieren.

Bei der Bearbeitung von Substratkörpern mittels Laser ist generell zwischen Prozessen linearer und nichtlinearer Absorption zu unterscheiden. Lineare Absorption liegt vor, wenn das zu bearbeitende Material für die Wellenlänge des verwendeten Lasers teil- oder komplettabsorbierend ist (Bsp.: Absorption von CO2-Laserstrahlung in Glas), so dass entsprechend über Laserwellenlänge, -energie, Pulsdauer und dergleichen die Stärke der Wechselwirkung eingestellt werden kann. Hiervon zu unterscheiden sind die Prozesse der nichtlinearen Absorption, bei der das zu bearbeitende Material im Bereich der verwendeten Laserstrahlung zunächst keine Absorption aufweist, also transparent für die Laserwellenlänge(n) ist. Durch Erzeugen sogenannter ultrakurzer Laserpulse (typische Pulslängen bewegen sich hierbei im Bereich 10 ps bis 100 fs, insbesondere im Bereich 1 ps bis 100 fs) können aber im Substratmaterial durch den Laser ausreichend hohe Intensitäten erzeugt werden, für die nichtlineare optische Effekte relevant werden. Diese können beispielsweise eine Änderung der effektiven Brechzahl oder das Erzeugen eines Plasmas im Substratmaterial umfassen. Wird dabei genug Energie in geeigneter Verteilung im Material deponiert, so erzeugt der Laserstrahl eine bleibende Beeinflussung im Material. Die hierdurch erzeugten lokalen Änderungen des Materials erstrecken sich von permanenten Änderungen des Brechungsindex, Änderung des Ätzverhaltens (selektives Laseretching) bis hin zum Erzeugen von Rissen und Kanälen im Substrat, jeweils abhängig von dem Zusammenspiel der Laser- und Materialparameter und begrenzt auf wenigstens einen Bereich des gebildeten Laserfokus im Material.

Die Erfinder gehen bisher davon aus, dass die im Substrat deponierte Energie einerseits als Ergebnis der nichtlinearen Wechselwirkung des elektromagnetischen Felds des Laserpulses mit dem Substratmaterial und andererseits als Ursache der Modifikation im Substrat angesehen werden kann. Ohne Betrachtung der spezifischen Schädigungsmechanismen im Material kann daher die deponierte Energie, die mit geeigneten Modellen für die nichtlineare Laserpulspropagation simuliert werden kann, als Stellvertreter für die Ausprägung der Materialmodifikation genutzt werden.

Beispielsweise liegt die kritische Intensität für ein Glassubstrat, um darin eine nichtlineare Änderung von Materialeigenschaften, insbesondere aber ein zur Materialbearbeitung geeignetes Plasma, hervorzurufen, bei wenigstens $10^{13}$ W/cm$^2$. In einer Ausführungsform weist das Substratmaterial Glas auf und das elektromagnetische Feld des Lasers weist eine Feldstärke von wenigstens $10^{13}$ W/cm$^2$, vorzugsweise von wenigstens $5 \times 10^{13}$ W/cm$^2$, vorzugsweise von wenigstens $10^{14}$ W/cm$^2$, am bevorzugtesten von wenigstens $5 \times 10^{14}$ W/cm$^2$ auf. Optional weist das elektromagnetische Feld eine Feldstärke von maximal $10^{16}$ W/cm$^2$ auf.

Ein möglicher Aufbau zur erfindungsgemäßen Erzeugung eines gekrümmten Linienfokus kann im Prinzip wie folgt gestaltet werden: Der Laserstrahl eines Ultrakurzpulslasers trifft auf ein diffraktives optisches Element (DOE), der die Phase des einfallenden Laserstrahls (Laserpulses) durch Aufprägen einer Phase, wie eine kubische Phase, anpasst. Anschließend wird der Strahl durch ein Mikroskopobjektiv und/oder auf eine Fourierlinse auf den zu strukturierenden Substratkörper fokussiert. Abhängig von der sich einstellenden Phasenverteilung hinter dem DOE erzeugt das abbildende Objektiv nun nicht mehr eine gerade, sondern eine gekrümmte Fokallinie. In einer Ausführungsform können auch die Nebenmaxima des Airy-Strahls unterdrückt werden. Dabei kann das Intensitäts-Verhältnis des Hauptfokus zum Rest des Strahls optimiert werden (1,2 -10). Das kann beispielsweise realisiert werden durch die nicht radialsymmetrischen Apodisierung in der Fourier-Ebene mittels einer Blende.

Beispielsweise hat ein als Phasenmaske eingesetztes DOE einen Durchmesser von 5-15 mm, vorzugsweise 9 mm, wobei das DOE in der "Front focal plane" des Mikroskopobjektivs bzw. der Fourierlinse liegt. Vorzugsweise hat das DOE (oder allgemein gesprochen die Phasenmaske) einen Arbeitsabstand von der betreffenden Linse, der gleich der Brennweite der Linse ist und/oder zwischen 2-15 mm, vorzugsweise 5 mm, beträgt. Wenn bei einem Mikroskopobjektiv die "front focal plane" im Objektiv selbst liegt, ist in diesen Fällen vorzugsweise der minimal (baulich bedingte) Abstand zu wählen.

Beispielsweise kann vorliegend ein Airy-Strahl zum Einsatz kommen. Ein Airy-Strahl eignet sich besonders gut für eine asymmetrisch/seitlich Strahlzuführung.

Ein Airy-Strahl lässt sich außerdem besonders einfach und effizient erzeugen. Beispielsweise kann sich ein Airy-Strahl als Abbildung eines Strahls mit kubischer Phase, die insbesondere entweder direkt durch eine Phasenmaske (DOE oder SLM) oder einen Aufbau mit Zylinderlinsen erzeugt wird, ergeben.

Als Pulsenergie (Laser-Parameter $E_p$) kann beispielsweise ein Wert von 300 $\mu$J, als die Anzahl der Pulse im Burst (Laser-Parameter N) kann beispielsweise ein Wert von 2, und/oder als Pulsdauer (Laser-Parameter c) kann beispielsweise ein Wert von 5 ps gewählt werden. Optional kann die Brennweite der Optik f=10 mm betragen und/oder ein x2,0 Strahlaufweiter (insbesondere bei einem Eingangs-Gauß-Strahl mit Durchmesser 10 mm) kann vorgesehen sein.

Durch geeignete Wahl des optischen Setups (insbesondere Festlegen des vertikalen Abstandes zwischen fokussierender Optik und zu dem zu bearbeitenden Substratmaterial, also der Fokuslage und -länge), können auf diese Art und Weise gekrümmte Modifikationen im Innern oder auch eine der beiden oder beide Großflächen (Grund- und/oder Deckfläche) durchstoßend im Substratmaterial hergestellt werden.

Wenn die Pulsenergie größer als ein vom Material des Substrats abhängiger Schwellenwert ist, kann eine nichtlineare Wechselwirkung zwischen Laser und Material stattfinden, die zu den besprochenen Modifikationen führen kann. Daher ist ein einer Ausführungsform bevorzugt, dass die Pulsenergie größer als ein vom Material des Substrats abhängiger Schwellenwert ist, so dass eine nichtlineare Wechselwirkung zwischen Laser und Material stattfindet.

Alternativ oder ergänzend kann auch vorgesehen sein, dass die innerhalb des Substrats modifizierten Bereiche durch Erzeugen einer mechanischen und/oder thermischen Spannung und/oder durch ein Ätzverfahren geöffnet werden, insbesondere um ein Durchgangsloch und/oder ein Sackloch innerhalb des Substratmaterials zu erzeugen, und/oder

dass entlang einer geschlossenen Kontur und/oder entlang einer von Substratseite zu Substratseite verlaufenden Modifikation durch mechanische, thermische und/doer chemische Prozesse geöffnet werden, insbesondere um eine Innen- oder Außenkontur mit geformter Seitenfläche zu erzeugen.

Alternativ oder ergänzend kann auch vorgesehen sein, dass zumindest während dem Kontrollieren der Energieverteilung zumindest ein Hilfs-Substrat an dem Substrat angeordnet ist und sich der Linienfokus zumindest teilweise in das Hilfs-Substrat hineinerstreckt, wobei vorzugsweise zwei oder mehr Hilfs-Substrate an dem Substrat angeordnet sind, insbesondere an gegenüberliegenden Seiten des Substrats, und sich der Linienfokus zumindest teilweise in zwei oder mehr Hilfs-Substrate hineinerstreckt.

Vorzugsweise ist das Hilfs-Substrat aus dem gleichen Material wie das Substrat.

Mit einem solchen Hilfs-Substrat können Ablationsanteile oder -effekte auf den freien Substratoberflächen bei durchstoßendem Linienfokus vermieden oder zumindest erheblich reduziert werden.

Beispielsweise kann in einer Ausführungsform das zu strukturierende Substrat mit einem angesprengten, angebondeten und/oder ultrakurzpulsgeschweißten Hilfs-Substrat gemeinsam prozessiert werden, so dass während des Prozessierens zunächst nur innere Beeinflussungen erzeugt werden und diese in einem weiteren Prozessschritt (beispielsweise als Debonding beschreibbar) durch Entfernen des Hilfs-Substrat sozusagen freigelegt werden.

Durch das Vorsehen eines Hilfs-Substrats kann damit auch im oberflächennahen Bereich des Substrats eine besonders gezielte und den Vorgaben entsprechende Beeinflussung der Energieverteilung und/oder des Substrats erfolgen. Denn aufgrund des Hilfs-Substrats kann der Linienfokus auch über das Substrat hinausgehen, ohne dass der Verlauf des Linienfokus beeinträchtigt oder nennenswert beeinträchtigt wird. Damit ist sichergestellt, dass der Linienfokus auch im oberflächennahen Bereich des Substrats nicht von der gewünschten Form abweicht, und dass die Energieverteilung entsprechend der Vorgabe eingestellt und/oder das Substratmaterial entsprechend der Vorgabe räumlich beeinflusst werden kann.

Insbesondere wenn das Hilfs-Substrat und das Substrat aus gleichem Material sind, ist sichergestellt, dass an der Grenzfläche zwischen beiden ein nahtloser und vor allem versatzloser Übergang des Linienfokus besteht.

Anschließend kann das oder die Hilfs-Substrate von dem Substrat entfernt werden. Damit wird das eigentliche Substrat mit etwaig beeinflusstem Substratmaterial wieder freigelegt.

Mit anderen Worten, wenn das Hilfs-Substrat wieder entfernt wird, kann in dem Substrat eine saubere Beeinflussung bis zur Außenoberfläche des Substrats erreicht werden.

Es können ein oder mehrere Hilfs- Substrate vorgesehen werden.

Das oder die Hilfs-Substrate können das Substrat umgeben, es sozusagen von einer oder mehreren Seiten umschließen.

Durch das Hilfs-Substrat wird zuverlässig vermieden, dass infolge von Ablationseffekten Ansammlungen von Substratmaterial im Randbereich einer Oberfläche auftreten.

Alternativ oder ergänzend kann auch vorgesehen sein, dass der Linienfokus, und vorzugweise der modifizierte Materialbereich des Substrats, insbesondere zumindest während dem Kontrollieren der Energieverteilung, vollständig innerhalb des Substrats eingeschlossen ist,

und wobei vorzugsweise das Verfahren ferner aufweist, dass zumindest bereichsweise Material von dem Substrat, insbesondere entlang der Haupterstreckungsrichtung des Linienfokus innerhalb des Substrats, entfernt und dadurch das in dem Substrat eingeschlossene modifizierte Material zumindest teilweise und/oder bereichsweise von außen zugänglich gemacht wird, insbesondere das Entfernen von Material von dem Substrat mittels Ätzen durchgeführt wird.

Indem der Linienfokus also vollständig innerhalb des Substrats liegt, können Ablationsanteile oder -effekte auf den - sowohl ursprünglichen als auch erhaltenen - Oberflächen des Substrats zuverlässig vermieden werden.

Mit den vorgeschlagenen Merkmalen erfolgt nämlich die Deponierung von Energie und die Beeinflussung von Substratmaterial nur in einem Bereich, der im Innern des Substrats liegt. Der also von außen nicht zugänglich ist. Dadurch wird der Verlauf des Linienfokus nicht beeinträchtigt oder nicht nennenswert beeinträchtigt. Damit ist sichergestellt, dass der Linienfokus nicht von der gewünschten Form abweicht, und/oder dass das Substratmaterial entsprechend der Vorgabe räumlich beeinflusst wird.

Anschließend kann Substratmaterial von dem Substrat entfernt werden, bis etwa das beeinflusste Substratmaterial erreicht wird (oder auch darüber hinaus). Beispielsweise hat sich hierfür ein entsprechender Ätzvorgang als vorteilhaft herausgestellt, da dieser präzise und effizient durchgeführt werden kann. Auf diese Weise kann eine neue Oberfläche beispielsweise zumindest eine neue, zumindest vorübergehende, Deckfläche des Substrats, ausgebildet werden. Durch das Entfernen des Substratmaterials wird der beeinflusste Materialbereich von außen zugänglich. Dadurch ist es etwa möglich, das beeinflusste Substratmaterial anschließend zu entfernen.

Auf diese Weise können sehr zuverlässig definierte beeinflusste Materialbereiche im Substrat erreicht werden, die bis zur Oberfläche des final bearbeiteten Substrats reichen. Dadurch wiederum ist auch eine saubere Oberfläche realisierbar.

Beispielsweise wird durch das Entfernen von Material von dem Substrat wenigstens eine, vorzugsweise beide, Deckfläche des Substrats verändert. Sozusagen kann hier eine Verlagerung der Deckfläche stattfinden, etwa entlang der Haupterstreckungsrichtung des Linienfokus.

Die Haupterstreckungsrichtung des Linienfokus kann hierbei beispielsweise senkrecht zu einer ursprünglichen und/oder modifizierten Deckfläche des Substrats verlaufen.

Alternativ oder ergänzend kann auch vorgesehen sein, dass das Kontrollieren der Energieverteilung innerhalb des Substrats ferner aufweist, dass (i) der Laserstrahl, insbesondere wenigstens im Bereich des Linienfokus, eine sphärische Aberration aufweist und/oder (ii) eine sphärische Aberration des Laserstrahls, insbesondere wenigstens im Bereich des Linienfokus, eingestellt wird.

Es wurde insoweit überraschend erkannt, dass eine im Vergleich zum ursprünglichen Airy-Strahl gleichmäßigere und ausgedehntere Energieverteilung im Substrat eingebracht werden kann, indem der Laserstrahl eine sphärische Aberration aufweist. Dadurch kann eine bessere Ausprägung des im Substrat modifizierten Bereichs erreicht werden. Damit können unerwünschte Schädigungen des Substratmaterials reduziert oder sogar ganz vermieden werden und/oder es kann für eine hinsichtlich Ausprägung vorgegebene Ziel-Energieverteilung und Ziel-Modifikation die Energie des Laserpulses reduziert werden.

Außerdem kann vorteilhafterweise durch Einstellen der sphärischen Aberration eine Position der Maximal-Intensität der Energieverteilung entlang der, vorzugsweise ortsfesten, Linienfokus-Trajektorie eingestellt werden und/oder durch Verändern der sphärischen Aberration eine Position der Maximal-Intensität der Energieverteilung entlang der, vorzugsweise ortsfesten, Linienfokus-Trajektorie angepasst, insbesondere verschoben, werden.

Das ermöglicht es besonders vorteilhaft, eine zumindest bereichsweise und/oder abschnittsweise Homogenisierung der Intensität, insbesondere entlang der Trajektorie des Linienfokus, zu erreichen. Und zwar insbesondere ohne die Trajektorie des Linienfokus, insbesondere dessen Hauptmaximums, zu verändern.

Die sphärische Aberration hat vorzugsweise die Einheit $12.5/f^3$, mit der Brennweite des abbildenden Systems f.

Wenn in dieser Anmeldung davon gesprochen wird, dass der Laserstrahl eine sphärische Aberration aufweist, so wird darunter vorzugsweise verstanden, dass die Lichtstrahlen des Laserstrahls nicht in einem speziellen Punkt zusammenlaufen und/oder, dass eine oder mehrere rotationssymmetrische Phasen gerader Potenz > 2 vorliegen, beispielsweise ein zusätzlicher Phasenterm vierter Ordnung, welche zu einer Änderung der effektiven Brennweite entlang des Radius der Optik führen.

Vorteilhafterweise könnte die sphärische Aberration des Strahls mit einer Optik, welche eine Linse mit sphärischer Aberration aufweist, deren Phase folgender Gleichung genügt, eingebracht werden:

$$\phi_{\text{lens}}(\rho) = k0 * (\frac{\rho^2}{2f} + a\rho^4)$$

Alternativ oder ergänzend kann auch vorgesehen sein, dass der Laserstrahl, vorzugsweise außerhalb des Substrats und/oder vor dem Substrat, durch ein optisches Element mit sphärischer Aberration propagiert, und dadurch vorzugsweise die sphärische Aberration des Laserstrahls, insbesondere wenigstens im Bereich des Linienfokus, zumindest teilweise eingestellt wird.

Dies ist eine besonders einfache und doch effiziente Möglichkeit, die sphärische Aberration des Laserstrahls einzustellen und zu kontrollieren.

Alternativ oder ergänzend kann auch vorgesehen sein, dass die sphärische Aberration vierter Ordnung eine Stärke von 0.02/(f*w0^2) oder mehr aufweist, wobei f die Brennweite des abbildenden Systems und w0 der Durchmesser des Laserstrahls ist.

Dies ist besonders vorteilhaft für typische Energieverteilungen zum Einbringen von Modifikationen in Glassubstraten.

Alternativ oder ergänzend kann auch vorgesehen sein, dass durch die sphärische Aberration eine Verlängerung des innerhalb des Substrats ausgebildeten Fokus um 5 % oder mehr, vorzugsweise um 10 % oder mehr, vorzugsweise um 15 % oder mehr, vorzugsweise um 20 % oder mehr, vorzugsweise um 25 % oder mehr, vorzugsweise um 30 % oder mehr, vorzugsweise um 35 % oder mehr, vorzugsweise um 40 % oder mehr, vorzugsweise um 50 % oder mehr, vorzugsweise um 60 % oder mehr, und/oder um 100 % oder weniger, vorzugsweise um 70 % oder weniger, vorzugsweise um 50 % oder weniger, vorzugsweise um 30 % oder weniger, erreicht wird, wobei vorzugsweise die Fokuslänge entlang eines Abschnitts der Laserstrahltrajektorie besteht, bei der der Linienfokus eine Intensität aufweist, die 75% oder mehr, 80 % oder mehr, 85 % oder mehr oder 90 % oder mehr der Maximal-Intensität des Linienfokus ist.

Dazu kann beispielsweise die Länge des innerhalb des Substrats ausgebildeten Fokus (nämlich des Linienfokus) mit und ohne eingestellter und/oder kontrollierter sphärischer Aberration vergleichen werden.

Alternativ oder ergänzend kann auch vorgesehen sein, dass durch die sphärische Aberration eine Verlängerung des modifizierten Substratmaterials um 5 % oder mehr, vorzugsweise um 10 % oder mehr, vorzugsweise um 15 % oder mehr, vorzugsweise um 20 % oder mehr, vorzugsweise um 25 % oder mehr, vorzugsweise um 30 % oder mehr, vorzugsweise um 35 % oder mehr, vorzugsweise um 40 % oder mehr, vorzugsweise um 50 % oder mehr, vorzugsweise um 60 % oder mehr, und/oder um 100 % oder weniger, vorzugsweise um 70 % oder weniger, vorzugsweise um 50 % oder weniger, vorzugsweise um 30 % oder weniger, erreicht wird, wobei vorzugsweise entlang der Länge eine Modifikationsintensität besteht, bei der die Modifikation eine Intensität aufweist, die 75% oder mehr, 80 % oder mehr, 85 % oder mehr oder 90 % oder mehr der Maximal-Intensität der Modifikation ist.

So lässt sich auch direkt am bearbeiteten Substrat der Unterschied feststellen.

Alternativ oder ergänzend kann auch vorgesehen sein, dass die sphärische Aberration des Laserstrahls, insbesondere im Bereich des Linienfokus, zeitlich variiert wird, insbesondere durch eine zeitliche Variation des Auftreffpunktes des Laserstrahls auf der Phasenmaske und/oder einem optischen Element, wie einem Mikroskopobjektiv, des optischen Aufbaus.

Dadurch kann besonders einfach eine zeitliche Tiefenvariation der Materialmodifikation erreicht werden. Beispielsweise kann die Materialmodifikation "von unten nach oben" ausgebildet werden, indem die sphärische Aberration verändert und dadurch der Linienfokus und mit ihm die Energieverteilung zeitabhängig verlängert und/oder deren/dessen Intensitäts-Maximum verschoben wird.

Alternativ oder ergänzend kann auch vorgesehen sein, dass der Mittelpunkt des auf das optische Element auftreffenden Laserstrahls zumindest zeitweise mit einem Versatz zu der optischen Achse des optischen Elements auf dem optischen Element auftrifft, wobei vorzugsweise der Versatz zeitlich variiert wird.

Dies kann besonders einfach realisiert sein, beispielsweise indem der Laserstrahl und/oder das optische Element relativ zueinander bewegt werden.

Alternativ oder ergänzend kann auch vorgesehen sein, dass ein konstanter und/oder maximaler Versatz von 20 mm oder weniger, vorzugsweise von 15 mm oder weniger, vorzugsweise von 10 mm oder weniger, vorzugsweise von 5 mm oder weniger, vorzugsweise von 3 mm oder weniger, vorzugsweise von 2,5 mm oder weniger, vorzugsweise von 2 mm oder weniger, vorzugsweise von 1,5 mm oder weniger, vorzugsweise von 1 mm oder weniger, von 0,001 mm oder mehr, vorzugsweise von 0,003 mm oder mehr, vorzugsweise von 0,01 mm oder mehr, vorzugsweise von 0,1 mm oder mehr, vorzugsweise von 1 mm oder mehr, vorzugsweise von 5 mm oder mehr, vorzugsweise von 10 mm oder mehr, vorzugsweise von 15 mm oder mehr, und/oder von zwischen 0,001 mm und 20 mm, vorzugsweise von zwischen 0,001 mm und 10 mm, vorzugsweise von zwischen 0,003 mm und 10 mm, vorzugsweise von zwischen 0,003 mm und 5 mm, vorzugsweise von zwischen 0,003 mm und 2 mm, vorzugsweise von zwischen 0,003 mm und 1,5 mm, eingestellt wird.

Alternativ oder ergänzend kann auch vorgesehen sein, dass das optische Element eine Linse ist, wobei die Linse vorzugsweise zumindest bereichsweise eine sphärische Krümmung aufweist.

Dies ist eine besonders einfache und günstige Möglichkeit, den Laserstrahl kontrolliert mit einer sphärischen Aberration auszustatten.

Alternativ oder ergänzend kann auch vorgesehen sein, dass die sphärische Aberration eine sphärische Aberration vierter oder höherer Ordnung ist.

Hiermit wurden besonders gute Ergebnisse erreicht.

Alternativ oder ergänzend kann auch vorgesehen sein, dass die sphärische Aberration eine sphärische Aberration gemäß Zernicke-Polynomen mit Indices $m=0$ und $n = 2k$ für ganzzahliges $k>2$ ist.

Hiermit wurden besonders gute Ergebnisse erreicht.

Alternativ oder ergänzend kann auch vorgesehen sein, dass die sphärische Aberration und die Beeinflussung des Laserstrahls mittels der Phasenmaske aufeinander abgestimmt werden, insbesondere indem der, vorzugsweise zeitlich variierende, Auftreffpunkt des Laserstrahls auf das optische Element und der, vorzugsweise zeitlich variierende, Auftreffpunkt des Laserstrahls auf die Phasenmaske aufeinander abgestimmt werden.

Durch das Zusammenspiel zweier unabhängiger Mechanismen kann eine besonders gute Kontrolle der im Substrat eingebrachten Energieverteilung erreicht werden.

Alternativ oder ergänzend kann auch vorgesehen sein, dass durch das Einstellen der sphärischen Aberration die Energieverteilung, die Intensität und/oder die Intensitätsverteilung des entlang der Haupterstreckungsrichtung des Linienfokus hinteren Endabschnitts des Linienfokus einstellbar, insbesondere veränderbar, wie vergrößerbar, ist.

Hier wird sich vorteilhafterweise der Effekt zu Nutzen gemacht, dass die sphärische Aberration zu einer asymmetrischen Beeinflussung des Linienfokus und der Energieverteilung führt (insbesondere ausgeprägt auf nur einer Seite des ursprünglichen Fokus). So lässt sich der Effekt nutzen, um eine bevorzugte Energiedeposition aufgrund nichtlinearer Effekte vor dem linearen Fokus zu kompensieren, indem der verstärkte Bereich hinter dem linearen Fokus platziert wird.

Alternativ oder ergänzend kann auch vorgesehen sein, dass durch das Einstellen der sphärischen Aberration die Positionierung der Energieverteilung entlang des Linienfokus, insbesondere entlang der, vorzugsweise ortsfesten, Trajektorie des Linienfokus, veränderbar und/oder einstellbar ist.

Alternativ oder ergänzend kann auch vorgesehen sein, dass das Kontrollieren der Energieverteilung innerhalb des Substrats ferner aufweist, dass die Wellenlänge des Laserstrahls zeitabhängig, insbesondere kontinuierlich oder diskret, verändert wird, und wobei vorzugsweise innerhalb des Strahlengangs des Laserstrahls, vorzugsweise vor dem Substrat, ein optisches Element vorgesehen ist, das den Laserstrahl wellenlängenabhängig bricht.

Das optische Element kann beispielsweise ein Prisma sein, das vorzugsweise in dem Strahlengang des Laserstrahls platziert ist.

Alternativ oder ergänzend kann auch vorgesehen sein, dass der Laserstrahl zumindest abschnittsweise, insbesondere in der Ebene der Phasenmaske, einen zumindest zeitweisen langgestreckten, insbesondere rechteckförmigen oder ovalförmigen, beispielsweise elliptischen, Strahl-Querschnitt aufweist, wobei vorzugsweise der Strahlquerschnitt zeitlich verändert wird, insbesondere zwischen kreisförmig und ovalförmig.

Mit einem rechteckigen Strahlquerschnitt kann eine besonders konstante Intensitätsverteilung entlang der Propagation erreicht werden.

Es wurde überraschend erkannt, dass ein Laserstrahl mit einem von einer Kreisfläche abweichenden Querschnitt (vor allem auf der Phasenmaske) einen Linienfokus aufweisen kann, der reduzierte Nebenmaxima haben kann. Dadurch können unerwünschte, durch Nebenmaxima verursachte, Modifikationen im Substrat vermieden oder zumindest reduziert werden.

Vorzugsweise ist der Laserstrahl dabei ein elliptischer Strahl. Ein elliptischer Strahl ist vorzugsweise dadurch gekennzeichnet, dass die Strahldurchmesser entlang zweier zueinander orthogonaler Hauptachsen voneinander abweichen. Ein elliptischer Strahl kann erzeugt werden, indem der Strahldurchmesser eines rotationssymmetrischen Strahls in einer Raumrichtung durch entsprechende Optiken, z.B. ein Teleskop aus Zylinderlinsen, angepasst, insbesondere aufgeweitet oder verkleinert, wird.

Mit der vorgeschlagenen Ausbildung des Laser-Querschnitts kann der Kontrast des Linienfokus erhöht werden, da die Intensität des Hauptmaximums im Vergleich jeweils zu der Intensität der Nebenmaxima erhöht werden kann. Außerdem wurde eine Orientierung der Nebenmaxima beobachtet, wobei die Nebenmaxima weitestgehend parallel zur geplanten Trennfläche verlaufen. Dadurch beeinflussen die Nebenmaxima das Einbringen der Modifikation im Substrat nicht oder nur geringfügig.

Außerdem sind mit der vorgeschlagenen Ausbildung des Laser-Querschnitts Nebenmaxima des Linienfokus erreichbar, welche gewissermaßen verschmieren, so dass benachbarte Nebenmaxima ineinander übergehen. Dadurch kann eine besonders gute Qualität der Schnittfläche erreicht werden.

In Verbindung mit der vorgeschlagenen Ausbildung des Laser-Querschnitts kann vorteilhafterweise eine Riss-Orientierung innerhalb des Substrats beim oder zum Ausbilden der Trennfläche bzw. beim oder zum Teilen des Substrats erreicht werden, die im Wesentlichen entlang der durch die Hauptmaxima des Linienfokus erzeugten Modifikationen im Substrat verläuft. Alternativ oder ergänzend ist die Riss-Orientierung kollinear zu dem gewünschten Schnitt. Dadurch kann jeweils eine besonders gute Qualität der Schnittfläche erreicht werden.

Vorzugsweise verlaufen dabei die durch die Nebenmaxima des Linienfokus verursachten Materialmodifikationen, insbesondere in einer Querschnittsebene senkrecht oder parallel zu einer Deckfläche des Substrats, im Wesentlichen parallel zu der geplanten Schnittfläche und/oder linienförmig. Dies kann beispielsweise durch eine geeignete Orientierung von Substrat und Laserstrahl (insbesondere mit langgestrecktem Strahlquerschnitt) zueinander erreicht werden.

Vorzugsweise sind dabei die durch die Nebenmaxima des Linienfokus verursachten Materialmodifikationen innerhalb des Substratmaterials zwiebelschalenartig zueinander angeordnet.

Alternativ oder ergänzend kann auch vorgesehen sein, dass mehrere Materialmodifikationen in das Substrat eingebracht werden, wobei der Abstand benachbarter Materialmodifikationen, insbesondere der Abstand der Schwerpunkte der Materialmodifikationen und/oder in einer Querschnittsebene parallel zu einer Deckfläche des Substrats, 1 $\mu$m oder mehr, vorzugsweise 3 $\mu$m oder mehr, vorzugsweise 5 $\mu$m oder mehr, vorzugsweise 7 $\mu$m oder mehr, vorzugsweise 10 $\mu$m oder mehr, vorzugsweise 15 $\mu$m oder mehr, vorzugsweise 20 $\mu$m oder mehr, beträgt.

Insbesondere in Verbindung mit einem Laserstrahl mit einem von einer Kreisfläche abweichenden Querschnitt lässt sich überraschenderweise eine besonders zuverlässige Ausbildung einer Trennfläche erreichen, trotz vergleichsweise großer Abstände (sogenannte "Pitches") benachbarter Modifikationen von beispielsweise 1 $\mu$m oder mehr und vorzugsweise sogar von 10 $\mu$m oder mehr, von 20 $\mu$m oder mehr, von 30 $\mu$m oder mehr, von 40 $\mu$m oder von 50 $\mu$m oder mehr. Bei solch relativ großen Abständen kann eine Beeinflussung des Linienfokus durch eine benachbarte, insbesondere zeitversetzt oder zeitgleich eingebrachte, Modifikation vermieden oder zumindest reduziert werden.

Es können also folglich durch den vorgeschlagenen Abstand Wechselwirkungen zwischen benachbarten Bereichen im Substrat mit Modifikationen vermieden oder jedenfalls reduziert werden.

Insbesondere sind die Ausläufer der lateral winklig/pfeilartig ausgeprägten Modifikationen (insbesondere verursacht durch die Nebenmaxima des Linienfokus) durch einen entsprechenden Abstand generell nur in reduziertem Umfang oder gar nicht überlappend. Durch Wahl eines langgezogenen Strahlquerschnitts können diese Ausläufer sogar nochmals reduziert werden, so dass zusammen mit dem größeren Abstand benachbarter Pitches eine zuverlässige Materialmodifikation an mehreren Stellen erfolgen kann. So kann sichergestellt werden, dass die Propagation des Laserstrahls im Material nicht oder nur geringfügig durch vorhergehende und/oder benachbarte Modifikationen gestört wird.

Die Erfindung ermöglicht, dass ein Substrat aufweisend zumindest eine erste Deckfläche, zumindest eine, vorzugsweise parallel zur ersten Deckfläche verlaufenden, zweite Deckfläche und zumindest eine, insbesondere lasergebrochene, Seitenfläche, die sich vorzugsweise zumindest bereichsweise zwischen der ersten und der zweiten Deckfläche erstreckt,

wobei in einer Querschnittsebene des Substrats, die durch eine Ebene, die wenigstens einen Normalenvektor der Seitenfläche und einen Normalenvektor der ersten Deckfläche aufweist, aufgespannt wird, die Kontur der Seitenfläche einen Scheitelpunkt aufweist, der zwischen den beiden Deckflächen angeordnet ist, und wobei vorzugsweise (i) der Scheitelpunkt (a) mittig zwischen den beiden Deckflächen angeordnet ist, und/oder (b) mit einem, insbesondere vertikalen, Abstand zur mittigen Lage zwischen den beiden Deckflächen angeordnet ist, insbesondere der, insbesondere vertikale, Abstand entlang einer Richtung parallel zum Normalenvektor der ersten Deckfläche (aa) mehr als 0,1 %, vorzugsweise mehr als 1 %, vorzugsweise mehr als 5 %, vorzugsweise mehr als 10 %, vorzugsweise mehr als 20 %, vorzugsweise mehr als 30 %, vorzugsweise mehr als 40 %, vorzugsweise mehr als 45 %, der Dicke des Substrats, (bb) weniger als 50 %, vorzugsweise weniger als 45 %, vorzugsweise weniger als 35 %, vorzugsweise weniger als 25 %, vorzugsweise weniger als 15 %, vorzugsweise weniger als 10 %, vorzugsweise weniger als 5 %, vorzugsweise weniger als 3 %, vorzugsweise weniger als 1 %, der Dicke des Substrats und/oder (cc) zwischen 0,1 % und 49 %, vorzugsweise zwischen 0,1 % und 10 % oder zwischen 1 % und 40 %, vorzugsweise zwischen 5 % und 30 %, vorzugsweise zwischen 10 % und 25 %, der Dicke des Substrats beträgt, (ii) die Seitenfläche zumindest bereichsweise höhenmoduliert ist, insbesondere eine wellenartige und/oder kalottenförmige Struktur aufweist, vorzugsweise entlang der Haupterstreckungsrichtung der Seitenfläche und/oder senkrecht dazu, und/oder (iii) das Substrat eine gekrümmte Modifikation mit einem Verlauf gemäß zumindest eines Abschnitts einer Trajektorie eines Airy-Beams aufweist, vorgeschlagen wird.

Eine Höhenmodulation hat sich als vorteilhaft erwiesen, da sie zu einer erhöhten Festigkeit der Oberfläche beiträgt.

Unter der Kontur der Seitenfläche wird dabei vorzugsweise der, insbesondere linienförmige, Verlauf der Seitenfläche in der Querschnittsebene verstanden.

Die Erfindung ermöglicht weiterhin, dass ein Substrat aufweisend zumindest eine erste Deckfläche, zumindest eine, vorzugsweise parallel zur ersten Deckfläche verlaufenden, zweite Deckfläche und zumindest eine lasergebrochene Seitenfläche, die sich vorzugsweise zumindest bereichsweise zwischen der ersten und der zweiten Deckfläche erstreckt, wobei in einer Querschnittsebene des Substrats, die durch eine Ebene, die wenigstens einen Normalenvektor der Seitenfläche und einen Normalenvektor der ersten Deckfläche aufweist, aufgespannt wird, die Kontur der Seitenfläche einen Scheitelpunkt aufweist, der zwischen den beiden Deckflächen angeordnet ist, und wobei der Scheitelpunkt mittig zwischen den beiden Deckflächen angeordnet ist und/oder mit einem, insbesondere vertikalen, Abstand zur mittigen Lage zwischen den beiden Deckflächen angeordnet ist, wobei der vertikale Abstand entlang einer Richtung parallel zum Normalenvektor der ersten Deckfläche (i) mehr als 0,1 %, vorzugsweise mehr als 1 %, vorzugsweise mehr als 5 %, vorzugsweise mehr als 10 %, vorzugsweise mehr als 20 %, vorzugsweise mehr als 30 %, vorzugsweise mehr als 40 %, vorzugsweise mehr als 45 %, der Dicke des Substrats, (ii) weniger als 50 %, vorzugsweise weniger als 45 %, vorzugsweise weniger als 35 %, vorzugsweise weniger als 25 %, vorzugsweise weniger als 15 %, vorzugsweise weniger als 10 %, vorzugsweise weniger als 5 %, vorzugsweise weniger als 3 %, vorzugsweise weniger als 1 %, der Dicke des Substrats und/oder (iii) zwischen 0,1 % und 49 %, vorzugsweise zwischen 0,1 % und 10 % oder zwischen 1 % und 40 %, vorzugsweise zwischen 5 % und 30 %, vorzugsweise zwischen 10 % und 25 %, der Dicke des Substrats beträgt, vorgeschlagen wird, wobei die Dicke des Substrats mehr als 500 $\mu$m, vorzugsweise mehr als 700 $\mu$m, vorzugsweise mehr als 1000 $\mu$m, vorzugsweise mehr als 1500 $\mu$m, vorzugsweise mehr als 2000 $\mu$m, beträgt. Insbesondere kann die Dicke des Substrats weniger als 10 cm, vorzugsweise weniger als 7 cm, vorzugsweise weniger als 5 cm, vorzugsweise weniger als 3 cm, betragen, vorgeschlagen wird.

Es kann alternativ oder ergänzend auch vorgesehen sein, dass

(i) das Substrat transparent ist, aus Glas und/oder Glaskeramik ist, eine erste Deckfläche aufweist und/oder eine zweite Deckfläche, die vorzugsweise parallel zur ersten Deckfläche verläuft und/oder ihr gegenüberliegt, aufweist, und/oder

(ii) das Substrat eine, vorzugsweise zwischen der ersten und zweiten Deckfläche gemessene, Dicke aufweist

(a) von 10 $\mu$m oder mehr, vorzugsweise von 30 $\mu$m oder mehr, vorzugsweise von 50 $\mu$m oder mehr, vorzugsweise von 70 $\mu$m oder mehr, vorzugsweise von 100 $\mu$m oder mehr, vorzugsweise von 300 $\mu$m oder mehr, vorzugsweise von 500 $\mu$m oder mehr, vorzugsweise von 700 $\mu$m oder mehr, vorzugsweise von 1 mm oder mehr, vorzugsweise von 3 mm oder mehr, vorzugsweise von 5 mm oder mehr, vorzugsweise von 7 mm oder mehr, vorzugsweise von 10 mm oder mehr,

(b) von 10 mm oder weniger, vorzugsweise von 7 mm oder weniger, vorzugsweise von 5 mm oder weniger, vorzugsweise von 3 mm oder weniger, vorzugsweise von 1 mm oder weniger, vorzugsweise von 700 $\mu$m oder weniger, vorzugsweise von 500 $\mu$m oder weniger, vorzugsweise von 300 $\mu$m oder weniger, vorzugsweise von 300 $\mu$m oder weniger, vorzugsweise von 200 $\mu$m oder weniger, vorzugsweise von 100 $\mu$m oder weniger, vorzugsweise von 70 $\mu$m oder weniger, vorzugsweise von 50 $\mu$m oder weniger, vorzugsweise von 30 $\mu$m oder weniger, vorzugsweise von 10 $\mu$m oder weniger,
und/oder

(c) von zwischen 10 $\mu$m und 10 mm, vorzugsweise von zwischen 10 $\mu$m und 500 $\mu$m, vorzugsweise von zwischen 50 $\mu$m und 200 $\mu$m.

Kurzbeschreibung der Figuren

Weitere Merkmale und Vorteile der Erfindung ergeben sich aus der nachfolgenden Beschreibung, in der bevorzugte Ausführungsformen der Erfindung anhand schematischer Zeichnungen erläutert werden.
Dabei zeigen:

Fig. 1      einen optischen Aufbau zum Durchführen des Verfahrens;

Fig. 2      eine kubische Phasenmaske;

Fig. 3      ein Substrat mit einem modifizierten Substratbereich;

Fig. 4      den simulierten Verlauf der Linienenergiedichte entlang eines Linienfokus in einem Substrat für unterschiedliche Pulsenergien;

Fig. 5      den Verlauf der Tiefenposition des experimentell bestimmten Maximums der Materialmodifikation für unterschiedliche Pulsenergien;

Fig. 6      den Einfluss des Versatzes eines Laserstrahls auf der kubischen Phasenmaske auf die Position des Maximums der Fokus-Intensität bzw. der Energieverteilung entlang der Fokus-Trajektorie;

Fig. 7      den Verlauf der Abhängigkeit zwischen dem Versatz eines Laserstrahls auf der kubischen Phasenmaske und die Position des Maximums der Linienenergiedichte entlang der Fokus-Trajektorie;

Fig. 8      den Einfluss der Brennweite der Fokussieroptik bei einem Laserstrahl;

Fig. 9a-c      verschiedene Möglichkeiten zur Herstellung eines Strahlversatzes;

Fig. 9d      eine Realisierungsform der Auslenkungsoptik in Fig. 9c;

Fig. 10a      eine Querschnittsansicht eines Substrats mit eingeschlossenem gekrümmten Modifikationsbereich;

Fig. 10b      eine Querschnittsansicht eines Substrats mit von außen zugänglichem Modifikationsbereich;

Fig. 10c      eine Querschnittsansicht eines bearbeiteten Substrats;

Fig. 11      eine Aufsicht auf einen bearbeiteten Substratkörper;

Fig. 12      Substratkörper aus Fig. 11 mit eingebrachten Modifikationen;

Fig. 13a      einen optischen Aufbau zum Kontrollieren insbesondere der sphärischen Aberration;

Fig. 13b      Intensitätsverläufe eines Laserstrahls entlang einer Tiefenrichtung eines Substrats für unterschiedlich eingestellte sphärische Aberrationen;

Fig. 13c    Substrate mit bei unterschiedlich eingestellten sphärischen Aberrationen und Strahlversätzen eingebrachten Modifikationen;

Fig. 14a    eine kubische Phasenmaske mit einem ersten Strahlquerschnitt eines Laserstrahls sowie ein Glassubstrat mit einer durch den Laserstrahl verursachten Modifikation; und

Fig. 14b    eine kubische Phasenmaske mit einem zweiten Strahlquerschnitt eines Laserstrahls sowie ein Glassubstrat mit einer durch den Laserstrahl verursachten Modifikation.

Beispiele

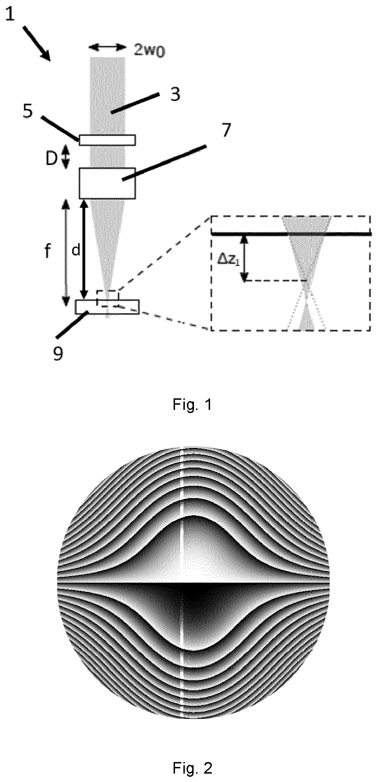

Figur 1 zeigt einen optischen Aufbau 1 zum Durchführen des Verfahrens gemäß der Erfindung.

Der optische Aufbau 1 weist einen (nicht dargestellten) gepulsten Laser auf, der einen Laserstrahl 3 mit einer Wellenlänge von 1030 nm emittiert. Der Laserstrahl 3 hat einen Durchmesser von $2\omega_0$. Der optische Aufbau weist ferner eine kubische Phasenmaske 5 und eine davon im Abstand D beabstandet angeordnete Fokussieroptik 7 mit Fokuslänge f von beispielsweise 10 mm auf. Phasenmaske 5 und Fokussieroptik 7 erzeugen aus dem Laserstrahl 3 einen Airy-Strahl, der einen gekrümmten Linienfokus aufweist. Der Laserstrahl 3 durchläuft dazu die Phasenmaske 5 und anschließend die Fokussieroptik 7.

Im Abstand d von der Fokussieroptik 7 entfernt ist ein entlang einer geplanten Trennfläche zu trennendes Substrat 9 derart angeordnet, dass der gekrümmte Linienfokus des Laserstrahls 3 innerhalb des Substrats ausgebildet wird. Der Abstand d ist dabei in Bezug auf die der Laserquelle zugewandten Deckfläche des Substrats 9 definiert. Der Abstand $\Delta z_1$ des Scheitelpunkts des Linienfokus von der der Laserquelle zugewandten Deckfläche des Substrats 9, und damit auch die relative vertikale Lage des Linienfokus innerhalb des Substrats 9, wird vorliegend eingestellt durch die Wahl der Brennweite f und/oder durch die Wahl des Abstands d des Substrats 9 von der Fokussieroptik 7. Wird die Brennweite f vergrößert oder der Abstand d verkleinert, so bewirkt dies eine Verschiebung des Scheitelpunktes des Linienfokus, und damit des gesamten gekrümmten Linienfokusses, weg von der der Laserquelle zugewandten Deckfläche des Substrats 9 - in Fig. 1 also nach unten. Entsprechend bewirkt umgekehrt eine Verkleinerung der Brennweite f oder eine Vergrößerung des Abstands d eine Verschiebung des Scheitelpunktes des Linienfokus hin zu der der Laserquelle zugewandten Deckfläche des Substrats 9 - in Fig. 1 also nach oben. Mit anderen Worten, kann der gekrümmte Linienfokus durch Variation des Abstandes d zwischen Fokussierungsoptik 7 und der der Laserquelle zugewandten Deckfläche des Substrats 9 und/oder durch Variation der Brennweite f der Fokussieroptik 7 entlang eines Tiefenbereichs durch das Substrat 9 bewegt werden. Somit kann der Scheitelpunkt des Linienfokus zuverlässig beispielsweise mittig innerhalb des Substrats 9 positioniert werden, aber auch dazu versetzt, an beliebiger Stelle über die Dicke des Substrats 9, also etwa hin zur ersten Deckfläche verschoben positioniert werden. Natürlich ist es möglich, die Brennweite f und den Abstand d gleichzeitig anzupassen, um die Lage des Scheitelpunktes anzupassen, beispielsweise in Form einer Verringerung der Brennweite f und einer Vergrößerung des Abstandes d.

Weist der Linienfokus beispielsweise eine Symmetrieachse auf, so können in Abhängigkeit der, insbesondere durch Einstellen der Brennweite f und/oder des Abstands d, gewählten Lage des Scheitelpunktes im Substrat 9, symmetrische und asymmetrische Materialmodifikationen über die Dicke des Substrates 9 in dessen Volumen erzeugt werden. Insbesondere können so symmetrisch, beispielsweise mittig im Substrat, liegende Modifikationen erzeugt werden, so dass die Materialmodifikation beispielsweise C-förmig ausgebildet ist. Besitzt der Linienfokus hingegen keine Symmetrieachse, so können asymmetrische Materialmodifikationen entlang der Dicke des Substrates 9 erzeugt werden.

Dabei führen symmetrische wie nicht symmetrische Linienfoki zu einer vorteilhaften Materialmodifikation über vorzugsweise die Dicke des Substrates 9 in dessen Volumen, und zwar insbesondere in einem Bereich, innerhalb dessen der Linienfokus ausgebildet wird.

Neben den derart erzeugten außermittigen und damit asymmetrischen Lagen des gekrümmten Linienfokusses, insbesondere seines Scheitelpunktes, in Bezug auf die Deckflächen, kann mithin bevorzugt durch geeignete Wahl der Brennweite f somit auch eine bezüglich der Substratdicke mittige und damit symmetrische Positionierung des gekrümmten Linienfokus im Substrat 9 erreicht werden.

Fig. 2 zeigt eine kubische Phasenmaske, wie sie für die Phasenmaske 5 zum Einsatz kommen kann.

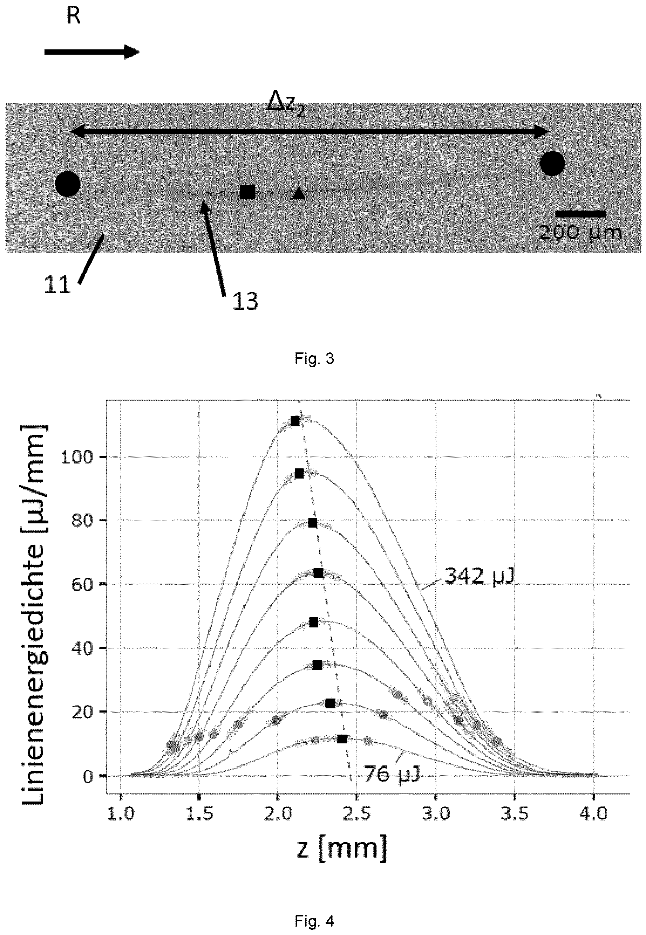

Fig. 3 zeigt ein Schnitt durch einen Ausschnitt eines Substrats 11 mit einem Substratbereich 13, innerhalb dessen das Substratmaterial durch einen gekrümmten Linienfokus eines Airy-Strahls in seinem Brechungsindex modifiziert wurde.

Konkret wurde dazu ein Puls mit einer Pulsenergie von 342 µJ eingesetzt und, wie es in Bezug auf Fig. 1 beschrieben wurde, ein Airy-Linienfokus im Substrat 11, nämlich Borofloat 33, ausgebildet. Der Laserstrahl hatte dabei eine Hauptpropagationsrichtung R.

Entlang eines Abschnitts des Linienfokus, innerhalb dessen überall eine ausreichend hohe Energiedichte durch diesen in das Substrat eingebracht wurde, um das Material zu modifizieren, wurde dieses modifiziert. Die Kreisflächen an den beiden Außenpositionen der Modifikation 13 kennzeichnen die experimentelle Nachweisgrenze der Modifikation 13. Die beiden Außenpositionen weisen entlang des Tiefenbereichs des Substrats 11, also entlang der Dicke des Substrats 11, einen Abstand von $\Delta z_2$ auf.

Außerdem ist in Fig. 3 auch der Ort, an dem das Maximum der durch den Linienfokus eingebrachte Energieverteilung bestand, und mithin eine maximale Modifikation des Substratmaterials auftrat, durch ein Quadrat gekennzeichnet. Der Scheitelpunkt des gekrümmten Bereichs ist mit einem Dreieck gekennzeichnet. Es zeigt sich, dass Scheitelpunkt und Ort der maximalen Modifikation nicht zusammenfallen.

Fig. 4 zeigt den simulierten Verlauf der Linienenergiedichte entlang eines Linienfokus in einem Substrat für unterschiedliche Pulsenergien. Damit kann zumindest qualitativ die Wirkung der Pulsenergie auf die Energieverteilung im Substrat illustriert werden.

So kann Figur 4 der Ort der maximalen Linienenergiedichte entlang des Fokus des (hier simulierten) Airy-Beams entnommen werden, der innerhalb des Substrats für keine Pulsenergie mit der Lage des Scheitelpunktes der Fokus-Trajektorie bei 2,5 mm übereinstimmt. Die maximale Modifikation im Substrat entsteht bevorzugt am Ort des Maximums der Energieverteilung im Substrat.

Wie dem Diagramm der Fig. 4 entnommen werden kann, weist für eine Pulsenergie von 76 μJ (unterste Kurve im Diagramm) die Linienenergiedichte einen Maximalwert von ca. 12 μJ/mm bei einer Tiefe von ca. 2,4 mm auf. Für eine Pulsenergie von 342 J (oberste Kurve im Diagramm) weist die Linienenergiedichte einen Maximalwert von ca. 118 μJ/mm bei einer Tiefe von ca. 2,1 mm auf. Der Maximalwert der Linienenergiedichte ist in Entsprechung zu Fig. 3 jeweils mit einem Quadrat gekennzeichnet. Mit zunehmender Pulsenergie nimmt folglich der Maximalwert der Linienenergiedichte zu. Außerdem verschiebt sich die Position des Maximums mit zunehmender Pulsenergie in Richtung geringerer Tiefen. Dabei ist hier die Tiefe von 0 mm auf die Substratoberfläche bezogen, also der der Laserquelle zugewandten Substratseite.

Außerdem lässt sich, gekennzeichnet durch jeweils zwei Kreisflächen, für jede der Pulsenergien der Tiefenbereich ablesen, innerhalb dessen eine Modifikation in einem exemplarischen Glasmaterial auftreten würde. Die Modifikation verläuft bei einer Pulsenergie von 76 μJ entlang eines Tiefenbereichs $\Delta z$ von ca. 0,3 mm und bei einer Pulsenergie von 342 μJ entlang eines Tiefenbereichs $\Delta z$ von ca. 2 mm und. Die Länge des die Modifikation erzeugenden Linienfokus zwischen den beiden Endpunkten ist dabei aufgrund seiner Krümmung größer als der Abstand $\Delta z$ der beiden Punkte in Tiefenrichtung.

Es ist festzustellen, dass mit zunehmender Energie des Pulses die Modifikation zunehmend asymmetrischer ausgeprägt wird und der Ort der maximalen Schädigung sich zunehmend vom Scheitelpunkt der Airy-Trajektorie bei 2,5 mm entfernt, hin zu geringeren Tiefen.

Damit illustriert Fig. 4, wie durch ein Einstellen der Pulsenergie der durch den Linienfokus in das Substratmaterial eingebrachte Energieverteilung kontrolliert werden kann. Nämlich etwa in Form der maximalen Linienenergiedichte aber auch in Form der Länge des Abschnitts des Linienfokus, entlang dessen das Substratmaterial in dem Tiefenabschnitt $\Delta z$ modifiziert wird.

In Bezug auf Fig. 4 wurde von der Linienenergiedichte gesprochen. Diese bezog sich dabei auf die Energiedichte entlang der Fokus-Trajektorie des Airy-Strahls. Der Fachmann versteht, dass diese Darstellung vor allem zum besseren Verständnis dient, wie sich eine bestimmte Einstellung der Pulsenergie auf die (räumliche) Energieverteilung im Substrat auswirkt. Denn die tatsächliche Energieverteilung im Substrat, welche die Modifikationen erzeugt, wird zwar grundsätzlich durch die hier diskutierten Linienenergiedichte des Fokus mitbestimmt. Aber eben auch weitere Aspekte können einen Einfluss auf die Energieverteilung im Substrat nehmen. Beispielsweise kann es, etwa aufgrund von Absorption und Defokussierung durch das im Material erzeugte Plasma, auch Plasma-Shielding genannt, eine obere Wertegrenze für das Maximum der Energiedichte im Substrat geben, die auch durch eine Erhöhung der Linienenergiedichte des Fokus nicht überschritten werden kann, dieser Effekt wird auch als Intensity Clamping bezeichnet.

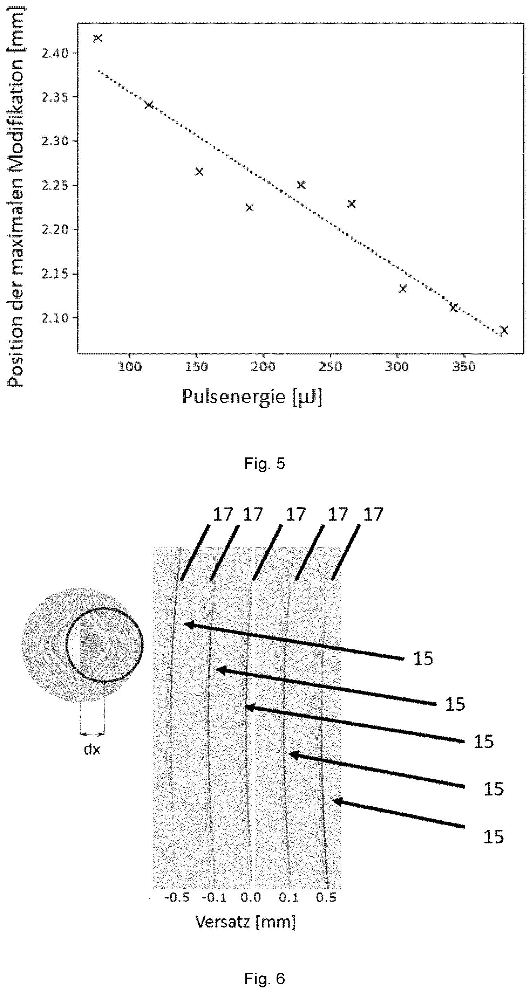

In Fig. 5 ist der Verlauf der Tiefenposition des experimentell bestimmten Maximums der Materialmodifikation für unterschiedliche Pulsenergien dargestellt.

Dazu wurden mehrere Modifikationen in ein Substrat eingebracht, wobei für jede Modifikation eine unterschiedliche Pulsenergie eingestellt wurde. Anschließend wurde für jede Modifikation die Position des Maximums der Modifikation ermittelt, wobei angenommen werden kann, dass dies auch die Position des Maximums der Linienenergiedichte ist. Für alle Modifikationen war der Scheitelpunkt des zugehörigen Linienfokus auf gleicher Tiefe eingestellt.

Wieder sind vor allem relative Aussagen bei Vergleich zweier Positionen möglich. Mit zunehmender Pulsenergie ändert sich demnach die Tiefe des Maximums (hin zu geringeren Tiefen), wobei der Verlauf annähernd linear ist.

Figur 6 zeigt den Einfluss des Versatzes eines Laserstrahls auf der kubischen Phasenmaske auf die Position des Maximums der Fokus-Intensität und damit effektiv auch die der Energieverteilung im Substrat entlang der Fokus-Trajektorie.

Das heißt, vorliegend wurde mittels Simulation der Effekt eines Versatzes zwischen Eingangsstrahl und kubischer Phasenmaske auf die relative Positionierung von Maximum der Energieverteilung und Scheitelpunkt der Airy-Trajektorie untersucht.

Bei zentriertem Eingangsstrahl wird zu Illustrationszwecken festgelegt, dass die Position von Scheitelpunkt und Maximum der Energieverteilung übereinstimmen. (Tatsächlich würde dies dem Fall entsprechen, dass der Linienfokus und die Energieverteilung im Vakuum betrachtet wird.) Freilich ist dies bei Ausbildung des Linienfokus im Substratmaterial nicht gegeben, sondern es kann eine Abweichung des Orts des Scheitelpunktes und des Orts des Maximums vorliegen. Mit zunehmendem Versatz (gekennzeichnet durch dx im linken Teil der Fig. 6) des Eingangsstrahls (gekennzeichnet durch einen Kreis) innerhalb der hier waagerechten Symmetrieebene (Spiegelebene) der Phasenverteilung, wird der Ort des Maximums der Energieverteilung gegenüber dem Scheitelpunkt der Airy-Trajektorie verschoben.

Im rechten Teil der Fig. 6 ist gezeigt, wie bei Veränderung des Versatzes von -0,5 mm bis 0,5 mm die Energieverteilung 15 entlang der Airy-Linienfokus-Trajektorie 17 in Fig. 6 von oben nach unten verschoben wird.

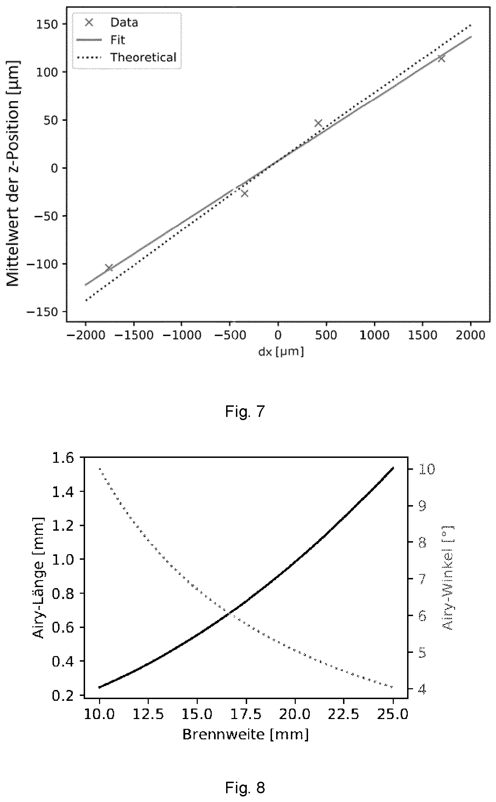

Fig. 7 zeigt den Verlauf der Abhängigkeit zwischen dem Versatz dx eines Laserstrahls auf der kubischen Phasenmaske von deren Sattelpunkt und die Position des Maximums der Linienenergiedichte entlang der Fokus-Trajektorie.

Hierbei wurde als experimentelle Lage der Mittelwert der z-Positionen (also der Tiefenpositionen) der zugehörigen Materialmodifikationsendpunkte verwendet (welche etwa in Fig. 3 durch Kreisflächen gekennzeichnet wurden).

Die Steigung des Fits ("Fit"; durchgezogene Linie in Fig. 7) an die experimentellen Daten ("Data") beträgt 0,065. Das heißt für die den Daten zugrundeliegende Fokussierung wird pro Verschiebung des Strahls auf der kubischen Phasenmaske um einen Millimeter ein Fokusversatz in z-Richtung (in Luft) von 65 $\mu$m erreicht.

In Fig. 7 ist außerdem der theoretisch zu erwartende Verlauf gepunktet dargestellt. Der theoretische Verlauf für einen Versatz von dx ergibt sich als Brennweitenänderung df der kubischen Phasenmaske nach der hier nochmals angegebenen Gleichung:

$$df = \frac{1}{\frac{1}{f_0} + \frac{\sqrt{2}\beta^3 dx}{k_0}} - f_0$$

Hierbei sind:

- $k_0$ der Wellenvektor mit $k_0$=2*pi*n/Lambda, mit Wellenlänge Lambda, hier 1030 nm, und Brechzahl n des Mediums, innerhalb dem der Fokus ausgebildet wird, hier n=1
- $f_0$ die Brennweite der Fokussieroptik, hier 10 mm
- Beta ist der Skalierungsfaktor der kubischen Phase phi, mit

$$\varphi = exp(\frac{i\beta}{3} * (x^3 + y^3)) \text{ hier mit } \beta = 3^{1/3} mm^{-1}$$

für x und y in mm.

Die Ausführungen zeigen, und damit nochmals in Bezug auf Figur 1: Indem der Laserstrahl 3 durch die Phasenmaske 5 beeinflusst wird, indem diese beispielsweise relativ zu dem Laserstrahl 3 verschoben wird, und indem die Pulsenergie des Laserstrahls 3 eingestellt wird, kann somit die durch den Linienfokus in das Substrat eingebrachte Energieverteilung zuverlässig kontrolliert werden. Damit lassen sich Modifikationen im Substrat 9 zuverlässig und symmetrisch ausbilden.

Vor allem durch die aufeinander abgestimmte Wahl von Pulsenergie und Beeinflussung des Laserstrahls durch die Phasenmaske (etwa durch die Wahl des Versatzes des Laserstrahls von dem Sattelpunkt der Phasenmaske), kann die Lage des Maximums der Energieverteilung innerhalb des Substrats (in der vergrößerten Teildarstellung der Fig. 1 durch ein $\Delta z_1$ gekennzeichnet) zuverlässig kontrolliert werden.

Einfluss der Brennweite der Fokussieroptik

Fig. 8 illustriert den Einfluss der Brennweite der Fokussieroptik bei einem Airy-Laserstrahl. Für konstante

- Kubische Phase (mit beta = $3^{1/3}$ x $10^3$/m);

- Laserwellenlänge (mit lambda = 1,030 x $10^{-6}$ m); und

- Strahldurchmesser (Durchmesser des Rohstrahls $w_0$ = 5 x$10^{-3}$ m)

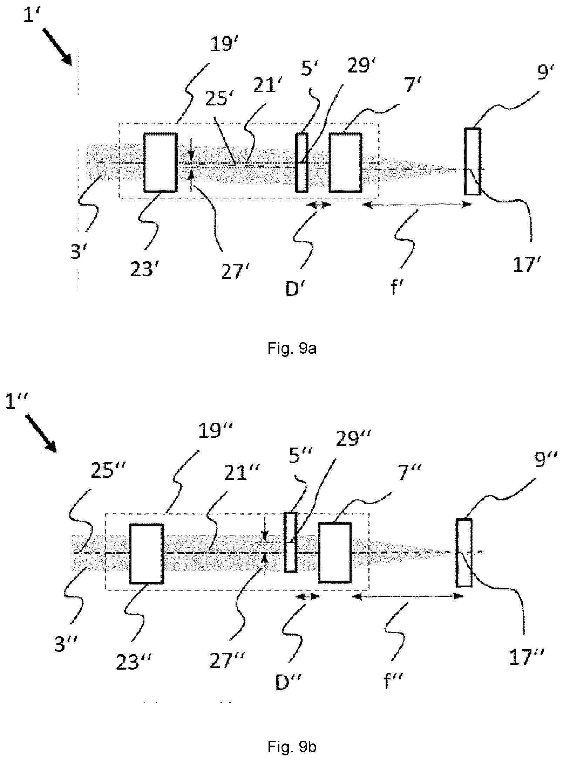

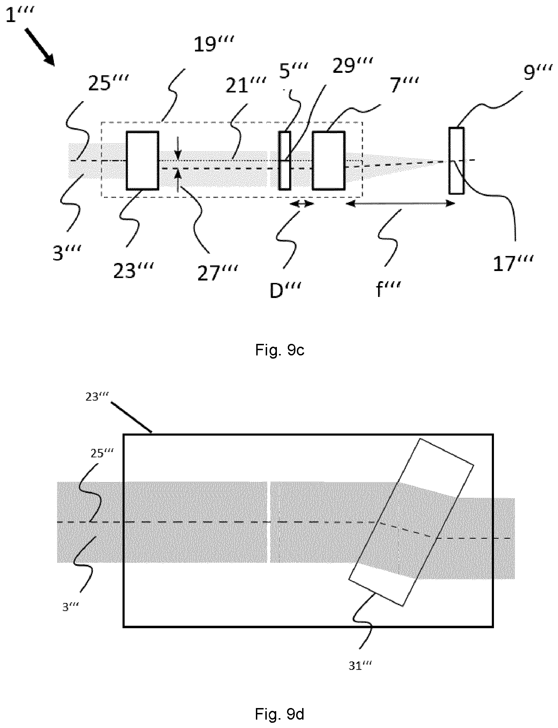

nimmt die Länge des Fokusbereichs (in relativer Definition: Abfall auf $1/e^2$ des Maximalwerts) mit steigender Brennweite zu (Kurve mit durchgezogener Linie in Fig. 9) und der Winkel, den der Fokus am oberen und unteren Ende jeweils zur optischen Achse hat, ab (Kurve mit gestrichelter Linie in Fig. 9). Die linke Ordinate bezieht sich folglich auf die durchgezogene Linie und die rechte Ordinate bezieht sich auf die gestrichelte Linie.

Beispiele zur Herstellung eines Strahlversatzes

Fig. 9a-c zeigen verschiedene Möglichkeiten zur Herstellung eines Versatzes des Laserstrahls auf einer Phasenmaske. Dabei kann angenommen werden, dass sich der Sattelpunkt der Phasenfunktion auf der jeweiligen Phasenmaske und damit der Zentralpunkt jeweils am geometrischen Mittelpunkt der jeweiligen Phasenmaske befindet.

Fig. 9a zeigt einen optischen Aufbau 1', der ähnlich zu dem in Fig. 1 gezeigten optischen Aufbau 1 ist. Daher sind gleiche Merkmale auch mit gleichen, jedoch einfach gestrichenen, Bezugszeichen versehen.

In Fig. 9a ist das optische System mit 19' gekennzeichnet und dessen optische Achse mit 21'. Das optische System 19' weist neben der Phasenmaske 5' und der Fokussierungsoptik 7' auch eine Auslenkungsoptik 23' auf.

Durch diese Auslenkungsoptik 23' wird der Laserstrahl 3' abgelenkt, so dass er schräg zur optischen Achse 21' verläuft. Dies ist gut an der Mittelachse 25' des Strahls 3' zu erkennen, die nach der Auslenkungsoptik 23' schräg (und nicht mehr parallel zur optischen Achse 21') verläuft.

Aufgrund der Ablenkung trifft der Laserstrahl 3' mit einem Versatz 27' auf der Phasenmaske 5' auf. Der Auftreffpunkt des Laserstrahls 3' (besser gesagt der Ort des Schwerpunkts des Strahlquerschnitts in der Ebene der Phasenmaske 5') auf der Phasenmaske 5' weist daher den lateralen Versatz 27' in Bezug auf den Mittelpunkt 29' der Phasenmaske 5' auf.

Fig. 9b zeigt einen optischen Aufbau 1", der ähnlich zu dem in Fig. 9a gezeigten optischen Aufbau 1' ist. Daher sind gleiche Merkmale auch mit gleichen, jedoch zweifach gestrichenen, Bezugszeichen versehen.

Allerdings weist das optische System 19" keine Auslenkungsoptik 23" auf bzw. diese ist (wie in Fig. 9b) ohne Wirkung, so dass der Strahl 3" nicht abgelenkt wird. Allerdings ist die Phasenmaske 5" senkrecht zur Strahlrichtung verschoben, so dass dadurch der Laserstrahl 3" mit einem Versatz 27" auf der Phasenmaske 5" auftrifft.

Fig. 9c zeigt einen optischen Aufbau 1‴, der ähnlich zu dem in Fig. 9a gezeigten optischen Aufbau 1' und zu dem in Fig. 9b gezeigten optischen Aufbau 1" ist. Daher sind gleiche Merkmale auch mit gleichen, jedoch dreifach gestrichenen, Bezugszeichen versehen.

Das optische System 19‴ weist eine Auslenkungsoptik 23‴ auf, die einen Versatz 27‴ des Laserstrahls 3‴ erzeugt, wie gut durch einen Vergleich des Verlaufs der Mittelachse 25‴ des Laserstrahls 3‴ vor und nach der Auslenkungsoptik 23‴ erkennbar ist.

Dadurch trifft der Laserstrahl 3‴ mit einem Versatz 27‴ auf die Phasenmaske 5‴ auf. Dabei ist allerdings der Mittelpunkt 29‴ der Phasenmaske 5‴ (wie bei dem optischen Aufbau 1' in Fig. 9a) auf der optischen Achse 21‴.

In Fig. 9d ist eine Realisierungsform der Auslenkungsoptik 23‴ dargestellt. Die Auslenkungsoptik 23‴ kann eine gedrehte Platte 31‴ aufweisen. Diese erzeugt den Versatz 27‴.

Phasenfunktionen

Verschiedene exemplarische Phasenfunktionen, welche ein Laserstrahl aufgeprägt bekommen kann und welche als Phasenmaske für das erfindungsgemäße Verfahren eingesetzt werden können, sind in der nachfolgenden Tabelle dargestellt:

| Beschleunigungsprofil | Phase |
|---|---|
| Parabolisch: $c(z) = az^2$ | $\phi(y) = -4/3\ a^{1/2}\ k\ y^{3/2}$ |
| Quartär: $c(z) = az^4$ | $\phi(y) = -16/21\ (3a)^{1/4}\ k\ y^{7/4}$ |
| Logarithmisch: $c(z) = a\ \ln(bz)$ | $\phi(y) = e^{-1}a^2b\ k\ (1-\exp[-y/a])$ |
| Polynomisch: $c(z) = az^n$ (für gerades n) | $\phi(y) = kn^2y^2\ \dfrac{[a(1-n)/y]^{1/n}}{(2n-1)(1-n)}$ |

Die Parameter sind in der Veröffentlichung Froehly, L., Courvoisier, F., Mathis, A., Jacquot, M., Furfaro, L., Giust, R., & Dudley, J. M. (2011). Arbitrary accelerating micron-scale caustic beams in two and three dimensions. Optics express, 19(17), 16455-16465 beschrieben.

Vorzugsweise ist der optische Aufbau zum Erzeugen der oben genannten Phasenfunktionen ein optischer Aufbau mit einem teleskopischen Aufbau zur Fokussierung des Laserstrahls.

Weitere Ausführungsformen

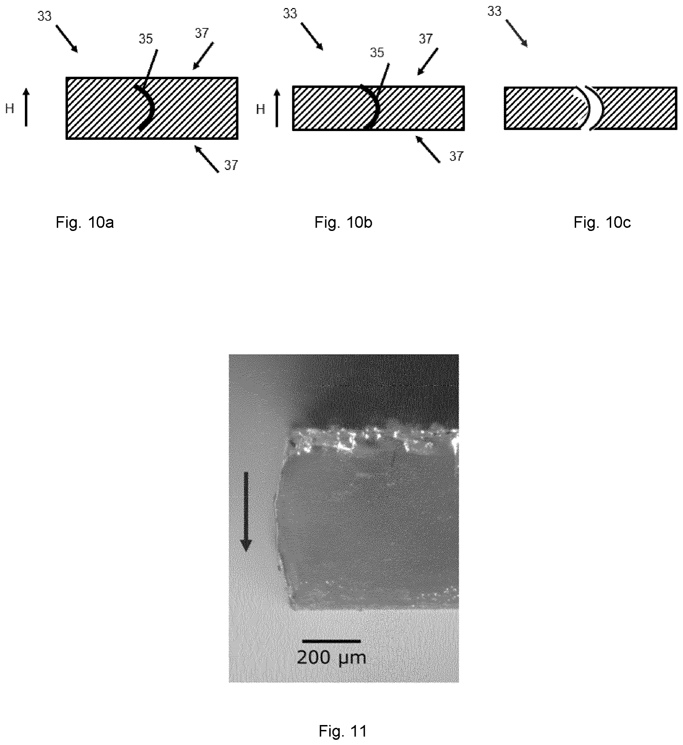

Fig. 10a zeigt ein rechteckförmiges Substrat 33 in einer Querschnittsansicht. Innerhalb des Substrats 33 wurde das Substratmaterial aufgrund der im Substrat 33 mittels des Linienfokus deponierten Energie, insbesondere durch eine Wechselwirkung zwischen der Energie und dem Substratmaterial, in einem Bereich 35 modifiziert.

Der gekrümmte Bereich 35 ist vollständig innerhalb des Substrats 33 eingeschlossen.

Daher ist erfindungsgemäß in Ausführungsformen vorgesehen, dass Material von dem Substrat 33 beispielsweise mittels Ätzen entfernt wird. Dies kann entlang der Haupterstreckungsrichtung H des gekrümmten Bereichs 35 (bzw. des entsprechend verlaufenden Linienfokus) erfolgen, die vorliegend senkrecht zu beiden Deckflächen 37 verläuft. Mit anderen Worten, es wird insoweit also von den beiden Deckflächen 37 des Substrats 33 Material entfernt. Die neuen Deckflächen 37 des Substrats 33 werden dadurch sozusagen entlang der Haupterstreckungsrichtung H verschoben. Dies ist in Fig. 10b zu erkennen. Außerdem ist dort zu erkennen, dass das in dem eingeschlossenen gekrümmten Bereich 35 beeinflusste Substratmaterial 35 durch das Entfernen von Substratmaterial von außen zugänglich wird, da sich Teile das beeinflussten Substratmaterials nun an der Oberfläche der Deckflächen 37 befinden.

Der gekrümmte Bereich 35 weist einen Verlauf auf, der nicht durch Oberflächeneffekte (etwa der Deckflächen 37) beeinflusst ist, da die Wechselwirkung vollständig innerhalb des Substrats 33 stattfindet (Fig. 10a).

Durch die Zugänglichkeit des modifizierten Substratmaterials 35 (Fig. 10b), lässt sich anschließend das Substrat weiterbearbeiten, wie es in Fig. 10c illustriert. Beispielsweise wird dazu das beeinflusste Material durch Ätzen entfernt und das Substrat geteilt.

Weitere Aspekte

Fig. 11 zeigt eine Aufsicht auf ein mit dem erfindungsgemäßen Verfahren bearbeitetes Substrat. Insbesondere verläuft der Normalenvektor der ausgebildeten Oberfläche (das heißt der gekrümmten Trennfläche) in der Zeichenebene der Figur 16. Daher lässt sich in Fig. 11 der gekrümmte Verlauf der Trennfläche auch besonders vorteilhaft erkennen.

Vor allem lässt sich der symmetrische Verlauf der gekrümmten Trennfläche erkennen.

Der eingesetzte Laserstrahl verlief dabei parallel zur Zeichenebene der Fig. 11, wie durch den Pfeil angedeutet.

Für die Laserbearbeitung wurden die folgenden allgemeinen Parameter und Laserparameter eingestellt:

- Substratmaterial mit einer Dicke ausgewählt aus dem Bereich zwischen 900-1000 $\mu$m, zum Beispiel BF33;

- Einen Pitch von 40 $\mu$m;

- Mikroskopobjektiv und/oder Fourierlinse mit einer Brennweite von f = 10 mm;

- x 2,0 Strahlaufweiter (bei 10 mm Durchmesser des Gauß-Eingangsstrahls);

- Pulsdauer = 5 ps;

- Anzahl der Pulse im Burst von N=2;

- Energie je Burst von 300 $\mu$J; und

- Wellenlänge von 1030 nm;

- Kubische Phase $\varphi = exp(i*(x^3 + y^3))$, äquivalent zu $\varphi = exp(\frac{i\beta}{3} * (x^3 + y^3))$ mit $\beta = 3^{1/3} mm^{-1}$ für x und y in mm;

Indem, wie hier, ein ausreichend großer Pitch gewählt wird, werden Wechselwirkungen zwischen benachbarten Bereichen im Substrat mit Modifikationen vermieden oder jedenfalls stark reduziert.

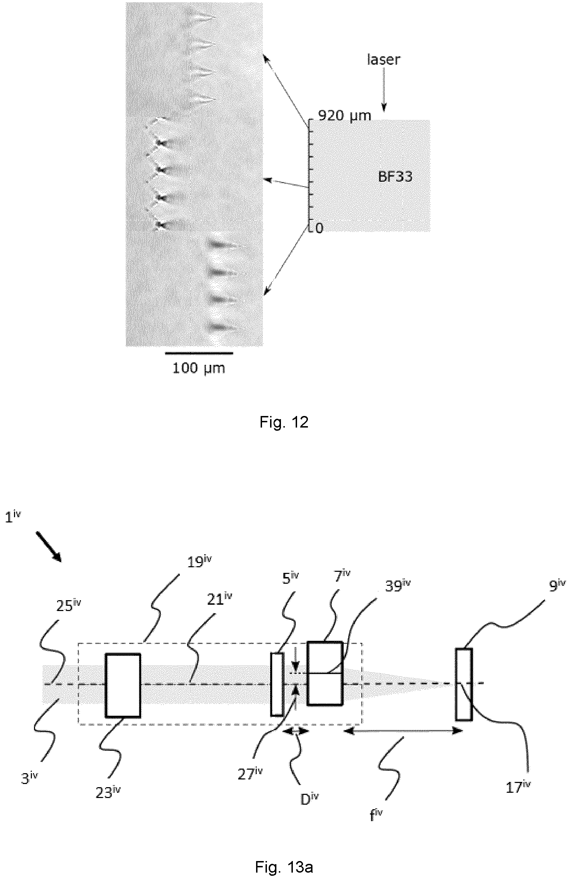

Fig. 12 zeigt links Aufsichten in Durchlichtmikroskopie auf das Substrat und zwar nach dem Laserprozess aber vor dem Ätzen (der Blick ist hier parallel zur Laserpropagationsrichtung). Zu sehen sind dabei die laterale Ausprägung der Modifikationen, wobei für drei ausgewählte, unterschiedliche Tiefen im Substrat jeweils mehrere Modifikationen zu sehen sind. Die jeweiligen Tiefen sind im rechten Teil von Fig. 12 markiert.

Bei der Einbringung der Modifikation wurde ein ausreichend großer Pitch gewählt, so dass sich die Ausläufer der lateral winklig/pfeilartig ausgeprägten Modifikationen nur minimal überlappen. Somit wurde sichergestellt, dass die Propagation im Material nicht oder nur geringfügig durch vorhergehende Modifikationen gestört wird.

Das "Zick-Zack"-Muster ergibt sich also aus den in Fokusnähe lateral ausgedehnten Modifikationen, während die Modifikationen weiterhin auf einer Geraden/Linie liegen. Außerdem wurde der Scheitel des gekrümmten Linienfokus vorteilhaft mittig zwischen den beiden Deckflächen gehalten und der Linienfokus vollständig innerhalb des Substratmaterials ausgebildet.

Ergänzende Aspekte

Fig. 13a zeigt einen optischen Aufbau $1^{iv}$ mit dem die sphärische Aberration und vorteilhafterweise ebenfalls die Verkippung der Modifikation im Substrat kontrolliert werden kann. Der optische Aufbau $1^{iv}$ ist ähnlich zu den in den Figs. 9a bis 9c gezeigten optischen Aufbauten 1', 1" und 1'''. Daher sind gleiche Merkmale auch mit gleichen, jedoch vierfach gestrichenen, Bezugzeichen versehen.

Die Fokussieroptik $7^{iv}$ ist vorliegend eine Abbildungsoptik, welche eine sphärische Aberration aufweist. Durchläuft der Laserstrahl diese Fokussieroptik $7^{iv}$ Erhält er eine sphärische Aberration und zwar vorzugsweise abhängig von seinem Auftreffpunkt auf der Fokussieroptik $7^{iv}$.

Die Fokussieroptik $7^{iv}$ könnte eine Linse mit sphärischer Aberration aufweisen, deren Phase folgender Gleichung genügt:

$$\phi_{\text{lens}}(\rho) = k0 * \left(\frac{\rho^2}{2f} + a\rho^4\right)$$

Die Auslenkungsoptik $23^{iv}$ ist vorliegend deaktiviert, so dass der Strahl $3^{iv}$ nicht ausgelenkt wird. Wenn sie aktiviert wird, könnte der Auftreffpunkt des Laserstrahls $3^{iv}$ auf der Fokussieroptik $7^{iv}$ (auch) mittels der Auslenkungsoptik $23^{iv}$ angepasst und damit auch die sphärische Aberration des Laserstrahls $3^{iv}$ und/oder die Verkippung der in das Substrat eingebrachten Modifikation verändert werden.

Allerdings ist die Auslenkungsoptik $23^{iv}$ vorliegend deaktiviert und damit ohne Wirkung, so dass der Strahl $3^{iv}$ nicht abgelenkt wird. Allerdings ist die Fokussieroptik $7^{iv}$ senkrecht zur Strahlrichtung verschoben, so dass dadurch der Laserstrahl $3^{iv}$ mit einem Versatz $27^{iv}$ zum Mittelpunkt $39^{iv}$ der Fokussieroptik $7^{iv}$ der auf der Fokussieroptik $7^{iv}$ auftrifft.

Durch den Versatz $27^{iv}$ erhält der Laserstrahl eine angepasste sphärische Aberration, so dass die innerhalb des Substrats $9^{iv}$ eingebrachte Energieverteilung entlang des Linienfokus $17^{iv}$ veränderbar und/oder verschiebbar ist.

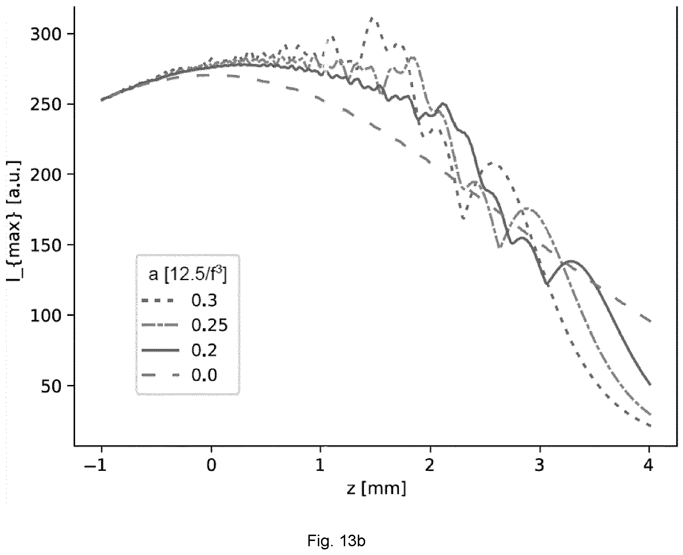

Fig. 13b zeigt die Intensitätsverläufe eines Laserstrahls entlang einer Tiefenrichtung eines Substrats für unterschiedlich eingestellte sphärische Aberrationen. Hierzu kann beispielsweise beim optischen Aufbau $1^{iv}$ der Versatz $27^{iv}$ jeweils verändert sein, so dass der im Substrat $9^{iv}$ ausgebildete Linienfokus eine unterschiedliche Energieverteilung aufweist.

Mit zunehmender sphärischer Aberration kann ein hinterer Abschnitt des Linienfokus (also ein Abschnitt hin zu größeren Tiefen z im Substrat) in der Intensität verstärkt werden. Dadurch kann eine Modifikation besser entlang des gesamten Tiefenbereichs und/oder mit reduzierter Laserleistung im Substratmaterial ausgebildet werden.

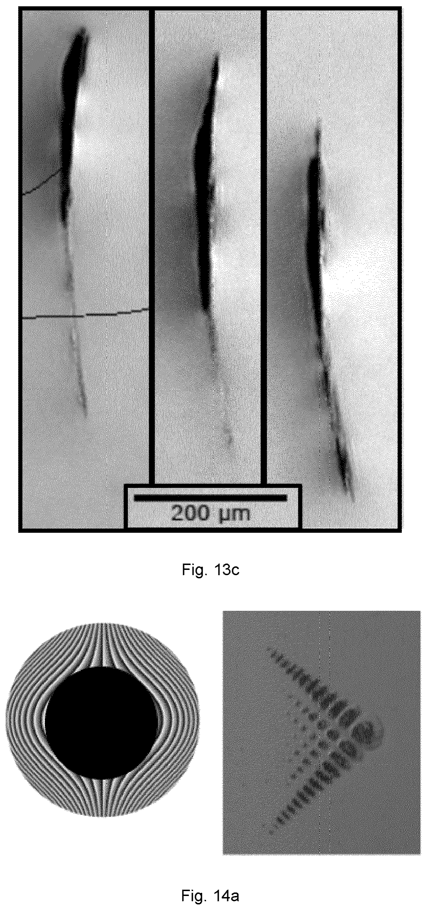

Fig. 13c zeigt drei Substrate (links, mittig und rechts in der Figur dargestellt) mit bei unterschiedlich eingestellten sphärischen Aberrationen und Versätzen des Eingangsstrahl eingebrachten Modifikationen.

Dabei wurde jeweils die sphärische Aberration durch einen unterschiedlichen Versatz (vergleich den in Bezug auf Fig. 13a erläuterten Versatz $7^{iv}$) des Laserstrahls und der Fokussieroptik des dazu verwendeten optischen Systems eingestellt.

Für die Modifikation des in Fig. 13c links dargestellten Substrats wurde ein Versatz von 0 mm eingestellt, mithin kein Versatz. Für die Modifikation des in Fig. 13c mittig dargestellten Substrats wurde ein Versatz von 0,7 mm eingestellt. Für die Modifikation des in Fig. 13c rechts dargestellten Substrats wurde ein Versatz von 1,4 mm eingestellt.

Die drei in Fig. 13c dargestellten Substrate sind alle gleich dick und fluchtend mit ihrer Oberseite ausgerichtet dargestellt. Daher kann Fig. 13c entnommen werden, dass mit zunehmendem Versatz die Modifikation länger wird und auch in größeren Tiefen (in der Fig. 13c verläuft diese jeweils entlang der vertikalen Achse mit nach unten zunehmender Tiefe) ausgeprägter erfolgt. Dies hat seinen Grund darin, dass auch die Energieverteilung entlang der Linienfokus-Trajektorie länger und nach hinten ausgeprägter in das Substratmaterial eingebracht und dort kontrolliert wird, wenn die sphärische Aberration wie dargestellt zunimmt.

Weitere vorteilhafte Merkmale zu der dynamischen Beeinflussung

In Bezug auf die dynamische Beeinflussung ist es als besonders vorteilhaft erkannt worden, dass die Phasenmaske und/oder ein DOE, insbesondere ein Auftreffpunkt des Laserstrahls auf der Phasenmaske, eine Fokuslänge, insbesondere eine Fokuslänge eines Mikroskopobjektivs des optischen Aufbaus, eine sphärische Aberration des Laserstrahls, insbesondere ein Auftreffpunkt des Laserstrahls auf einer Linse, und/oder die Pulsenergie des Laserstrahls als Parameter der dynamischen Beeinflussung gewählt und einzeln sowie in beliebiger Kombination für die dynamische Beeinflussung zeitabhängig verändert werden können.

Exemplarische Prozessparameter und damit erzeugte Modifikation

Es wurden mehrere Experimente 1-5 durchgeführt, bei denen mittels eines Lasers Modifikationen in ein Glassubstrat eingebracht wurden. Die zugehörigen Prozessparameter, also insbesondere die Einstellungen für unterschiedliche Laserparameter, Informationen zum optischen Aufbau (zum Beispiel Versatz des Strahls auf der Phasenmaske oder Fokuslänge des Mikroskops) sowie die Anzahl von Bursts ("Anzahl Schüsse"), sind in der nachstehenden Tabelle angegeben. Der in den Experimenten eingesetzte optische Aufbau kann beispielsweise ähnlich zu dem in Bezug auf Fig. 13a beschriebenen optischen Aufbau sein.

Die Experimente 1-5 stellen Beispiele für ein dynamisches Beeinflussen dar, da die jeweilige Modifikation jeweils durch einen (infolge eines zeitabhängig veränderten Versatzes des Laserstrahls auf der Phasenmaske) zeitabhängig veränderten Linienfokus in das Substrat eingebracht wurde.

In den letzten vier Zeilen der Tabelle stehen Angaben zu den in den jeweiligen Experimenten 1-5 in dem jeweiligen Substrat eingebrachten Modifikationen. Dabei ist die "Länge der Modifikation im Substrat" entlang der Substratdicke gemessen. Und die Angabe zu dem "Versatz der Modifikation entlang der Dickenrichtung des Substrats" gibt an, welchen vertikalen Abstand der Ort der maximalen Materialschädigung von der Substratmitte hat. Die Information zum "Überlapp der Modifikationen" gibt an, wie sehr sich die durch Verschieben der Energieverteilung entlang der Trajektorie entstandenen benachbarten Modifikationen überlappen, wobei hier die Werte multipliziert mit 100 den Überlapp in % angeben (wobei ein negativer Wert einen Abstand zwischen zwei Modifikationen anzeigen würde). (Wenngleich also vorzugsweise hier ein diskreter Prozess vorliegt, um benachbarte Schädigungen entlang der Trajektorie in das Substratmaterial einzubringen, wäre in anderen vorteilhaften Ausführungsformen auch denkbar, dass die Modifikation kontinuierlich im Substratmaterial ausgebreitet wird.) Die "maximale Substratdicke" gibt die Substratdicke an, die maximal mit den Prozessparametern bearbeitbar ist. Die bearbeitbare Substratdicke ergibt sich vorteilhafterweise aus der Modifikationslänge sämtlicher Einzelschüsse, wobei die Länge einer einzelnen Modifikation (hier: "Länge der Modifikation im Substrat") und der Überlapp der Modifikationen berücksichtigt ist.

In der Tabelle, als Ausführungsbeispiel für den dynamischen Fall, bezieht sich jede Spalte auf eine Vielzahl von Schüssen in verschiedenen Tiefen, aber an einer lateralen Position. Hingegen zeigt Fig. 13c die einzelnen Modifikationen, die dem statischen Fall entsprechen. Die Werte in Spalte 1 der Tabelle ergeben sich aus dem Vergleich der Modifikationen Mitte und Rechts in Fig. 13c.

| **Parameter** | **1** | **2** | **3** | **4** | **5** |
|---|---|---|---|---|---|
| Laserwellenlänge [nm] | 1030 | 1030 | 1030 | 1030 | 1030 |
| Pulsdauer [ps] | 5 | 5 | 5 | 5 | 5 |
| Anzahl der Pulse im Burst | 4 | 4 | 4 | 4 | 4 |
| Strahldurchmesser [mm] | 5,3 | 2,65 | 1,1 | 1,1 | 1,1 |
| Laser-Parameter Beta [1/mm] | 1,44 | 1,44 | 2,47 | 1,44 | 1,82 |
| Fokuslänge Mikroskopobjektiv [mm] | 10 | 10 | 10 | 22,4 | 31,6 |
| Strahlversatz auf Phasenmaske [μm] | 713 | 2500 | 1000 | 1000 | 500 |
| Anzahl Schüsse | 2 | 8 | 20 | 20 | 10 |
| Energie je Burst [μJ] | 144 | 72 | 30 | 67 | 95 |
| | | | | | |
| Länge der Modifikation im Substrat [μm] | 510 | 255 | 529 | 529 | 2117 |
| Versatz der Modifikation entlang der Dickenrichtung des Substrats [μm] | 72 | 254 | 508 | 508 | 1015 |
| Überlapp der Modifikationen | 0,86 | 0,00 | 0,04 | 0,04 | 0,52 |
| Max. Substratdicke [mm] | 0,58 | 2 | 10 | 10 | 11 |

Einfluss des Strahlquerschnitts

Fig. 14a zeigt links eine kubische Phasenmaske mit einer eingezeichneten Kreisfläche, die den Querschnitt eines auf die Phasenmaske auftreffenden Laserstrahls repräsentieren soll. Mittels eines Laserstrahls mit einem solchen Querschnitt in der Ebene der Phasenmaske wurde in einem Glassubstrat eine Materialmodifikation eingebracht.

In Fig. 14a ist rechts eine Aufsicht auf das entsprechende Substrat dargestellt. Mithin ist die der Phasenmaske zugewandte Deckfläche des Substrats gezeigt. Es ist hierbei rechts außen die durch das Hauptmaximum des Linienfokus erzeugte Materialmodifikation zu sehen. Die durch die Nebenmaxima des Linienfokus erzeugten Materialmodifikation bilden pfeilartige/winkelige Ausläufer.

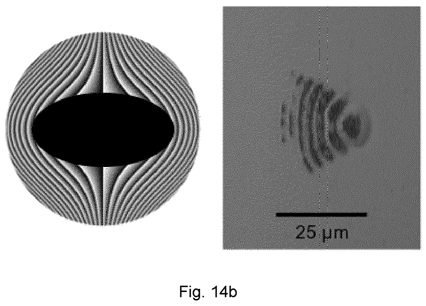

Fig. 14b zeigt links wieder die kubische Phasenmaske mit einer eingezeichneten ovalförmigen Fläche, die den Querschnitt eines anderen, auf die Phasenmaske auftreffenden Laserstrahls repräsentieren soll. Mittels eines Laserstrahls mit einem solch ovalförmigen Querschnitt in der Ebene der Phasenmaske wurde in einem weiteren Glassubstrat eine Materialmodifikation eingebracht.

In Fig. 14b ist rechts eine Aufsicht auf das entsprechende Substrat dargestellt. Mithin ist die der Phasenmaske zugewandte Deckfläche des Substrats gezeigt. Es ist hierbei rechts außen wieder die durch das Hauptmaximum des Linienfokus erzeugte Materialmodifikation zu sehen. Durch den langgezogenen Strahlquerschnitt werden die durch die Nebenmaxima verursachten Materialmodifikationen kompakter und verschmieren zu kreissegment-ähnlichen Strukturen in der Deckfläche. Im Substrat selbst sind diese Modifikations-Strukturen zwiebelschalenähnlich zueinander angeordnet. Außerdem ist ein deutlicherer Kontrast zwischen Haupt- und Nebenmaxima bzw. den dadurch jeweils verursachten Modifikationen zu erkennen.

Aufgrund des kompakteren Schädigungsbereichs im Substrat stören sich benachbarte Modifikationen weniger. Außerdem wurde eine günstigere Riss-Bildung entlang mehrerer benachbarter Modifikationen beim Ausbilden einer Trennfläche beobachtet. Und dies sogar bei einem vergleichsweise großen Pitch von beispielsweise 1 $\mu$m oder mehr oder sogar 10 $\mu$m oder mehr. Dies kann möglicherweise darauf zurückgeführt werden, dass die Nebenmaxima parallel zur Schnittkante verlaufen können.

Bezugszeichenliste

| | |
|---|---|
| 1, 1', 1", 1''', 1$^{iv}$ | Optischer Aufbau |
| 3, 3', 3", 3''', 3$^{iv}$ | Laserstrahl |
| 5, 5', 5", 5''', 5$^{iv}$ | Phasenmaske |
| 7, 7', 7", 7''', 7$^{iv}$ | Fokussieroptik |
| 9, 9', 9", 9''', 9$^{iv}$ | Substrat |
| 11 | Substrat |
| 13 | Substratbereich |
| 15 | Energieverteilung |
| 17, 17', 17", 17''', 17$^{iv}$ | Linienfokus-Trajektorie |
| 19', 19", 19''', 19$^{iv}$ | Optisches System |
| 21', 21", 21''', 21$^{iv}$ | Optische Achse |
| 23', 23", 23''', 23$^{iv}$ | Auslenkungsoptik |
| 25', 25", 25''', 25$^{iv}$ | Mittelachse des Laserstrahls |
| 27', 27", 27''', 27$^{iv}$ | Versatz |
| 29', 29", 29''' | Mittelpunkt der Phasenmaske |
| 31''' | Platte |
| 33 | Substrat |
| 35 | Bereich |
| 37 | Deckfläche |
| 39$^{iv}$ | Mittelpunkt der Fokussieroptik |
| d | Abstand |
| D, D', D", D''', D$^{iv}$ | Abstand |
| f, f', f", f''', f$^{iv}$ | Fokuslänge |
| H | Haupterstreckungsrichtung |
| R | Richtung |
| $\omega_0$ | Strahldurchmesser |
| $\Delta z$, $\Delta z_1$, $\Delta z_2$ | Tiefenbereich |

**Patentansprüche**

1. Verfahren zum Kontrollieren einer mittels zumindest eines Linienfokus zumindest eines Laserstrahls (3, 3', 3", 3''', 3$^{iv}$) innerhalb eines Substrats (9, 9', 9", 9''', 9$^{iv}$, 11) eingebrachten Energieverteilung (15), wobei das Verfahren aufweist:

   Ausbilden des Linienfokus zumindest bereichsweise innerhalb des Substrats (11) und
   Kontrollieren der Energieverteilung (15) innerhalb des Substrats zumindest teilweise durch Beeinflussen des Laserstrahls (3, 3', 3", 3''', 3$^{iv}$) mittels wenigstens zumindest einer Phasenmaske (5, 5', 5", 5''', 5$^{iv}$) und
   Einbringen zumindest einer Modifikation im Material eines Substratbereichs (13) entlang des ausgebildeten und in Bezug auf die Energieverteilung kontrollierten Linienfokus,
   **dadurch gekennzeichnet, dass**
   das Beeinflussen des Laserstrahls (3, 3', 3", 3''', 3$^{iv}$) mittels wenigstens der zumindest einen Phasenmaske (5, 5', 5", 5''', 5$^{iv}$) zeitabhängig durchgeführt wird und dadurch die Gestalt und/oder die Position der Energieverteilung (15) zeitabhängig verändert wird.

2. Verfahren nach Anspruch 1, wobei der Laserstrahl (3, 3', 3", 3''', 3$^{iv}$) zu unterschiedlichen, vorzugsweise unmittelbar aufeinanderfolgenden, Zeiträumen durch unterschiedliche Bereiche der Phasenmaske (5, 5', 5", 5''', 5$^{iv}$) beeinflusst wird.

3. Verfahren nach Anspruch 2, wobei der Schwerpunkt des in der Ebene der Phasenmaske (5, 5', 5", 5''', 5$^{iv}$) bestehenden Strahl-Querschnitts während den unterschiedlichen Zeiträumen unterschiedliche Auftreffpunkte auf dieser hat.

4. Verfahren nach einem der Ansprüche 1 bis 3, wobei durch das zeitabhängige Beeinflussen die Energieverteilung (15), vorzugsweise zumindest ein Maximum der Energieverteilung, innerhalb des Substrats (9, 9', 9", 9''', 9$^{iv}$, 11), insbesondere von einer größeren zu einer geringeren Tiefe und/oder entlang der Fokus-Trajektorie (17, 17', 17", 17''', 17$^{iv}$) innerhalb des Substrats (9, 9', 9", 9''', 9$^{iv}$, 11), bewegt wird.

5. Verfahren nach einem der vorangehenden Ansprüche, wobei die zumindest eine Phasenmaske eine Phasenmaske (5, 5', 5", 5''', 5$^{iv}$) mit kubischer Phasenverteilung oder einer Phasenverteilung höherer, insbesondere ungerader, Ordnung ist und/oder die Phasenmaske (5, 5', 5", 5''', 5$^{iv}$) im Strahlengang des Laserstrahls (3, 3', 3", 3''', 3$^{iv}$) vor dem Substrat (9, 9', 9", 9''', 9$^{iv}$, 11) angeordnet ist, und insbesondere der Laserstrahl (3, 3', 3", 3''', 3$^{iv}$), vorzugsweise der Schwerpunkt des in der Ebene der Phasenmaske (5, 5', 5", 5''', 5$^{iv}$) bestehenden Strahl-Querschnitts, einen Auftreffpunkt auf der Phasenmaske (5, 5', 5", 5''', 5$^{iv}$) hat.

6. Verfahren nach einem der voranstehenden Ansprüche, wobei das Ausbilden des Linienfokus aufweist, dass die Position des Scheitelpunkts des gekrümmten Linienfokus entlang eines Tiefenbereichs des Substrats (9, 9', 9", 9''', 9$^{iv}$, 11) eingestellt wird und wobei die Position des Scheitelpunkts des Linienfokus mittig entlang des Tiefenbereichs ($\Delta z$, $\Delta z_1$, $\Delta z_2$) des Substrats (9, 9', 9", 9''', 9$^{iv}$, 11) eingestellt wird.

7. Verfahren nach einem der vorangehenden Ansprüche, wobei das Kontrollieren der Energieverteilung (15) innerhalb des Substrats (9, 9', 9", 9''', 9$^{iv}$, 11) ferner das Einstellen der Pulsenergie, der Pulsdauer, der Anzahl von Pulsen im Burst, der Energieverteilung (15) im Burst und/oder der Laser-Wellenlänge aufweist.

8. Verfahren nach einem der vorangehenden Ansprüche, wobei das Beeinflussen des Laserstrahls (3, 3', 3", 3''', 3$^{iv}$) mittels wenigstens der zumindest einen Phasenmaske (5, 5', 5", 5''', 5$^{iv}$) aufweist, dass der Laserstrahl (3, 3', 3", 3''', 3$^{iv}$) versetzt zum Zentralpunkt der Phasenmaske (29', 29", 29''') auftrifft, wobei der Zentralpunkt derjenige Ort der Phasenmaske ist, an dem ein auf die Phasenmaske (5, 5', 5", 5''', 5$^{iv}$) auftreffender Laserstrahl (3, 3', 3", 3''', 3$^{iv}$) mit einem gegen Null gehenden Durchmesser von dem Sattelpunkt der auf der Phasenmaske aufgeprägten Phasenverteilung beeinflusst wird, und wobei vorzugsweise der Versatz (27', 27", 27''', 27$^{iv}$) innerhalb der Spiegelebene der Phasenverteilung erfolgt.

9. Verfahren nach Anspruch 8, wobei

   (i) der Versatz (27', 27", 27''', 27$^{iv}$) eingestellt wird

      (a) durch ein Bewegen der Phasenmaske (5, 5', 5", 5''', 5$^{iv}$) relativ zu dem Laserstrahl (3, 3', 3", 3''', 3$^{iv}$);
      (b) durch zumindest eine gedrehte planparallele Platte (31'''), insbesondere aus einem Glasmaterial und/oder einem optischen, vorzugsweise bei der Laserwellenlänge transparenten Material;

(c) durch wenigstens zwei, im Strahlengang hintereinander angeordneten Prismen, wobei die Prismen vorzugsweise gleiche Prismenwinkel aufweisen;

und/oder

(d) durch ein Translatieren, insbesondere innerhalb des Strahlengangs und/oder parallel zur Richtung des einfallenden Strahles, eines den Laserstrahl umlenkenden Umlenkspiegels;

und/oder

(ii) der Versatz (27', 27", 27''', 27$^{iv}$) eingestellt wird durch Ablenkung des Laserstrahls (3, 3', 3", 3''', 3$^{iv}$) mittels wenigstens eines ersten Mittels, so dass der Richtungsvektor des auf die Phasenmaske (5, 5', 5", 5''', 5$^{iv}$) auftreffenden Strahls einen Winkel mit dem Richtungsvektor der Mittelachse der Phasenmaske (5, 5', 5", 5''', 5$^{iv}$) einschließt.

10. Verfahren nach Anspruch 9, wobei die Ablenkung eingestellt wird mittels des ersten Mittels aufweisend

(a) zumindest ein drehbar gelagertes Prisma;

b) zumindest einen drehbar gelagerten Spiegel;

(c) zumindest einen Polygon- oder Galvoscanner;

(d) zumindest einen akustooptischen Modulator;

(e) zumindest einen liquid crystal on silicon spatial light modulator;

und/oder

(f) zumindest einen Micro-Electronic-Mirror-Baustein.

11. Verfahren nach einem der vorangehenden Ansprüche, wobei die Intensitätsverteilung des Laserstrahls (3, 3', 3", 3''', 3$^{iv}$) auf der Phasenmaske (5, 5', 5", 5''', 5$^{iv}$) am Ort des Auftreffens des Strahls auf der Phasenmaske (5, 5', 5", 5''', 5$^{iv}$) verändert, bevorzugt räumlich auf dieser verschoben wird.

12. Verfahren nach einem der vorangehenden Ansprüche, wobei zwei oder mehr Linienfoki von zwei oder mehr Laserstrahlen (3, 3', 3", 3''', 3$^{iv}$) innerhalb desselben Bereichs im Substrat (13), vorzugsweise zeitlich zumindest teilweise parallel und/oder zumindest teilweise sequentiell, entsprechend ausgebildet und die von ihnen in das Substrat (9, 9', 9", 9''', 9$^{iv}$, 11) eingebrachte Energieverteilung )15) jeweils entsprechend kontrolliert werden.

13. Verfahren nach Anspruch 6, wobei (a) die von den einzelnen Linienfoki eingebrachten Energieverteilung (15) hinsichtlich Position und/oder Gestalt unterschiedlich sind, wobei vorzugsweise die Maxima der einzelnen Energieverteilungen an unterschiedlichen Positionen innerhalb des Substrats (9, 9', 9", 9''', 9$^{iv}$, 11) bestehen, und/oder (b) die Trajektorien (17, 17', 17", 17''', 17$^{iv}$) der zwei oder mehr Linienfoki deckungsgleich sind.

14. Verfahren nach einem der voranstehenden Ansprüche, wobei die Orientierung zumindest eines Abschnitts des Linienfokus innerhalb des Substrats (9, 9', 9", 9''', 9$^{iv}$, 11) relativ zur Hauptausbreitungsrichtung des Laserstrahls im Substrat durch das Kontrollieren der Energieverteilung (15) innerhalb des Substrats (9, 9', 9", 9''', 9$^{iv}$, 11) und ferner durch Anpassen der Fokuslage im Substratmaterial eingestellt wird, wobei vorzugsweise das Anpassen der Fokuslage durch eine Änderung des Abstandes (D, D', D", D''', D$^{iv}$) zwischen einer Fokussierungsoptik (7, 7', 7", 7''', 7$^{iv}$) und Substrat erfolgt und/oder die Dicke des Substrats (9, 9', 9", 9''', 9$^{iv}$, 11) kleiner ist als die halbe für einen gegebenen optischen Aufbau potenziell mögliche Länge des Linienfokus entlang der Dickenerstreckung des Substrats (9, 9', 9", 9''', 9$^{iv}$, 11).

15. Verfahren nach einem der vorangehenden Ansprüche, wobei mittels der mittels zumindest eines Teils des Linienfokus eingebrachten Energieverteilung (15) (a) das Substrat (9, 9', 9", 9''', 9$^{iv}$, 11) zumindest bereichsweise in einer Materialeigenschaft wie seiner Dichte, sein Brechungsindex, seine Spannungswerte und/oder seiner Ätzrate, modifiziert wird, (b) Mikrorisse zumindest bereichsweise in dem Substratmaterial erzeugt werden und/oder (c) zumindest bereichsweise Material von dem Substrat (9, 9', 9", 9''', 9$^{iv}$, 11) entfernt und/oder verdrängt wird.

16. Verfahren nach einem der vorangehenden Ansprüche, wobei die innerhalb des Substrats (9, 9', 9", 9''', 9$^{iv}$, 11) modifizierten Bereiche durch Erzeugen einer mechanischen und/oder thermischen Spannung und/oder durch ein Ätzverfahren geöffnet werden, insbesondere um ein Durchgangsloch und/oder ein Sackloch innerhalb des Substratmaterials zu erzeugen, und/oder

wobei entlang einer geschlossenen Kontur und/oder entlang einer von Substratseite zu Substratseite verlaufenden Modifikation durch mechanische, thermische und/doer chemische Prozesse geöffnet werden, insbesondere um eine Innen- oder Außenkontur mit geformter Seitenfläche zu erzeugen.

**Claims**

1. Method for controlling an energy distribution (15) introduced by means of at least one line focus of at least one laser beam (3, 3', 3", 3"', 3$^{iv}$) within a substrate (9, 9', 9", 9"', 9$^{iv}$, 11), wherein the method comprises:

    forming the line focus at least regionally within the substrate (11) and controlling the energy distribution (15) within the substrate at least partly by influencing the laser beam (3, 3', 3", 3"', 3$^{iv}$) by means of, at least, at least one phase mask (5, 5', 5", 5"', 5$^{iv}$) and
    introducing at least one modification in the material of a substrate region (13) along the line focus that is formed and controlled with respect to the energy distribution,
    **characterized in that**
    the laser beam (3, 3', 3", 3"', 3$^{iv}$) is influenced time-dependently by means of at least the at least one phase mask (5, 5', 5", 5"', 5$^{iv}$) and hence the shape and/or position of the energy distribution (15) is changed time-dependently.

2. Method according to Claim 1, wherein the laser beam (3, 3', 3", 3"', 3$^{iv}$) is influenced at different, preferably immediately successive, time periods by different regions of the phase mask (5, 5', 5", 5"', 5$^{iv}$).

3. Method according to Claim 2, wherein the centroid of the beam cross section existing in the plane of the phase mask (5, 5', 5", 5"', 5$^{iv}$) during the different time periods has different points of incidence thereon.

4. Method according to any of Claims 1 to 3, wherein the energy distribution (15), preferably at least a maximum of the energy distribution, is moved within the substrate (9, 9', 9", 9"', 9$^{iv}$, 11), in particular from a greater to a lesser depth and/or along the focus trajectory (17, 17', 17", 17"', 17$^{iv}$) within the substrate (9, 9', 9", 9"', 9$^{iv}$, 11), by way of the time-dependent influence.

5. Method according to any of the preceding claims, wherein the at least one phase mask is a phase mask (5, 5', 5", 5"', 5$^{iv}$) having a cubic phase distribution or a phase distribution of higher order, in particular higher odd order, and/or the phase mask (5, 5', 5", 5"', 5$^{iv}$) is arranged in the beam path of the laser beam (3, 3', 3", 3"', 3$^{iv}$) upstream of the substrate (9, 9', 9", 9"', 9$^{iv}$, 11), and in particular the laser beam (3, 3', 3", 3"', 3$^{iv}$), preferably the centroid of the beam cross section existing in the plane of the phase mask (5, 5', 5", 5"', 5$^{iv}$), has a point of incidence on the phase mask (5, 5', 5", 5"', 5$^{iv}$).

6. Method according to any of the preceding claims, wherein forming the line focus comprises that the position of the vertex of the curved line focus is adjusted along a depth range of the substrate (9, 9', 9", 9"', 9$^{iv}$, 11) and wherein the position of the vertex of the line focus is centred along the depth range ($\Delta z$, $\Delta z_1$, $\Delta z_2$) of the substrate (9, 9', 9", 9"', 9$^{iv}$, 11).

7. Method according to any of the preceding claims, wherein controlling the energy distribution (15) within the substrate (9, 9', 9", 9"', 9$^{iv}$, 11) furthermore comprises adjusting the pulse energy, the pulse duration, the number of pulses in the burst, the energy distribution (15) in the burst and/or the laser wavelength.

8. Method according to any of the preceding claims, wherein influencing the laser beam (3, 3', 3", 3"', 3$^{iv}$) by means of at least the at least one phase mask (5, 5', 5", 5"', 5$^{iv}$) comprises that the laser beam (3, 3', 3", 3"', 3$^{iv}$) is incident offset from the centre point of the phase mask (29', 29", 29"'), wherein the centre point is the location of the phase mask where a laser beam (3, 3', 3", 3"', 3$^{iv}$) with a diameter tending to zero incident on the phase mask (5, 5', 5", 5"', 5$^{iv}$) is influenced by the saddle point of the phase distribution impressed on the phase mask, and wherein preferably the offset (27', 27", 27"', 27$^{iv}$)) is implemented within the mirror plane of the phase distribution.

9. Method according to Claim 8, wherein

    (i) the offset (27', 27", 27"', 27$^{iv}$) is adjusted

        (a) by moving the phase mask (5, 5', 5", 5"', 5$^{iv}$) relative to the laser beam (3, 3', 3", 3"', 3$^{iv}$);
        (b) by at least one rotated plane-parallel plate (31"'), in particular composed of a glass material and/or an optical material, which is preferably transparent at the laser wavelength;
        (c) by at least two prisms arranged one after the other in the beam path, the prisms preferably having the same prism angles;
and/or
(d) by translating, in particular within the beam path and/or parallel to the direction of the incident beam, a deflection mirror that deflects the laser beam;
and/or

(ii) the offset (27', 27", 27''', 27$^{iv}$) is adjusted by deflecting the laser beam (3, 3', 3", 3''', 3$^{iv}$) by means of at least one first means such that the direction vector of the beam incident on the phase mask (5, 5', 5", 5''', 5$^{iv}$) makes an angle with the direction vector of the centre axis of the phase mask (5, 5', 5", 5''', 5$^{iv}$) .

10. Method according to Claim 9, wherein the deflection is adjusted by means of the first means, comprising

(a) at least one rotatably mounted prism;
(b) at least one rotatably mounted mirror;
(c) at least one polygon or galvo scanner;
(d) at least one acousto-optic modulator;
(e) at least one liquid crystal on silicon spatial light modulator;
and/or
(f) at least one microelectronic mirror component.

11. Method according to any of the preceding claims, wherein the intensity distribution of the laser beam (3, 3', 3", 3''', 3$^{iv}$) on the phase mask (5, 5', 5", 5''', 5$^{iv}$) is changed at the location of incidence of the beam on the phase mask (5, 5', 5", 5''', 5$^{iv}$), preferably moved spatially on the latter.

12. Method according to any of the preceding claims, wherein two or more line foci of two or more laser beams (3, 3', 3", 3''', 3$^{iv}$) are formed correspondingly within the same region in the substrate (13), preferably at least partly in parallel and/or at least partly sequentially over time, and the energy distribution (15) introduced into the substrate (9, 9', 9", 9''', 9$^{iv}$, 11) by them is controlled correspondingly in each case.

13. Method according to Claim 6, wherein (a) the energy distributions (15) introduced by the individual line foci are different with regard to position and/or shape, wherein preferably the maxima of the individual energy distributions exist at different positions within the substrate (9, 9', 9", 9''', 9$^{iv}$, 11), and/or (b) the trajectories (17, 17', 17", 17''', 17$^{iv}$) of the two or more line foci are congruent.

14. Method according to any of the preceding claims, wherein the orientation of at least one portion of the line focus within the substrate (9, 9', 9", 9''', 9$^{iv}$, 11) relative to the main propagation direction of the laser beam in the substrate is adjusted by controlling the energy distribution (15) within the substrate (9, 9', 9", 9''', 9$^{iv}$, 11) and furthermore by adapting the focus position in the substrate material, wherein preferably adapting the focus position takes place by changing the distance (D, D', D", D''', D$^{iv}$) between a focusing optical unit (7, 7', 7", 7''', 7$^{iv}$) and the substrate and/or the thickness of the substrate (9, 9', 9", 9''', 9$^{iv}$, 11) is less than half the length of the line focus potentially possible for a given optical set-up along the thickness extension of the substrate (9, 9', 9", 9''', 9$^{iv}$, 11).

15. Method according to any of the preceding claims, wherein by means of the energy distribution (15) introduced by means of at least one part of the line focus, (a) the substrate (9, 9', 9", 9''', 9$^{iv}$, 11) is modified at least regionally in terms of a material property, such as its density, its refractive index, its stress values and/or its etching rate, (b) microcracks are produced at least regionally in the substrate material, and/or (c) material is removed from the substrate (9, 9', 9", 9''', 9$^{iv}$, 11) and/or displaced at least regionally.

16. Method according to any of the preceding claims, wherein the regions that are modified within the substrate (9, 9', 9", 9''', 9$^{iv}$, 11) are opened by producing a mechanical and/or thermal stress and/or by an etching method, in particular in order to produce a through hole and/or a blind hole within the substrate material, and/or
wherein they are opened along a closed contour and/or along a modification proceeding from substrate side to substrate side by way of mechanical, thermal and/or chemical processes, in particular in order to produce an inner or outer contour with a shaped side surface.

**Revendications**

1. Procédé pour contrôler une distribution d'énergie (15) appliquée au moyen d'au moins un foyer linéaire d'au moins un faisceau laser (3, 3', 3", 3"', 3$^{iv}$) à l'intérieur d'un substrat (9, 9', 9", 9"', 9$^{iv}$, 11), le procédé comprenant :

   la formation du foyer linéaire au moins partiellement à l'intérieur du substrat (11) et le contrôle de la distribution d'énergie (15) à l'intérieur du substrat au moins partiellement en agissant sur le faisceau laser (3, 3', 3", 3"', 3$^{iv}$) au moyen d'au moins un masque de phase (5, 5', 5", 5"', 5$^{iv}$) et
   l'introduction d'au moins une modification dans le matériau d'une zone de substrat (13) le long du foyer linéaire formé et contrôlé en ce qui concerne la distribution d'énergie,
   **caractérisé en ce que**
   l'action sur le faisceau laser (3, 3', 3", 3"', 3$^{iv}$) au moyen d'au moins ledit au moins un masque de phase (5, 5', 5", 5"', 5$^{iv}$) est réalisée de manière dépendante du temps et de ce fait, la forme et/ou la position de la distribution d'énergie (15) est modifiée de manière dépendante du temps.

2. Procédé selon la revendication 1, dans lequel le faisceau laser (3, 3', 3", 3"', 3$^{iv}$) est soumis à l'action de différentes zones du masque de phase (5, 5', 5", 5"', 5$^{iv}$) au cours d'intervalles de temps différents, de préférence immédiatement consécutifs.

3. Procédé selon la revendication 2, dans lequel le centre de gravité de la section transversale du faisceau existant dans le plan du masque de phase (5, 5', 5", 5"', 5$^{iv}$) présente des points d'incidence différents sur celui-ci au cours des différents intervalles de temps.

4. Procédé selon l'une des revendications 1 à 3, dans lequel, du fait de l'action dépendante du temps, la distribution d'énergie (15), de préférence au moins un maximum de la distribution d'énergie, est déplacée à l'intérieur du substrat (9, 9', 9", 9"', 9$^{iv}$, 11), en particulier d'une plus grande à une plus faible profondeur et/ou le long de la trajectoire du foyer (17, 17', 17", 17"', 17$^{iv}$) à l'intérieur du substrat (9, 9', 9", 9"', 9$^{iv}$, 11).

5. Procédé selon l'une des revendications précédentes, dans lequel ledit au moins un masque de phase est un masque de phase (5, 5', 5", 5"', 5$^{iv}$) présentant une distribution de phase cubique ou une distribution de phase d'ordre supérieur, en particulier impair, et/ou le masque de phase (5, 5', 5", 5"', 5$^{iv}$) est agencé sur le trajet de faisceau du faisceau laser (3, 3', 3", 3"', 3$^{iv}$) en amont du substrat (9, 9', 9", 9"', 9$^{iv}$, 11), et en particulier, le faisceau laser (3, 3', 3", 3"', 3$^{iv}$), de préférence le centre de gravité de la section transversale du faisceau situé dans le plan du masque de phase (5, 5', 5", 5"', 5$^{iv}$), présente un point d'incidence sur le masque de phase (5, 5', 5", 5"', 5$^{iv}$).

6. Procédé selon l'une des revendications précédentes, dans lequel la formation du foyer linéaire comprend le fait que la position du sommet du foyer linéaire incurvé est ajustée le long d'une plage de profondeur du substrat (9, 9', 9", 9"', 9$^{iv}$, 11) et que la position du sommet du foyer linéaire est ajustée en une position médiane le long de la plage de profondeur ($\Delta z$, $\Delta z_1$, $\Delta z_2$) du substrat (9, 9', 9", 9"', 9$^{iv}$, 11).

7. Procédé selon l'une des revendications précédentes, dans lequel le contrôle de la distribution d'énergie (15) à l'intérieur du substrat (9, 9', 9", 9"', 9$^{iv}$, 11) comprend en outre l'ajustement de l'énergie d'impulsion, de la durée d'impulsion, du nombre d'impulsions dans le train d'impulsions, de la distribution d'énergie (15) dans le train d'impulsions et/ou de la longueur d'onde laser.

8. Procédé selon l'une des revendications précédentes, dans lequel l'action sur le faisceau laser (3, 3', 3", 3"', 3$^{iv}$) au moyen d'au moins ledit au moins un masque de phase (5, 5', 5", 5"', 5$^{iv}$) comprend le fait que le faisceau laser (3, 3', 3", 3"', 3$^{iv}$) est incident de manière décalée par rapport au point central du masque de phase (29', 29", 29"'), le point central étant l'endroit du masque de phase où un faisceau laser (3, 3', 3", 3"', 3$^{iv}$) incident sur le masque de phase (5, 5', 5", 5"', 5$^{iv}$) avec un diamètre tendant vers zéro est influencé par le point de col de la distribution de phase appliquée sur le masque de phase, et le décalage (27', 27", 27"', 27$^{iv}$) se produisant de préférence à l'intérieur du plan miroir de la distribution de phase.

9. Procédé selon la revendication 8, dans lequel

   (i) le décalage (27', 27", 27"', 27$^{iv}$) est ajusté

      (a) par un déplacement du masque de phase (5, 5', 5", 5"', 5$^{iv}$) par rapport au faisceau laser (3, 3', 3", 3"', 3$^{iv}$) ;

(b) par au moins une lame à faces parallèles (31''') tournée, en particulier constituée d'un matériau de verre et/ou d'un matériau optique, de préférence transparent à la longueur d'onde laser ;

(c) par au moins deux prismes agencés l'un derrière l'autre sur le trajet de faisceau, les prismes présentant de préférence des angles de prisme égaux ;

et/ou

(d) par une translation, en particulier à l'intérieur du trajet de faisceau et/ou parallèlement à la direction du rayon incident, d'un miroir de renvoi déviant le faisceau laser ;

et/ou

(ii) le décalage (27', 27'', 27''', 27$^{iv}$) est ajusté par déviation du faisceau laser (3, 3', 3'', 3''', 3$^{iv}$) au moyen d'au moins un premier moyen, de telle sorte que le vecteur de direction du rayon incident sur le masque de phase (5, 5', 5'', 5''', 5$^{iv}$) forme un angle avec le vecteur de direction de l'axe central du masque de phase (5, 5', 5'', 5''', 5$^{iv}$).

10. Procédé selon la revendication 9, dans lequel la déviation est ajustée au moyen du premier moyen qui comprend :

(a) au moins un prisme monté rotatif ;
(b) au moins un miroir monté rotatif ;
(c) au moins un scanner polygonal ou galvo ;
(d) au moins un modulateur acousto-optique ;
(e) au moins un modulateur spatial de lumière à cristaux liquides sur silicium ;
et/ou
(f) au moins un composant à miroir micro-électronique.

11. Procédé selon l'une des revendications précédentes, dans lequel la distribution d'intensité du faisceau laser (3, 3', 3'', 3''', 3$^{iv}$) sur le masque de phase (5, 5', 5'', 5''', 5$^{iv}$) est modifiée, de préférence déplacée spatialement sur celle-ci, à l'endroit de l'incidence du rayon sur le masque de phase (5, 5', 5'', 5''', 5$^{iv}$).

12. Procédé selon l'une des revendications précédentes, dans lequel deux foyers linéaires ou plus de deux faisceaux laser (3, 3', 3'', 3''', 3$^{iv}$) ou plus sont formés de manière correspondante à l'intérieur de la même zone dans le substrat (13), de préférence au moins en partie en parallèle et/ou au moins en partie séquentiellement dans le temps, et la distribution d'énergie (15) introduite par eux dans le substrat (9, 9', 9'', 9''', 9$^{iv}$, 11) est respectivement contrôlée de manière correspondante.

13. Procédé selon la revendication 6, dans lequel (a) les distributions d'énergie (15) introduites par les foyers linéaires individuels sont différentes en ce qui concerne la position et/ou la forme, les maxima des distributions d'énergie individuelles se situant de préférence à des positions différentes à l'intérieur du substrat (9, 9', 9'', 9''', 9$^{iv}$, 11), et/ou (b) les trajectoires (17, 17', 17'', 17''', 17$^{iv}$) des deux ou plusieurs foyers linéaires étant confondues.

14. Procédé selon l'une des revendications précédentes, dans lequel l'orientation d'au moins une partie du foyer linéaire à l'intérieur du substrat (9, 9', 9'', 9''', 9$^{iv}$, 11) par rapport à la direction de propagation principale du faisceau laser dans le substrat est ajustée par le contrôle de la distribution d'énergie (15) à l'intérieur du substrat (9, 9', 9'', 9''', 9$^{iv}$, 11) et en outre par l'ajustement de la position du foyer dans le matériau du substrat, la modification de la position du foyer s'effectuant de préférence par une modification de la distance (D, D', D'', D''', D$^{iv}$) entre une optique de focalisation (7, 7', 7'', 7''', 7$^{iv}$) et le substrat et/ou l'épaisseur du substrat (9, 9', 9'', 9''', 9$^{iv}$, 11) étant inférieure à la moitié de la longueur potentiellement admissible du foyer linéaire dans le sens de l'épaisseur du substrat (9, 9', 9'', 9''', 9$^{iv}$, 11) pour une configuration optique donnée.

15. Procédé selon l'une des revendications précédentes, dans lequel, au moyen de la distribution d'énergie (15) introduite par au moins une partie du foyer linéaire, (a) le substrat (9, 9', 9'', 9''', 9$^{iv}$, 11) est modifié au moins en partie quant à une propriété du matériau telle que sa densité, son indice de réfraction, ses valeurs de contrainte et/ou son taux de gravure, (b) des microfissures sont générées au moins par zones dans le matériau du substrat et/ou (c) au moins par zones, le matériau est enlevé et/ou déplacé du substrat (9, 9', 9'', 9''', 9$^{iv}$, 11).

16. Procédé selon l'une des revendications précédentes, dans lequel les zones modifiées à l'intérieur du substrat (9, 9', 9'', 9''', 9$^{iv}$, 11) sont ouvertes par génération d'une contrainte mécanique et/ou thermique et/ou par un procédé de gravure, en particulier pour générer un trou traversant et/ou un trou borgne à l'intérieur du matériau du substrat, et/ou

dans lequel des modifications s'étendant le long d'un contour fermé et/ou s'étendant d'un côté du substrat à un autre côté du substrat sont ouvertes par des processus mécaniques, thermiques et/ou chimiques, en particulier pour générer un contour intérieur ou extérieur avec une surface latérale conformée.

Fig. 1

Fig. 2

Fig. 3

Fig. 4

Fig. 5

Fig. 6

Fig. 7

Fig. 8

Fig. 9a

Fig. 9b

Fig. 9c

Fig. 9d

Fig. 10a                    Fig. 10b                    Fig. 10c

200 µm

Fig. 11

Fig. 12

Fig. 13a

Fig. 13b

Fig. 13c

Fig. 14a

Fig. 14b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10010971 B1
- US 10882143 B2
- US 10661384 B2
- US 2020254567 A1
- US 2020361037 A1

**In der Beschreibung aufgeführte Nicht-Patentliteratur**

- **VERÖFFENTLICHTUNG FROEHLY, L.** ; **COURVOISIER, F.** ; **MATHIS, A.** ; **JACQUOT, M.** ; **FURFARO, L.** ; **GIUST, R.** ; **DUDLEY, J. M.** Arbitrary accelerating micron-scale caustic beams in two and three dimensions. *Optics express*, 2011, vol. 19 (17), 16455-16465